# EUROPEAN PATENT SPECIFICATION

(11) **EP 4 053 183 B1**
(45) Date of publication and mention of the grant of the patent: **10.12.2025**
(21) Application number: 22157387.6
(22) Date of filing: 18.02.2022
(51) Int. Cl.: C08G 18/12, C08G 18/28, C08G 18/38, C08G 18/48, C08G 18/75, C08L 75/04, C08L 75/14, C09D 175/04, C09D 175/14, C08G 18/66

(54) **SILICONE POLYURETHANE, STRETCHABLE FILM, AND METHOD FOR FORMING THE STRETCHABLE FILM**
SILIKON-POLYURETHAN, DEHNBARE FOLIE UND VERFAHREN ZUR HERSTELLUNG DER DEHNBAREN FOLIE
SILICONE-POLYURÉTHANE, FILM ÉTIRABLE ET PROCÉDÉ DE FORMATION DU FILM ÉTIRABLE

(30) Priority: 02.03.2021 JP 2021032352
(43) Date of publication of application: 07.09.2022
(73) Proprietor: Shin-Etsu Chemical Co., Ltd., Tokyo 100-0005 (JP)
(72) Inventor: Hatakeyama, Jun, Niigata (JP); Ikeda, Joe, Tokyo 100-0005 (JP)
(74) Representative: Sonnenhauser, Thomas Martin

(56) References cited:
- EP-A1- 3 674 337
- WO-A1-2008/097225
- WO-A1-2008/153883
- WO-A1-2018/201428
- WO-A1-2022/183481
- WO-A1-95/00571

## Description

### TECHNICAL FIELD

The present invention relates to a silicone polyurethane, a stretchable film, and a method for forming the stretchable film.

### BACKGROUND ART

A recent growing popularity of Internet of Things (IoT) has accelerated the development of such major wearable devices as watches and glasses that allow for Internet access. Even in the fields of medicine and sports, wearable devices for constantly monitoring the user's physical state are increasingly demanded, and such technological development is expected to be further encouraged.

One typical wearable device is attached to the body of a user to constantly monitor the state of physical conditions. The wearable device normally includes a bio-electrode for detecting an electric signal transmitted from a body, wires for sending the electric signal to a sensor, a semiconductor chip serving as a sensor, and a battery, as well as an adhesive pad to be attached to the skin. Patent Document 1 describes detailed structures of a bio-electrode, a wiring part surrounding the bio-electrode, and an adhesive pad. The wearable device disclosed in Patent Document 1 includes a bio-electrode, a silicone-based adhesive film disposed around the bio-electrode, a sensor device, and a meandering-shaped stretchable silver wiring part coated with a stretchable urethane film between the bio-electrode and the sensor device, which are connected by the wiring part.

A urethane film has high stretchability and strength, and excellent mechanical properties as a coating film of a stretchable wiring part. Unfortunately, the hydrolysis inherent in the urethane film lowers its stretchability and strength. Meanwhile, the silicone film has no such hydrolytic nature, but the strength inherently remains low.

Hence, the use of silicone urethane polymers, whose main chain has both a urethane bond and a siloxane bond, has been examined. Cured products of such polymers are characterized by higher strength than single silicone and less hydrolytic nature than single polyurethane. The polymer cured products unfortunately fail to achieve the strength equivalent to single polyurethane and the water repellency equivalent to single silicone, and the strength and water repellency are in-betweens of those inherent in silicone and polyurethane.

Silicone urethanes having urethane in the main chain and silicone as a side chain are proposed (Patent Documents 2, 3). In such cases, the main chain is composed of a urethane with high stretchability and high strength and is provided with a silicone chain with high water repellency as a side chain, so that the strength is higher than that of a silicone urethane having a silicone chain in the main chain. Nevertheless, since the silicone side chain is linear, the strength is lowered due to the influence of the low strength of the silicone. Hence, there has been proposed a silicone urethane having urethane in the main chain provided with a branched short silicone chain as a side chain (Patent Document 4). This material is designed to prevent the strength from lowering, and achieves such properties of high water repellency owing to the silicone. Furthermore, silicone urethanes having urethane in the main chain provided with two branched short silicone chains as side chains (Patent Document 5, 6) enable further improvement of the water repellency while keeping high strength. Nonetheless, further strength improvement is demanded.

It is known that bismaleimide groups are coupled and crosslinked by light (Non Patent Document 1). A maleimide group has properties of high strength and high heat resistance because of the rigid ring structure. A high heat-resistant resin has been proposed by utilizing radical crosslinking reaction between a maleimide and a methacrylic compound (Patent Document 7).

### CITATION LIST

### PATENT LITERATURE

Patent Document 1: JP 2004-033468 A
Patent Document 2: JP 2583412 B
Patent Document 3: JP 2624060 B
Patent Document 4: JP 2018-123304 A
Patent Document 5: JP 2019-070109 A
Patent Document 6: JP 2019-073497 A
Patent Document 7: JP H09-241453 A
Patent Document 8: EP 3 674 337 A1
Patent Document 9: WO 95/00571 A1
Patent Document 10: WO 2022/183481 A1
Patent Document 11: WO 2018/201428 A1
Patent Document 12: WO 2008/097225 A1
Patent Document 13: WO 2008/153883 A1

### NON PATENT LITERATURE

Non Patent Document 1: Toagosei Kenkyu Nenpou (annual research report by TOAGOSEI CO., LTD.) "TREND", 2002, No. 5, p. 11

### SUMMARY OF INVENTION

### TECHNICAL PROBLEM

Due to these backgrounds, it has been demanded to develop: a silicone polyurethane which serves as a material for a stretchable film having high stretchability, excellent strength equivalent or superior to that of polyurethane, and excellent water repellency equivalent or superior to that of silicone; such a stretchable film; and a method for forming the stretchable film.

In view of the above circumstances, an object of the present invention is to provide: a silicone polyurethane which serves as a material for a stretchable film excellent in stretchability and strength and also in water repellency on the film surface; such a stretchable film; and a method for forming the stretchable film.

### SOLUTION TO PROBLEM

To achieve the object, the present invention provides a silicone polyurethane according to claim 1 which comprises a maleimide group at least at a terminal.

Such a silicone polyurethane serves as a material for a stretchable film having excellent stretchability and strength, and excellent water repellency on the film surface.

The silicone polyurethane may comprise a maleimide group at a terminal preferably comprises a silicone as a side chain.

Such a silicone polyurethane achieves higher strength.

The silicone polyurethane may comprise a maleimide group at a terminal comprises a structure shown by the following general formula (1), 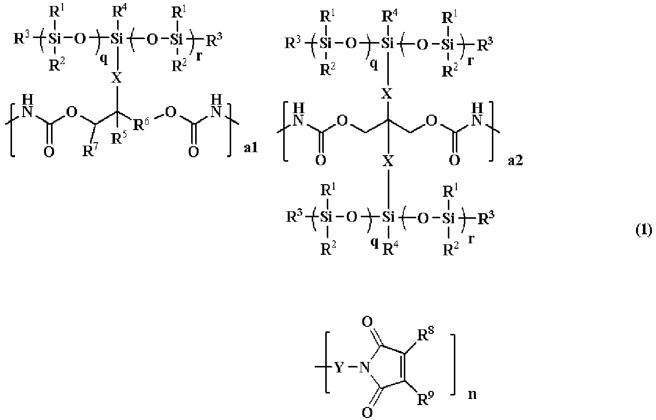 wherein R¹, R², and R³ are identical to or different from one another and each represent a linear, branched, or cyclic alkyl group having 1 to 6 carbon atoms, a phenyl group, or a 3,3,3-trifluoropropyl group; R⁴'s are identical to or different from one another and each represent a linear, branched, or cyclic alkyl group having 1 to 6 carbon atoms, a phenyl group, a 3,3,3-trifluoropropyl group, or a -(OSiR¹R²)ₛ-OSiR¹R²R³ group; "s" represents an integer in a range of 0 to 100; R⁵ represents a hydrogen atom, or a linear or branched alkyl group having 1 to 4 carbon atoms; R⁶ represents a single bond, a methylene group, or an ethylene group; R⁷ represents a hydrogen atom or a methyl group; R⁸ and R⁹ each represent a hydrogen atom, a linear, branched, or cyclic alkyl group having 1 to 6 carbon atoms, an alkenyl group having carbon 2 to 10 atoms, an alkynyl group having carbon 2 to 10 atoms, or an aryl group having 6 to 10 carbon atoms, and R⁸ and R⁹ are optionally bonded to each other to form a ring; X represents a linear or branched alkylene group having 3 to 7 carbon atoms and optionally containing an ether group; Y represents a linear, branched, or cyclic alkylene group having 1 to 40 carbon atoms and optionally having an ether bond, an ester bond, an amide bond, a urethane bond, a urea bond, or a phenylene group; "q" and "r" each represent an integer in a range of 0 to 20; a1 and a2 represent proportions of repeating units and satisfy ranges of 0≤a1≤1.0, 0≤a2≤1.0, and 0<a1+a2≤1.0; and "n" represents an integer of 1 to 4.

Such a silicone polyurethane can further enhance the effects of the present arrangement.

Moreover, the silicone polyurethane comprising a maleimide group at a terminal may comprise a soft segment selected from polyether, polyester, and polycarbonate.

When a polyether is used as the soft segment, the silicone polyurethane has higher stretchability, higher strength, and higher water repellency. When a polycarbonate is used as the soft segment, the high water repellency of the silicone polyurethane resin does not change, and the resulting stretchability is lower than when a polyether is used, but the strength is enhanced. Meanwhile, a polyester soft segment brings about high water repellency and intermediate mechanical properties between those obtained from polyether and from polycarbonate.

The soft segment selected from polyether, polyester, and polycarbonate may be shown by the following general formula (2), 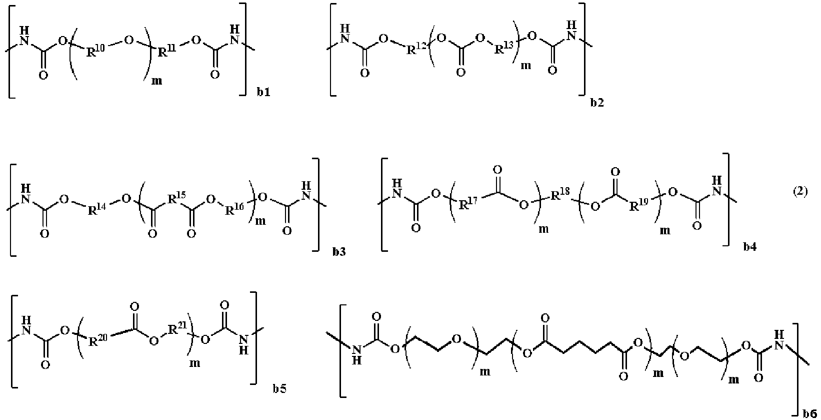 wherein R¹⁰ to R²¹ are identical to or different from one another and each represent a linear, branched, or cyclic alkylene group having 2 to 12 carbon atoms; "m"s are identical to or different from one another and each represent 1 to 200; and b1, b2, b3, b4, b5, and b6 represent proportions of repeating units and satisfy ranges of 0≤b1<1.0, 0≤b2<1.0, 0≤b3<1.0, 0≤b4<1.0, 0≤b5<1.0, 0≤b6<1.0, and 0<b1+b2+b3+b4+b5+b6<1.0.

Such a silicone polyurethane enables furthermore enhancement of the effects of the present arrangement.

The present invention also provides a stretchable film comprising a cured stretchable film material comprising the above-described silicone polyurethane.

Such a stretchable film has high stretchability, excellent strength equivalent or superior to that of polyurethane alone, and excellent water repellency equivalent or superior to that of silicone alone.

Moreover, in the present invention, the stretchable film preferably has a stretching property in a range of 20 to 1000% in a tensile test according to JIS K 6251.

The inventive stretchable film preferably has such a property.

The present invention further provides a method for forming a stretchable film, comprising steps of:
applying a stretchable film material comprising the above-described silicone polyurethane; and
curing the stretchable film material by heating and/or light irradiation.

Such a method for forming a stretchable film makes it possible to easily and efficiently form a stretchable film which has high stretchability, excellent strength equivalent or superior to that of polyurethane, and excellent water repellency equivalent or superior to that of silicone.

### ADVANTAGEOUS EFFECTS OF INVENTION

As described above, a stretchable film formed by using a cured silicone polyurethane having a maleimide group at a terminal according to the present invention is a stretchable film having high stretchability, strength equivalent or superior to that of single polyurethane, and high water repellency equivalent or superior to that of single silicone. Further, the stretchable film is a self-standing film that does not cause mutual sticking to such other films. Thus, the inventive cured stretchable film formed by using the silicone polyurethane having a maleimide group at a terminal is particularly suitably usable not only as a film for covering a sensor and a wiring part that connects a bio-electrode to the sensor, but also as a stretchable film capable of mounting all such bio-electrodes and sensor in a wearable device. In addition, the method for forming a stretchable film cured and formed by using the inventive silicone polyurethane having a maleimide group at a terminal makes it possible to easily form a stretchable film as described above.

### BRIEF DESCRIPTION OF DRAWINGS

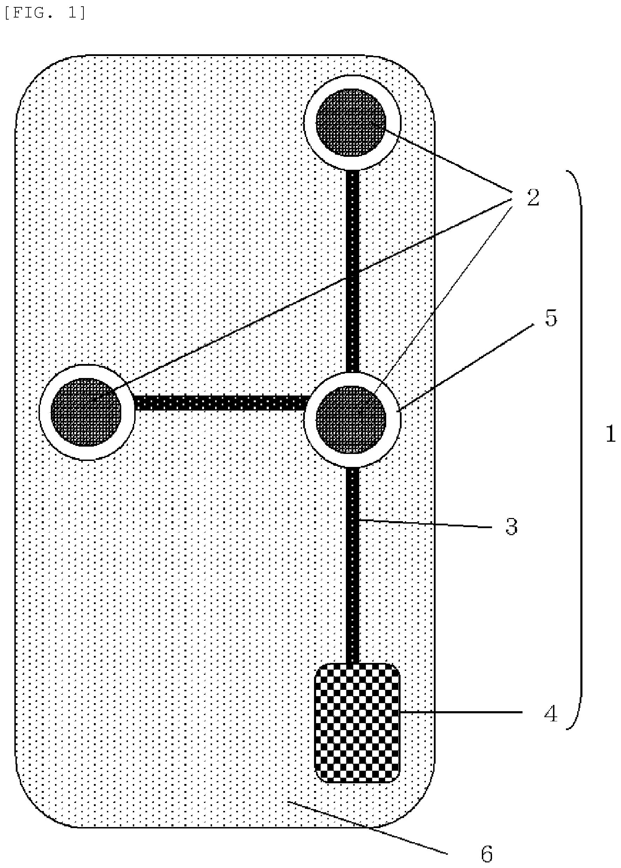

FIG. 1 is a schematic illustration showing a use example of a stretchable film cured and formed by using a silicone polyurethane having a maleimide group at a terminal according to the present invention.

### DESCRIPTION OF EMBODIMENTS

As described above, there have been demands for the development of: a silicone polyurethane which serves as a material for a stretchable film having stretchability, excellent strength, and also excellent water repellency; such a stretchable film; and a method for forming the stretchable film.

Polyurethane has sufficient stretchability and strength but has such drawbacks that the water repellency is low, and that the strength and stretchability are lowered by hydrolysis. Silicone has high water repellency but a drawback of low strength. Moreover, a cured product of silicone polyurethane having both a urethane bond and a siloxane bond in the main chain has a drawback of low strength in comparison with urethane, although the water repellency is excellent. A film based on polyurethane with branched short silicone side chain in a pendant form is excellent in stretchability and water repellency and has far higher strength than conventional silicone urethane, but higher strength property has been demanded. Under this circumstance, it has been desired to develop: a silicone polyurethane which serves as a material for a stretchable film having stretchability, strength equivalent or superior to that of polyurethane alone, and excellent water repellency equivalent or superior to that of silicone alone; such a stretchable film; and a method for forming the stretchable film.

Against this background, it has been found that when a sheet is prepared using a cured product of a silicone polyurethane having a maleimide group introduced to a terminal, a stretchable film is obtained which has stretchability and excellent strength water repellency. The stretchable film is particularly suitable as a stretchable substrate film to form a stretchable wiring in a wearable device, and as a film to protect a device. These findings have led to the completion of the present invention.

Specifically, the present invention is a silicone polyurethane comprising a maleimide group at least at a terminal.

Hereinafter, the present invention will be described in detail. However, the present invention is not limited thereto.

### <Stretchable Film>

A stretchable film according to the present invention is made of a cured product of a stretchable film material containing a silicone polyurethane resin having a maleimide group introduced at least at a terminal.

### <Silicone Polyurethane having Maleimide Group at Terminal>

The inventive silicone polyurethane (resin) having a maleimide group at a terminal is not particularly limited, and preferably has a silicone as a side chain, for example. A silicone-pendant type polyurethane resin having a structure shown by the following general formula (1) is further preferable. 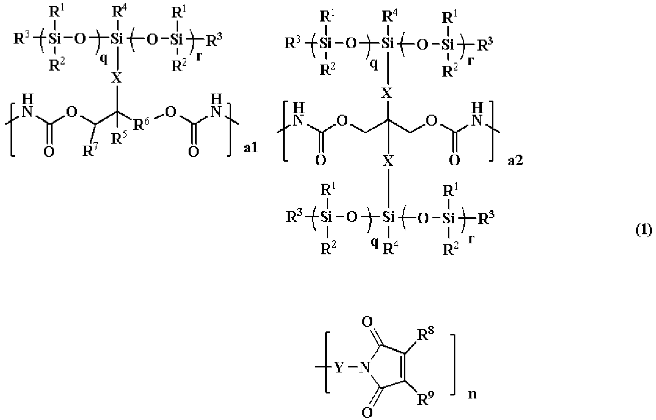 In the formula, R¹, R², and R³ are identical to or different from one another and each represent a linear, branched, or cyclic alkyl group having 1 to 6 carbon atoms, a phenyl group, or a 3,3,3-trifluoropropyl group. R⁴'s are identical to or different from one another and each represent a linear, branched, or cyclic alkyl group having 1 to 6 carbon atoms, a phenyl group, a 3,3,3-trifluoropropyl group, or a -(OSiR¹R²)ₛ-OSiR¹R²R³ group. "s" represents an integer in a range of 0 to 100. R⁵ represents a hydrogen atom, or a linear or branched alkyl group having 1 to 4 carbon atoms. R⁶ represents a single bond, a methylene group, or an ethylene group. R⁷ represents a hydrogen atom or a methyl group. R⁸ and R⁹ each represent a hydrogen atom, a linear, branched, or cyclic alkyl group having 1 to 6 carbon atoms, an alkenyl group having carbon 2 to 10 atoms, an alkynyl group having carbon 2 to 10 atoms, or an aryl group having 6 to 10 carbon atoms. R⁸ and R⁹ are optionally bonded to each other to form a ring. X represents a linear or branched alkylene group having 3 to 7 carbon atoms and optionally containing an ether group. Y represents a linear, branched, or cyclic alkylene group having 1 to 40 carbon atoms and optionally having an ether bond, an ester bond, an amide bond, a urethane bond, a urea bond, or a phenylene group. "q" and "r" each represent an integer in a range of 0 to 20. a1 and a2 represent proportions of repeating units and satisfy ranges of 0≤a1≤1.0, 0≤a2≤1.0, and 0<a1+a2≤1.0. "n" represents an integer of 1 to 4.

Such a silicone pendant polyurethane has polyurethane throughout the main chain and accordingly has high strength and high stretchability. An appropriate amount, for example, a small amount, of pendant silicone chain(s) brings high water repellency. These enable properties of high strength, high stretchability, and high water repellency. Thus, the silicone pendant polyurethane is preferable as the silicone polyurethane resin used in the present invention.

Further, the maleimide group at a polymer terminal is bonded and crosslinked in the curing. Thus, the resulting film has high strength equivalent or superior to that of urethane alone.

In this event, the silicone polyurethane having a maleimide group at a terminal preferably has a soft segment selected from polyether, polyester, and polycarbonate, and further preferably has a soft segment selected from polyether, polyester, and polycarbonate shown by the following general formula (2). 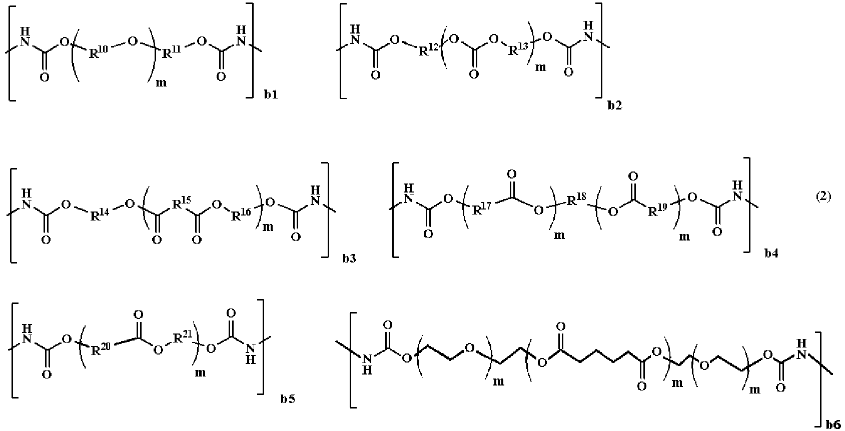 In the formula, R¹⁰ to R²¹ are identical to or different from one another and each represent a linear, branched, or cyclic alkylene group having 2 to 12 carbon atoms. "m"s are identical to or different from one another and each represent 1 to 200. b1, b2, b3, b4, b5, and b6 represent proportions of repeating units and satisfy ranges of 0≤b1<1.0, 0≤b2<1.0, 0≤b3<1.0, 0≤b4<1.0, 0≤b5<1.0, 0≤b6<1.0, and 0<b1+b2+b3+b4+b5+b6<1.0.

Each of R¹⁰ to R²¹ may be identical to or different from the others, and represents a linear, branched, or cyclic alkylene group having 2 to 12 carbon atoms. Specific examples thereof include an ethylene group, an n-propylene group, an n-butylene group, an n-pentylene group, an n-hexylene group, a cyclohexylene group, a cyclohexylene dimethyl group, an adamantylene group, an adamantylene dimethyl group, an isobutylene group, and a dimethylpentene group.

Each "m" may be identical to or different from the others, and represents 1 to 200.

The silicone polyurethane is particularly preferably the silicone-pendant type polyurethane resin as described above. Specifically, the silicone polyurethane is preferably shown by the following general formula (3). 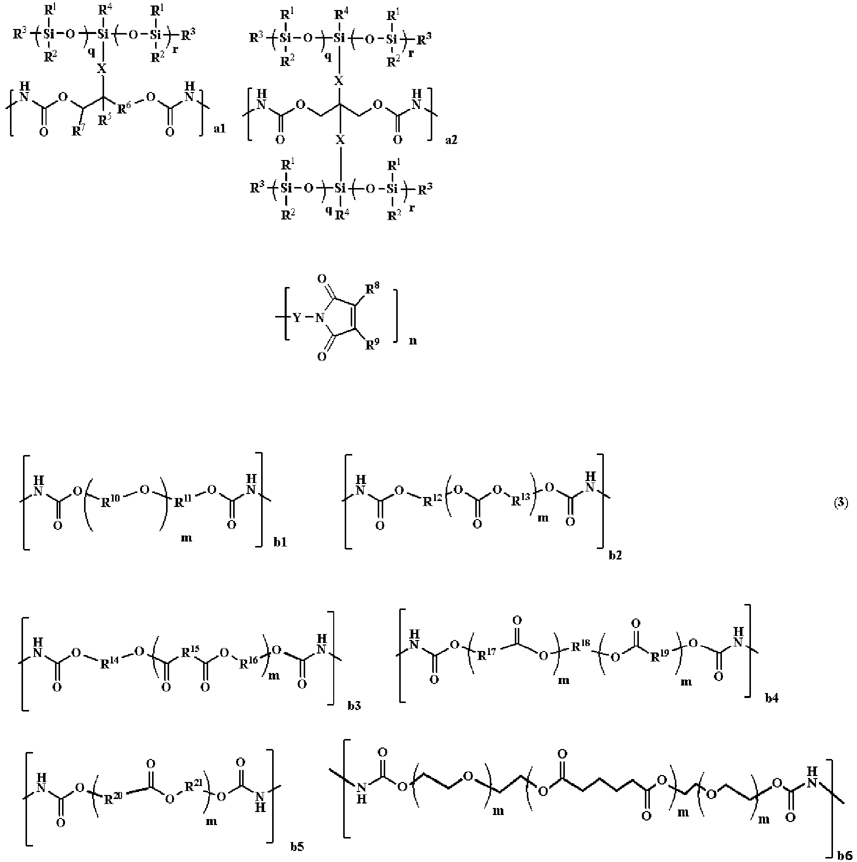 In the formula, R¹ to R²¹, X, Y, "m", "n", "q", "r", a1, a2, b1, b2, b3, b4, b5, and b6 are as defined above.

To the silicone polyurethane used in the present invention, a soft segment can be introduced. When a polyether is used as the soft segment, the silicone polyurethane resin has higher stretchability, higher strength, and higher water repellency. When a polycarbonate as shown above is used as the soft segment, the high water repellency of the silicone polyurethane resin does not change, and the resulting stretchability is lower than that when a polyether is used, but the strength is enhanced. Meanwhile, a polyester soft segment brings high water repellency and intermediate mechanical properties between those obtained from polyether and from polycarbonate. The soft segments may have structures as shown in the general formulae (2) and (3).

The structure (repeating unit) represented by a1 in the general formula (1) or (3) can be formed using a diol compound. Examples of the diol compound include compounds shown by the following general formula (a)-1'.

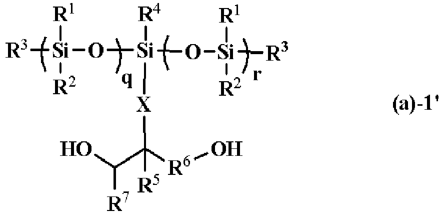

Each of R¹, R², and R³ may be identical to or different from the others, and represents a linear, branched, or cyclic alkyl group having 1 to 6 carbon atoms, a phenyl group, or a 3,3,3-trifluoropropyl group. Specific examples of R¹, R², and R³, which may be identical to or different from one another, include a methyl group, an ethyl group, an n-propyl group, an isopropyl group, an n-butyl group, an isobutyl group, a tert-butyl group, an n-pentyl group, a cyclopentyl group, an n-hexyl group, a cyclohexyl group, a phenyl group, and a 3,3,3-trifluoropropyl group.

R⁴ may be identical to or different from the others, and represents a linear, branched, or cyclic alkyl group having 1 to 6 carbon atoms, a phenyl group, a 3,3,3-trifluoropropyl group, or a -(OSiR¹R²)ₛ-OSiR¹R²R³ group. "s" represents an integer in a range of 0 to 100. Specific examples of R⁴ include a methyl group, an ethyl group, and a trimethylsiloxy group.

R⁵ represents a hydrogen atom, or a linear or branched alkyl group having 1 to 4 carbon atoms. Specific examples thereof include a methyl group, an ethyl group, an n-propyl group, and an n-butyl group.

R⁶ represents a single bond, a methylene group, or an ethylene group, preferably a methylene group or an ethylene group.

R⁷ represents a hydrogen atom or a methyl group, preferably a methyl group.

X represents a linear or branched alkylene group having 3 to 7 carbon atoms and optionally containing an ether group. Specific examples of X include a propylene group, a butylene group, and a propyl ether ethyl group.

"q" and "r" each represent an integer in a range of 0 to 20, preferably 1 to 4.

The diol compound having a short chain silicone pendant shown by the general formula (a)-1' can be obtained, for example, by reaction of a glycerin monoallyl ether and a short-chain siloxane compound having a SiH group in the presence of a platinum catalyst. Specific examples of the diol compound include, but are not limited to, the following.

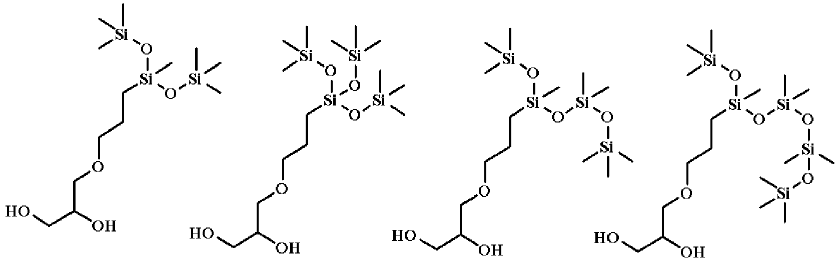

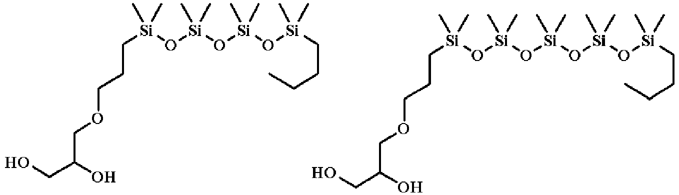

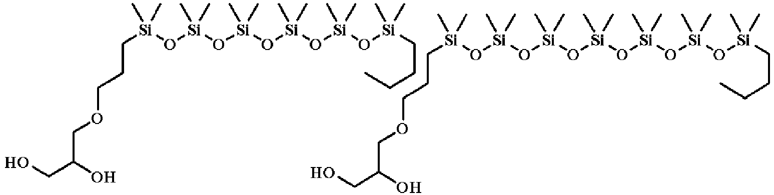

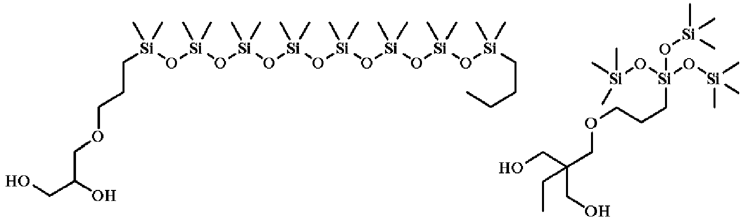

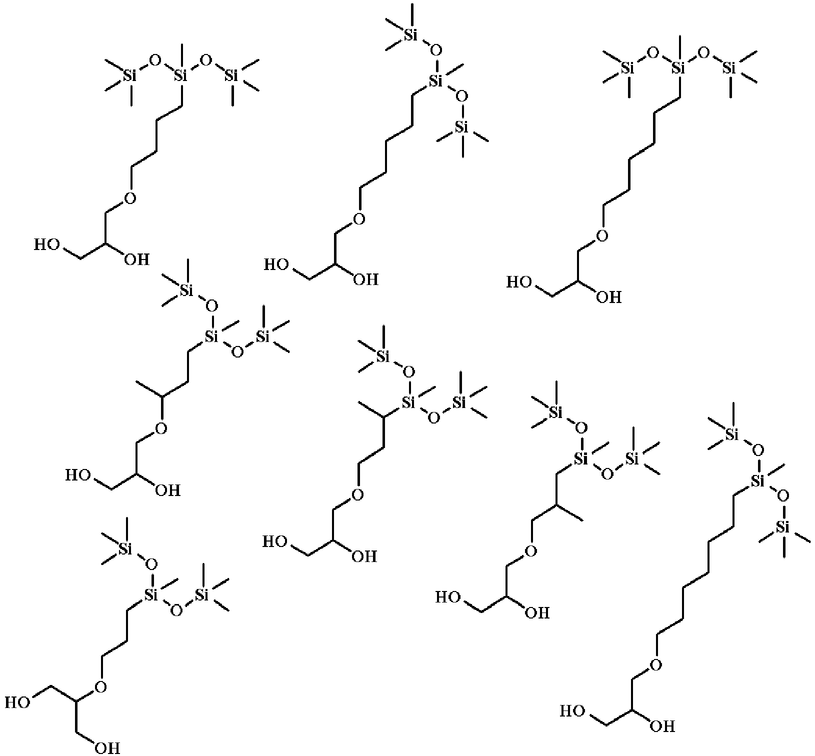

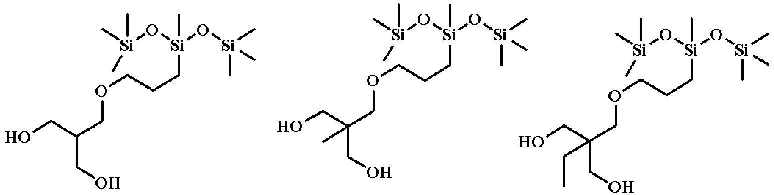

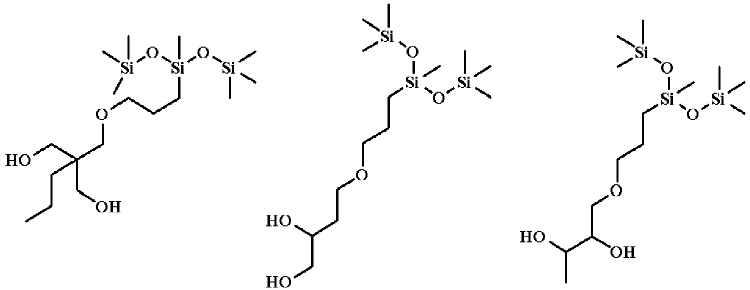

The structure (repeating unit) represented by a2 in the general formula (1) or (3) can be formed using a diol compound. Examples of the diol compound include compounds shown by the following general formula (a)-2'. 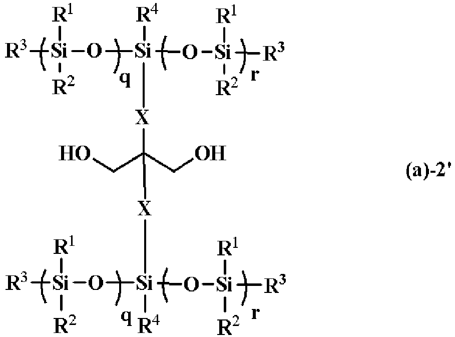 In the formula, R¹ to R⁴, X, "q", and "r" are as defined above.

The diol compound having short silicone chain pendants shown by the general formula (a)-2' can be obtained, for example, by reaction of a dihydroxy dialkenyl compound and a short-chain siloxane compound having a SiH group in the presence of a platinum catalyst. Specific examples of the diol compound include, but are not limited to, the following. 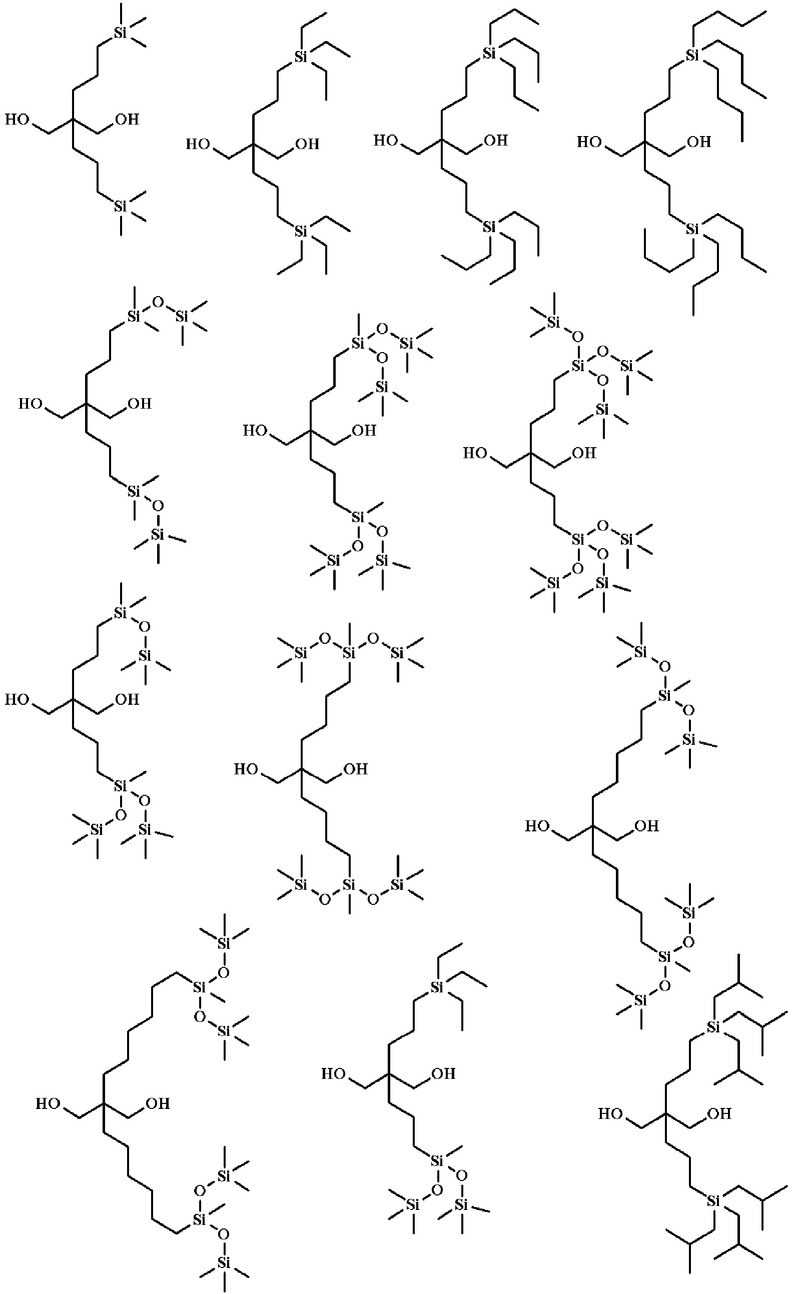 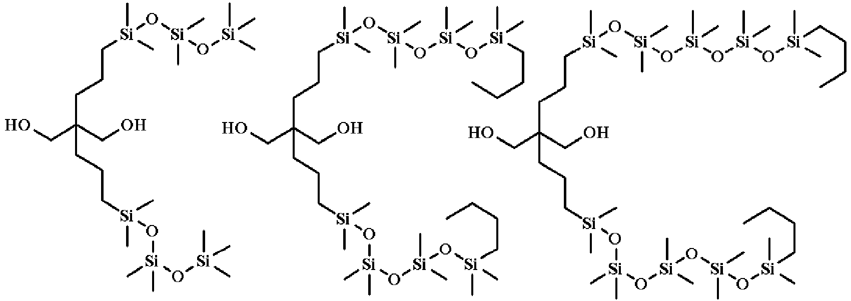 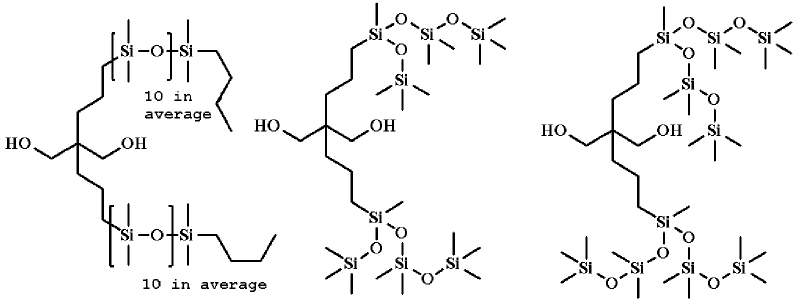 The numbers of the repeating units in the formula show average values. 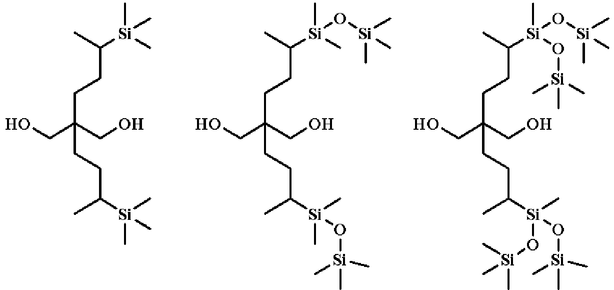 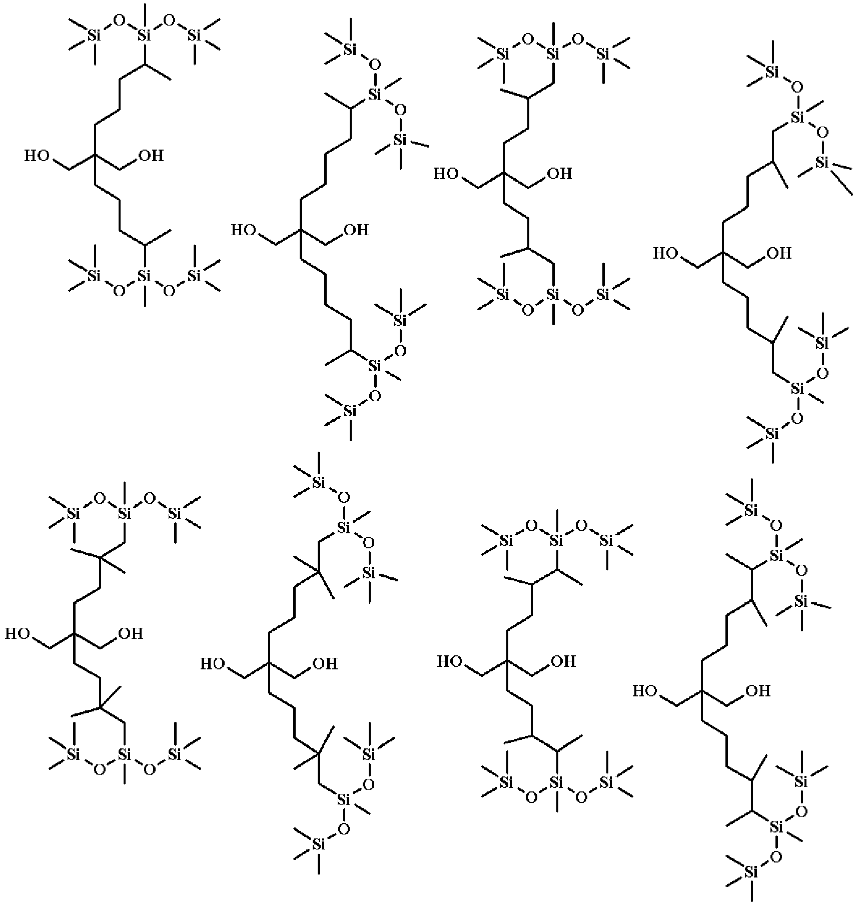 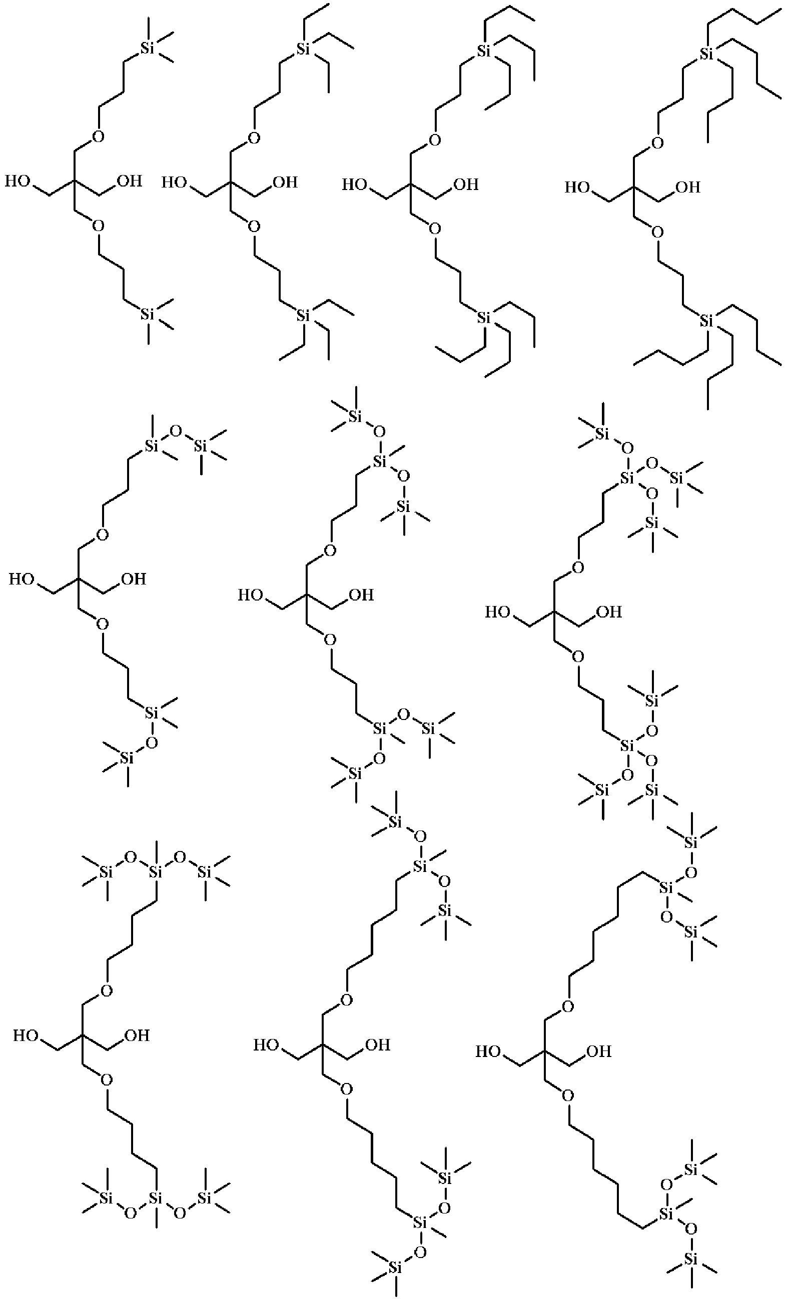 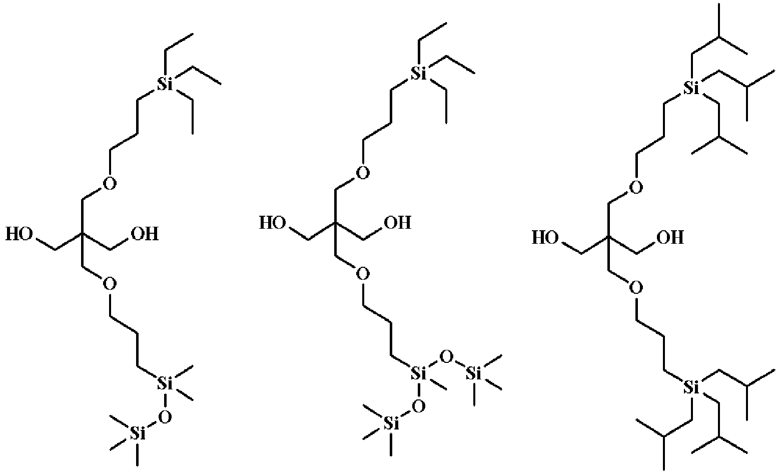 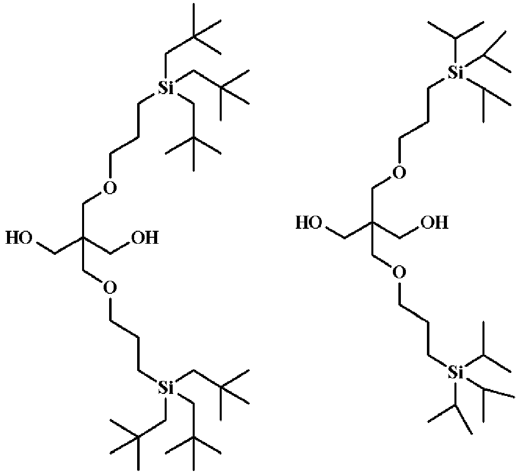 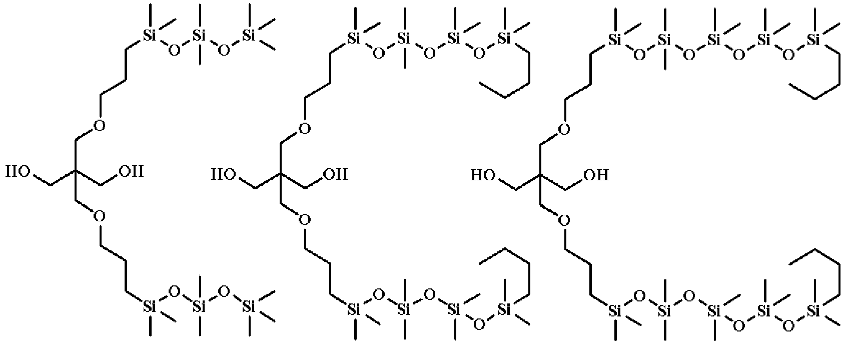 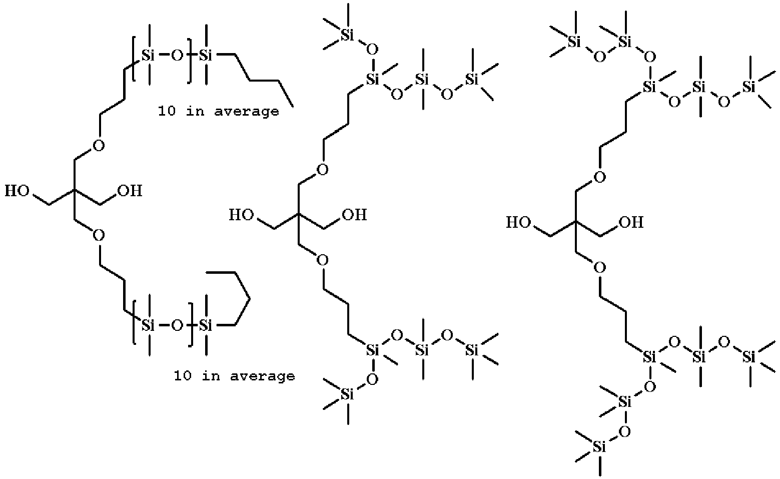 The numbers of the repeating units in the formula show average values.

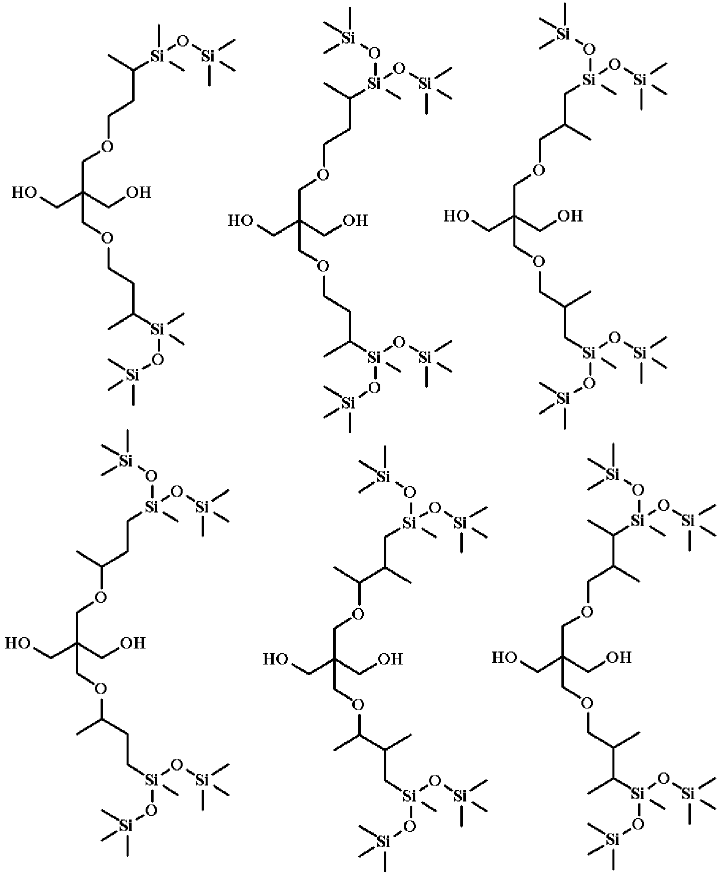

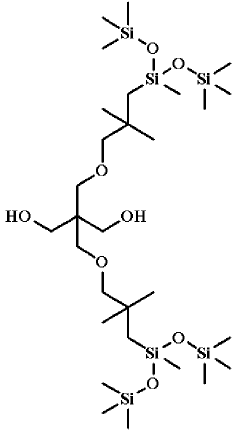

To obtain the polyether soft segment of the repeating unit b1 in the general formula (2) or (3), terminal-diol polyether compounds illustrated below can be used as the raw material.

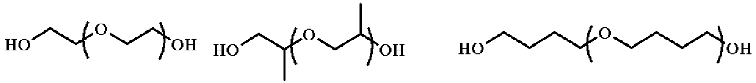

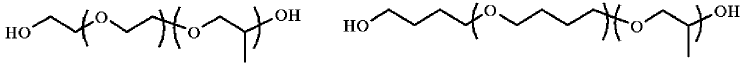

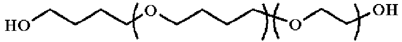

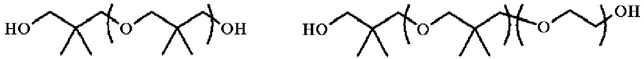

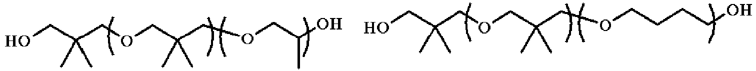

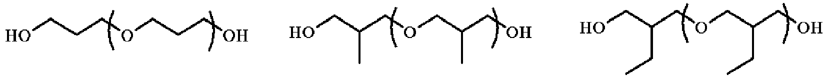

Here, the numbers of the parenthesized repeating units are 1 to 200.

To obtain the polycarbonate soft segment of the repeating unit b2 in the general formula (2) or (3), terminal-diol polycarbonate compounds illustrated below can be used as the raw material.

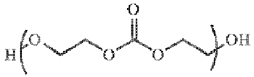

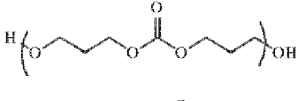

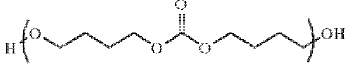

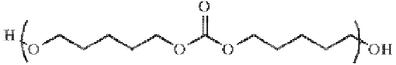

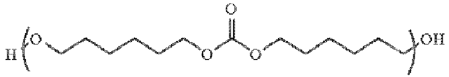

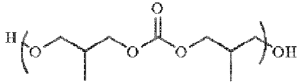

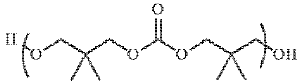

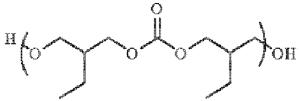

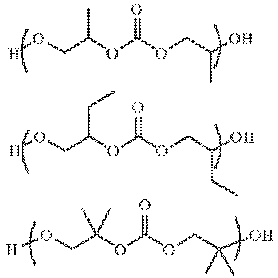

Here, the numbers of the parenthesized repeating units are 1 to 200.

To obtain the polyester soft segment of the repeating unit b3 in the general formula (2) or (3), terminal-diol polyester compounds illustrated below can be used as the raw material.

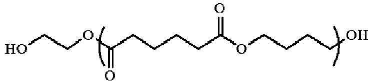

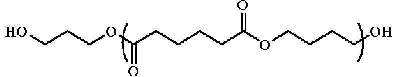

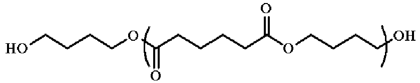

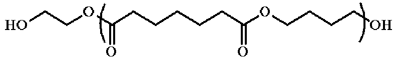

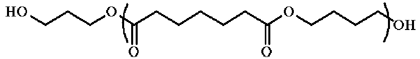

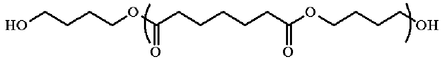

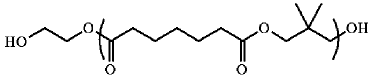

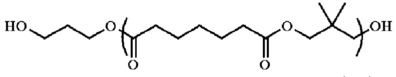

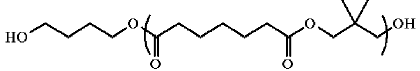

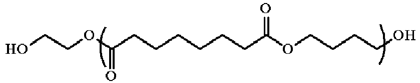

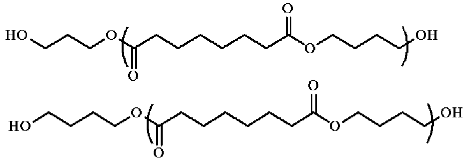

Here, the numbers of the parenthesized repeating units are 1 to 200.

To obtain the polyester soft segment of the repeating unit b4 in the general formula (2) or (3), terminal-diol polyester compounds illustrated below can be used as the raw material.

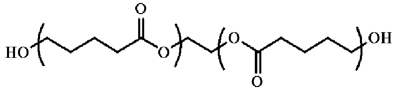

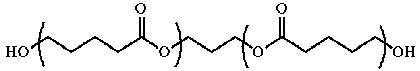

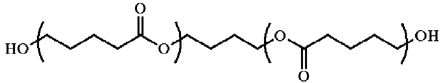

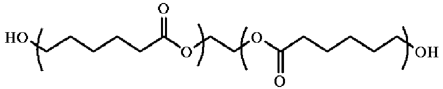

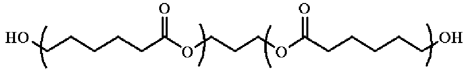

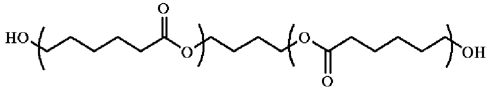

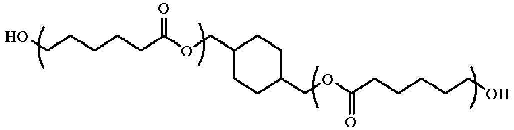

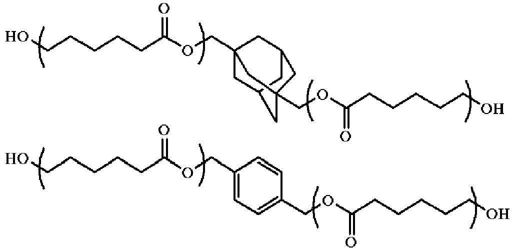

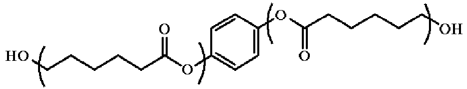

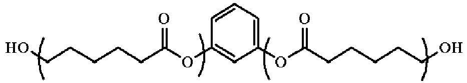

Here, the numbers of the parenthesized repeating units are 1 to 200.

To obtain the polyester soft segment of the repeating unit b5 in the general formula (2) or (3), terminal-diol polyester compounds illustrated below can be used as the raw material.

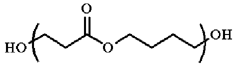

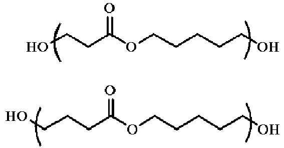

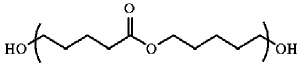

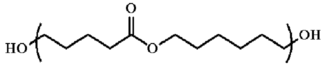

Here, the numbers of the parenthesized repeating units are 1 to 200.

To obtain the soft segment of the repeating unit b6 containing a combination of polyether and polyester in the general formula (2) or (3), a terminal-diol compound containing a combination of polyether and polyester as illustrated below can be used as the raw material.

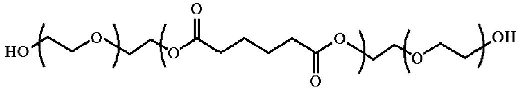

Here, the numbers of the parenthesized repeating units are 1 to 200.

A silicone pendant polyurethane resin which just has the structure(s) shown by a1 and/or a2 in the general formula (1) or (3) to be used in the inventive stretchable film can be formed through reaction between an isocyanate compound and a raw material including the diol compounds having a silicon-containing group(s) shown by the general formulae (a)-1' and (a)-2'. Further, to these, one or a combination of a polycarbonate compound, a polyether compound, and a polyester compound which have hydroxy groups at terminals may be added as a chain extender(s) for the reaction with the isocyanate compound to thereby form this silicone pendant polyurethane resin.

Specific examples of the isocyanate compound to be reacted with the diol compound(s) having a silicon-containing group(s) and with the polyether compound, the polycarbonate compound, and the polyester compound which have hydroxy groups at terminals include the following, but are not limited thereto. 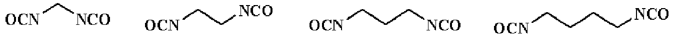 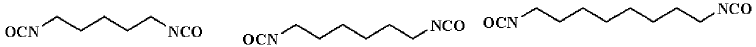 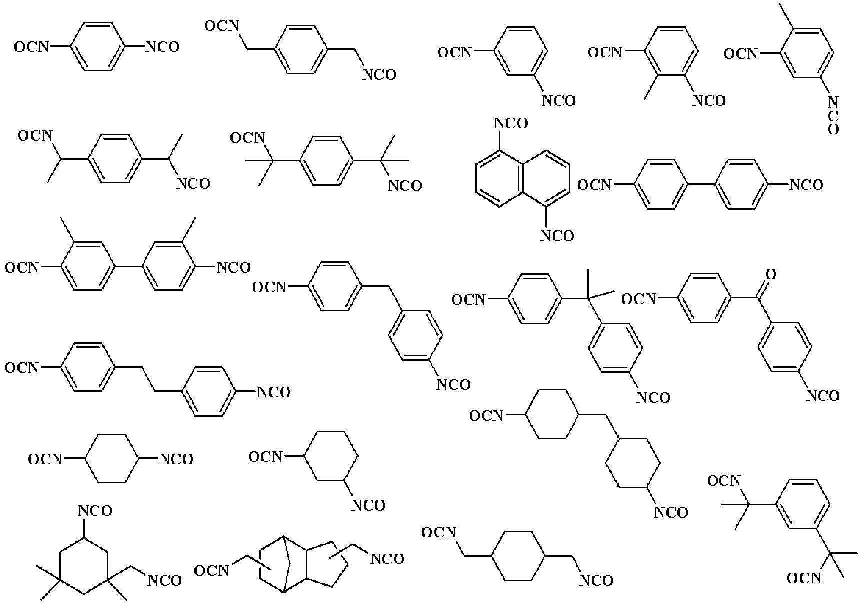 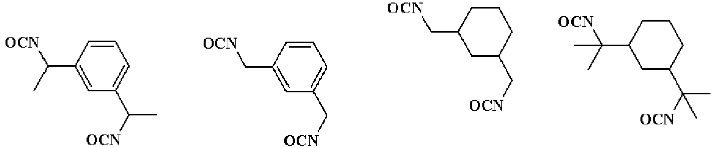 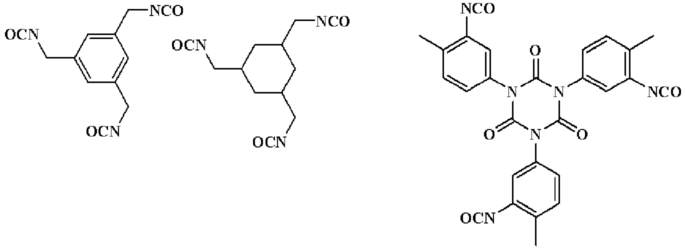 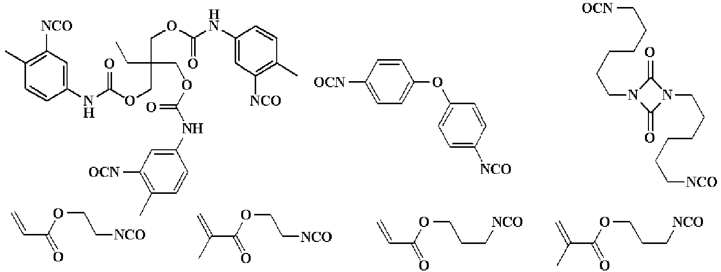 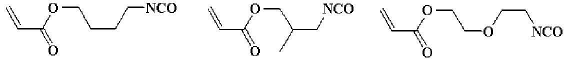 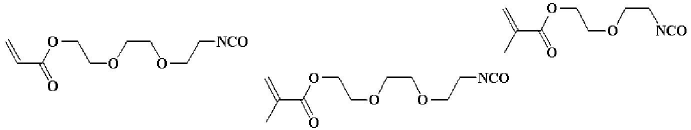 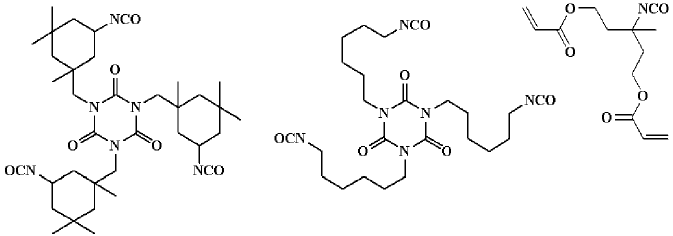 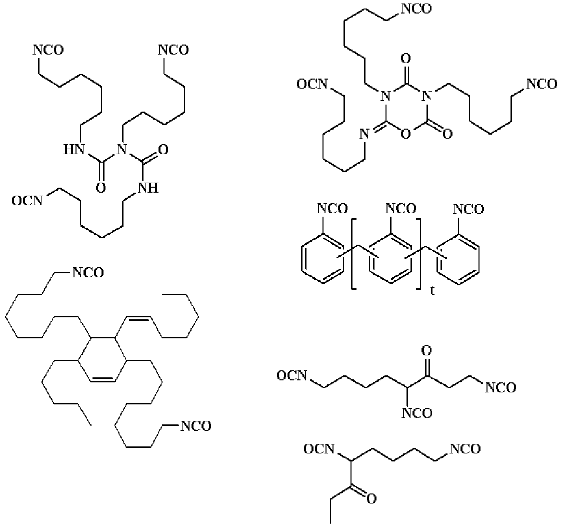 In the formulae, "t" represents an integer of 1 or more.

The inventive silicone polyurethane can have a maleimide group at a terminal of the silicone urethane by reacting the diol compound(s) and isocyanate compound as described above with a maleimide compound having a hydroxy group, a carboxyl group, an amino group, or an isocyanate group bonded thereto. Specific examples of the maleimide compound having a hydroxy group, a carboxyl group, an amino group, or an isocyanate group bonded thereto include the following, but are not limited thereto. The use of such a maleimide compound enables introduction of the maleimide structure in the general formulae (1), (3).

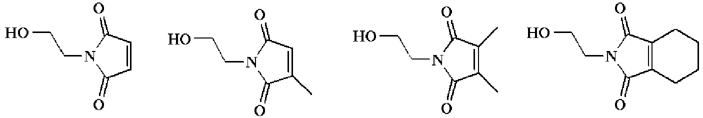

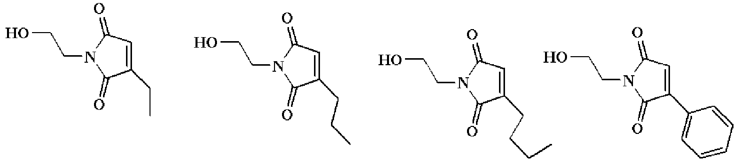

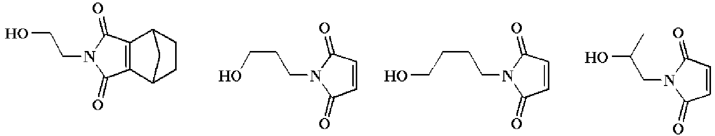

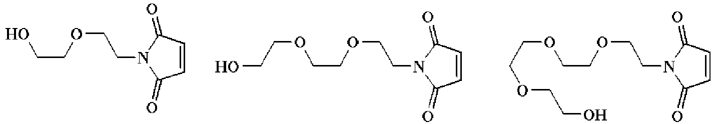

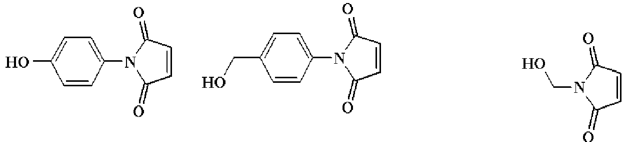

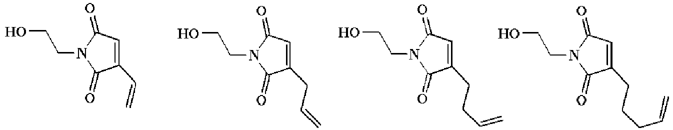

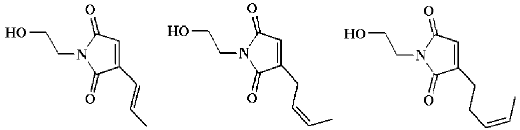

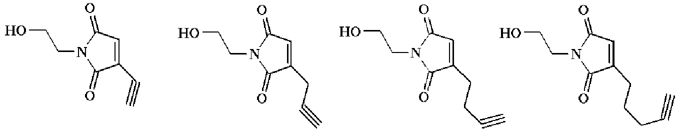

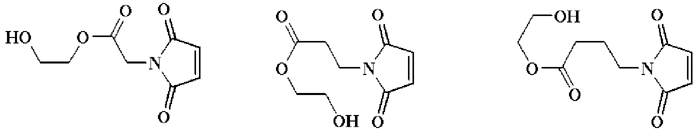

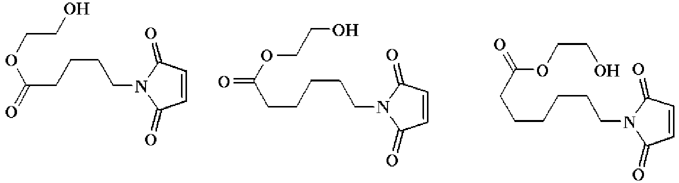

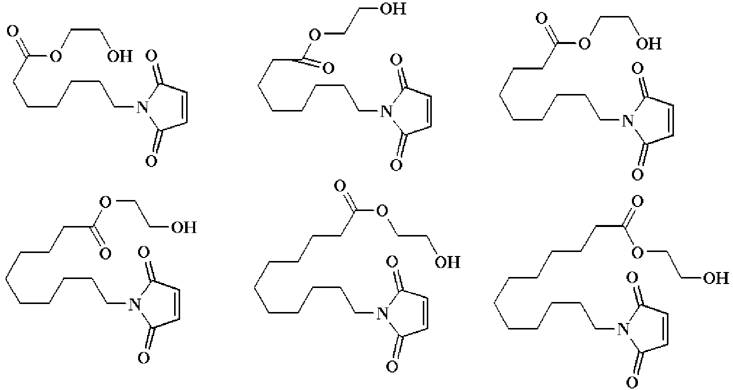

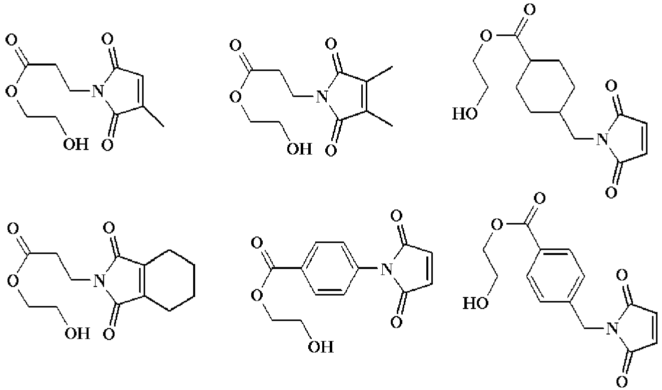

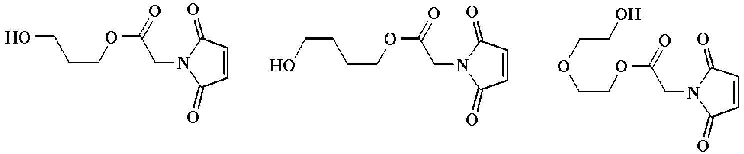

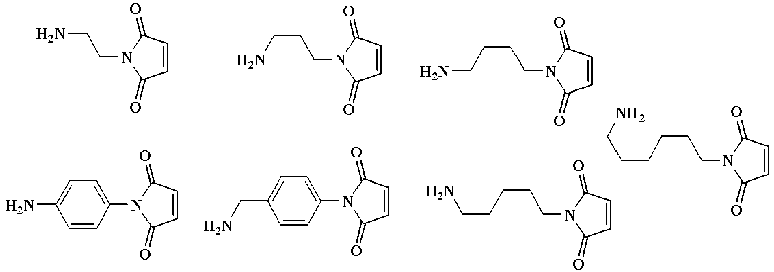

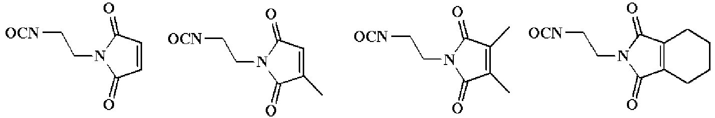

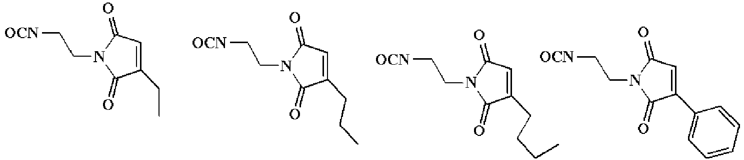

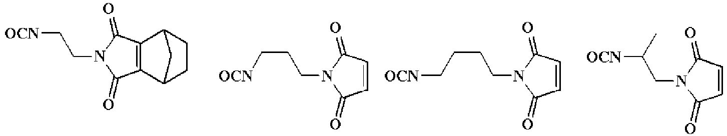

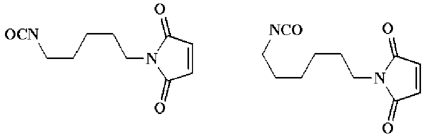

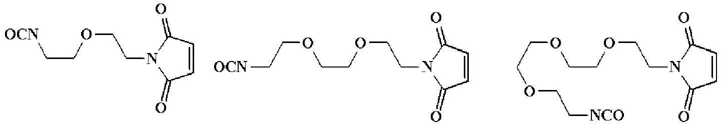

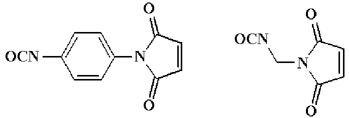

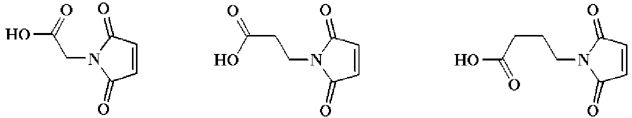

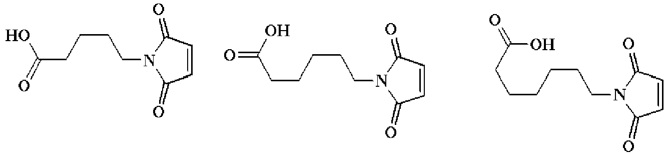

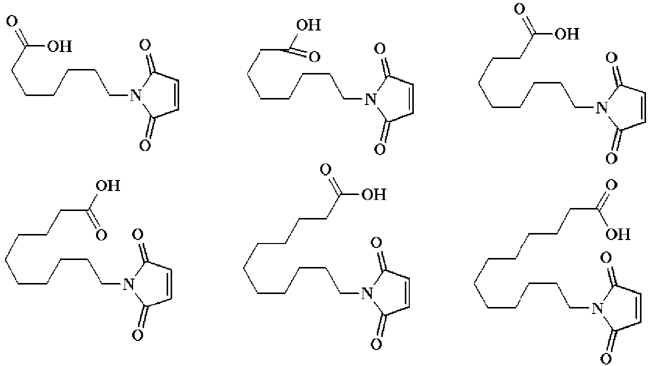

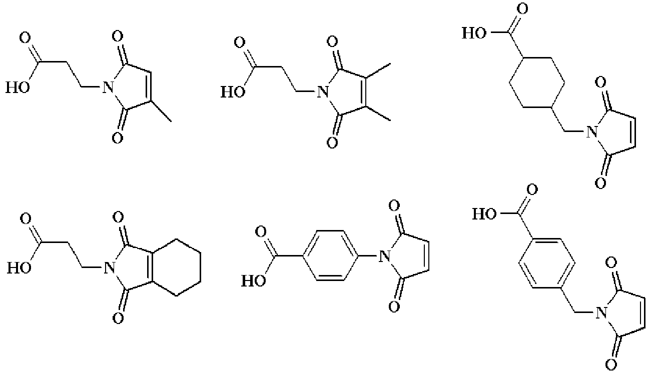

It is also possible to introduce maleimide at a terminal of the urethane polymer by forming an amino group at the polymer terminal using a diamine compound during the polymerization, and reacting this amino group with maleic anhydride.

The silicone polyurethane having a maleimide group at a terminal shown by the general formula (1) or (3) can be obtained by forming a urethane bond through reaction of particularly a compound having a maleimide group and an isocyanate group, among the above maleimide compounds, with the diol compound(s) having a silicon-containing group(s) shown by the general formula(e) (a)-1', (a)-2' and any of the polyether compound, the polycarbonate compound, and the polyester compound which have hydroxy groups at terminals. Besides, the silicone polyurethane having a maleimide group at a terminal shown by the general formula (1) or (3) can also be obtained through reaction of an isocyanate compound with a maleimide compound having a hydroxy group or a maleimide compound having an amino group to form a urethane bond or a urea bond, correspondingly. The silicone polyurethane having a maleimide group at a terminal can also be obtained by utilizing esterification of a maleimide compound having a carboxyl group with the diol compound(s) having a silicon-containing group(s) shown by the general formula(e) (a)-1', (a)-2' and any of the polyether compound, the polycarbonate compound, and the polyester compound which have hydroxy groups at terminals. In this case, when the maleimide compound having a carboxyl group reacts with isocyanate to form an amide bond while involving decarboxylation, so that the silicone polyurethane having a maleimide group at a terminal can be obtained.

The aforementioned isocyanate compounds have high reactivity with: the diol compounds having a silicon-containing group(s) shown by the general formulae (a)-1', (a)-2'; the polyether compound, the polycarbonate compound, and the polyester compound which have hydroxy groups at terminals; and the maleimide compounds having a hydroxy group or an amino group. Hence, the reaction is sometimes difficult to control. Additionally, the isocyanate compounds react with moisture in the air to inactivate the isocyanate groups during the storage in some cases, and hence have to be carefully stored, for example, with sufficient moisture-proofing. Accordingly, in order to prevent these phenomena, a compound having a blocked isocyanate group may be used in which the isocyanate group is protected with a substituent.

The blocked isocyanate group is a blocked group that is deprotected by heating to result in an isocyanate group. Specific examples thereof include isocyanate groups substituted with alcohol, phenol, thioalcohol, imine, ketimine, amine, lactam, pyrazole, oxime, β-diketone, etc.

A catalyst may be added to decrease the temperature for deprotecting the blocked isocyanate group. Known examples of this catalyst include organic tin, such as dibutyltin dilaurate; bismuth salts; and zinc carboxylate, such as zinc 2-ethylhexanoate and zinc acetate.

Particularly, JP 2012-152725 A shows that it is possible to decrease the temperature for deprotection reaction by including zinc carboxylate of α,β-unsaturated carboxylic acid as a blocked isocyanate dissociation catalyst.

Further, a compound having an amino group can also be added. When an isocyanate group reacts with an amino group, a urea bond is formed. The moiety of a urethane bond and a urea bond is called as a hard segment, and improves the strength through their hydrogen bonds. Thus, the strength is successfully improved by the addition of urea bonds not only by urethane bonds.

The silicone polyurethane resin used in the formation of the inventive stretchable film preferably has a weight-average molecular weight of 500 or more. The upper limit value of the weight-average molecular weight of the silicone polyurethane resin is preferably 500,000, or less. Such resins are favorably usable in the inventive stretchable film. Note that the value of the weight-average molecular weight (Mw) is expressed in terms of polystyrene determined by gel permeation chromatography (GPC).

The stretchable film material for forming the inventive stretchable film is characterized by containing the silicone polyurethane having a maleimide group at a terminal, and may be further mixed with a polyurethane or silicone polyurethane having a (meth) acrylate group at a terminal, or with a polyurethane having no silicone but having a maleimide group at a terminal. As to the mixing ratio in this event, the weight percent of the silicone polyurethane having a maleimide group at a terminal is at least 10% or more, preferably 20% or more, further preferably 30% or more. As described in aforementioned Non Patent Document 1, radicals are generated from the maleimide group by light irradiation, and crosslinking and polymerization of a (meth)acrylate group progresses. When the silicone polyurethane having a maleimide group is mixed with a silicone polyurethane having a (meth) acrylate group or a polyurethane having no silicone but having a maleimide group at a terminal, the stretchability and strength are well balanced.

Examples of the silicone polyurethane (meth) acrylate mixed in this case include polyurethanes having silicone introduced to the main chain or as a side chain. From the viewpoints of high strength and high stretchability, side chain silicone type as described in aforementioned Patent Documents 4, 5, and 6 is preferably usable.

### <Features of Stretchable Film>

The surface of the stretchable film may be flat, uneven, hollow, or fibrous. To allow sufficient skin perspiration after attachment to skin, the stretchable film is preferably hollow or fibrous. Like lotus leaf, super water repellent property can be exhibited by forming uneven pattern as described in JP 2020-105485 A.

Note that the inventive stretchable film preferably has a stretching property of 20 to 1000% in a tensile test stipulated according to JIS K 6251. Such a stretching property enables particularly favorable use as a substrate film for a stretchable wiring.

Additionally, the inventive stretchable film is preferably used as a film to be in contact with a stretchable electro-conductive wiring or a film for protecting a device. The inventive stretchable film can be particularly favorably usable for such usage.

The inventive stretchable film as described above has stretchability, superior strength to polyurethane, and hysteresis. The film surface has excellent water repellency equivalent to that of silicone.

### <Method for Forming Stretchable Film>

In addition, the present invention provides a method for forming a stretchable film, including steps of:
applying a stretchable film material containing a silicone polyurethane having a maleimide group at least at a terminal; and
curing the stretchable film material by heating and/or light irradiation.

The stretchable film material containing the silicone polyurethane is preferably a stretchable film material containing a silicone polyurethane resin having a maleimide group terminal and a structure shown by the following general formula (1). 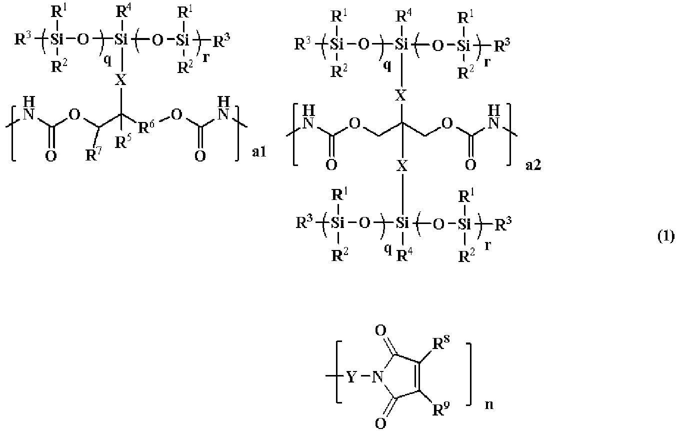 In the formula, each of R¹, R², and R³ may be identical to or different from the others, and represents a linear, branched, or cyclic alkyl group having 1 to 6 carbon atoms, a phenyl group, or a 3,3,3-trifluoropropyl group. Each R⁴ may be identical to or different from the others, and represents a linear, branched, or cyclic alkyl group having 1 to 6 carbon atoms, a phenyl group, a 3,3,3-trifluoropropyl group, or a -(OSiR¹R²)ₛ-OSiR¹R²R³ group. "s" represents an integer in a range of 0 to 100. R⁵ represents a hydrogen atom, or a linear or branched alkyl group having 1 to 4 carbon atoms. R⁶ represents a single bond, a methylene group, or an ethylene group. R⁷ represents a hydrogen atom or a methyl group. R⁸ and R⁹ each represent a hydrogen atom, a linear, branched, or cyclic alkyl group having 1 to 6 carbon atoms, an alkenyl group having carbon 2 to 10 atoms, an alkynyl group having carbon 2 to 10 atoms, or an aryl group having 6 to 10 carbon atoms. R⁸ and R⁹ may be bonded to each other to form a ring. X represents a linear or branched alkylene group having 3 to 7 carbon atoms and optionally containing an ether group. Y represents a linear, branched, or cyclic alkylene group having 1 to 40 carbon atoms and optionally having an ether bond, an ester bond, an amide bond, a urethane bond, a urea bond, or a phenylene group. "q" and "r" each represent an integer in a range of 0 to 20. a1 and a2 represent proportions of repeating units and satisfy ranges of 0≤a1≤1.0, 0≤a2≤1.0, and 0<a1+a2≤1.0. "n" represents an integer of 1 to 4.

Note that the viscosity of the stretchable film material (mixture solution) can be controlled as appropriate. To decrease the viscosity, for example, an organic solvent is mixed; to increase the viscosity, for example, a filler such as silica is mixed.

The organic solvent is preferably an organic solvent having a boiling point in a range of 115 to 200°C at atmospheric pressure. Specifically, it is preferable to use one or more selected from 2-octanone, 2-nonanone, 2-heptanone, 3-heptanone, 4-heptanone, 2-hexanone, 3-hexanone, diisobutyl ketone, methylcyclohexanone, acetophenone, methylacetophenone, propyl acetate, butyl acetate, isobutyl acetate, amyl acetate, butenyl acetate, isoamyl acetate, phenyl acetate, propyl formate, butyl formate, isobutyl formate, amyl formate, isoamyl formate, methyl valerate, methyl pentenoate, methyl crotonate, ethyl crotonate, propylene glycol monomethyl ether, ethylene glycol monomethyl ether, propylene glycol monoethyl ether, ethylene glycol monoethyl ether, propylene glycol dimethyl ether, diethylene glycol dimethyl ether, propylene glycol monomethyl ether acetate, and propylene glycol monoethyl ether acetate.

Regarding the molar ratio of the hydroxy groups and isocyanate groups in the stretchable film material (mixture), it is preferable that the hydroxy groups and the isocyanate groups be in the same molar number, but the molar number of the hydroxy groups or the isocyanate groups may be slightly larger than that of the other. When the molar number of the isocyanate groups is larger, the polymer has highly reactive isocyanate group at the terminal, and hence is caused to react with water or alcohol. When the molar number of the hydroxy groups is larger, the polymer has hydroxy group at the terminal.

When a cured product of the stretchable film material is formed in such a state that the molar number of the hydroxy groups is larger than that of the isocyanate groups as described above, the terminal of the polymer sometimes has a urethane bond that is formed only at one side of each diol compound as shown by general formulae (a')-1, (a')-2. 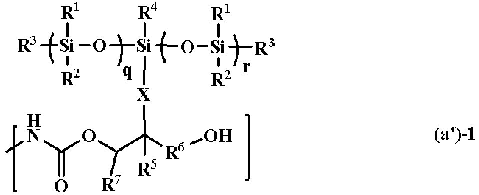 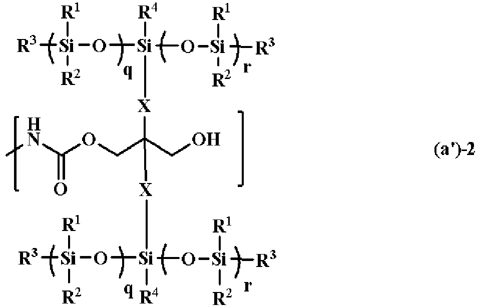 In the formulae, R¹ to R⁷, X, "q", and "r" are as defined above.

Other than the above-described method, the film can also be formed by a prepolymer method in which a hydroxy group-containing compound and an isocyanate compound are mixed to form a polymer material (prepolymer); then, a hydroxy group-containing compound or an isocyanate group-containing compound is additionally mixed and cured by heating. When the prepolymer is formed, one of the hydroxy group-containing compound and the isocyanate compound is used in an excess amount to increase the molecular weight. This can decrease the amount of unreacted residual isocyanate compared to the case of one shot method, in which the hydroxy group-containing compound and the isocyanate compound are mixed to form a film at once.

The present invention is characterized in that the curing takes place through crosslinking reaction of the maleimide group. Additionally, crosslinking of urethane bond can be utilized. For the urethane bond crosslinking and curing, compounds having three or more hydroxy groups or isocyanate groups per molecule may be added to form the silicone polyurethane.

The heating temperature in curing preferably ranges from room temperature to 200°C, more preferably 40 to 160°C. The time preferably ranges from 5 seconds to 60 minutes.

Specifically, in the case of polyether-containing silicone pendant polyurethane maleimide, for example, the polyether diol compound for obtaining the unit b1 in the general formula (2) and the silicone pendant diol compound for obtaining the unit a1 or a2 are mixed with a protected or unprotected isocyanate compound and a maleimide compound having a hydroxy group, an amino group, or an isocyanate group. After the polymerization, a polyether-containing silicone pendant polyurethane maleimide is synthesized which has a maleimide group at the polymer terminal.

The polyether-containing silicone pendant polyurethane maleimide can be crosslinked by light irradiation or radical. When the maleimide is coupled to another maleimide by light, the coupling may involve radical crosslinking, and a radical generator may be added additionally. Examples of the radical generator include a thermal-radical generator which generates a radical by thermal decomposition, and a photo-radical generator which generates a radical by light irradiation.

Examples of the thermal-radical generator include azo radical generators and peroxide radical generators. Examples of the azo radical generators include 2,2'-azobisisobutyronitrile (AIBN), 2,2'-azobis(2,4-dimethylvaleronitrile), dimethyl 2,2'-azobis(2-methylpropionate), 2,2'-azobis(4-methoxy-2,4-dimethylvaleronitrile), 2,2'-azobis(cyclohexane-1-carbonitrile), 4,4'-azobis(4-cyanovaleric acid), etc. Examples of the peroxide radical generators include benzoyl peroxide, decanoyl peroxide, lauroyl peroxide, succinyl peroxide, t-butylperoxy-2-ethylhexanoate, t-butylperoxypivaloate, 1,1,3,3-tetramethylbutylperoxy-2-ethylhexanoate, etc.

Examples of the photo-radical generator include acetophenone, 4,4'-dimethoxybenzyl, benzyl, benzoin, benzophenone, 2-benzoylbenzoic acid, 4,4'-bis(dimethylamino)benzophenone, 4,4'-bis(diethylamino)benzophenone, benzoin methyl ether, benzoin ethyl ether, benzoin isopropyl ether, benzoin butyl ether, benzoin isobutyl ether, 4-benzoylbenzoic acid, 2,2'-bis(2-chlorophenyl)-4,4',5,5'-tetraphenyl-1,2'-biimidazole, methyl 2-benzoylbenzoate, 2-(1,3-benzodioxole-5-yl)-4,6-bis(trichloromethyl)-1,3,5-triazine, 2-benzyl-2-(dimethylamino)-4'-morpholinobutyrophenone, 4,4'-dichlorobenzophenone, 2,2-diethoxyacetophenone, 2,2-dimethoxy-2-phenylacetophenone, 2,4-diethylthioxanthen-9-one, diphenyl(2,4,6-trimethylbenzoyl)phosphine oxide, 1,4-dibenzoylbenzene, 2-ethylanthraquinone, 1-hydroxycyclohexyl phenyl ketone, 2-hydroxy-2-methylpropiophenone, 2-hydroxy-4'-(2-hydroxyethoxy)-2-methylpropiophenone, 2-isonitrosopropiophenone, 2-phenyl-2-(p-toluenesulfonyloxy)acetophenone (BAPO), and camphorquinone.

Note that the amount of the thermal- or photo-radical generator added is preferably in a range of 0.1 to 50 parts by mass based on 100 parts by mass of the resin contained in the stretchable film material.

It is also possible to add a crosslinking agent that has a plurality of (meth)acrylate, thiol, or maleimide groups. This makes it possible to improve the crosslinking efficiency.

The stretchable film material may be mixed with a monomer that has an alkyl group or an aryl group, or a monomer that has an alkyl group or an aryl group substituted with a silicon-containing group or fluorine. These make it possible to form a thinner stretchable film by decreasing the viscosity of the solution. When each monomer has a polymerizable double bond, the monomer can be fixed into the film in curing the film.

Examples of the monomer that has an alkyl group or an aryl group include isobornyl acrylate, lauryl acrylate, tetradecyl acrylate, stearyl acrylate, isostearyl acrylate, behenyl acrylate, adamantane acrylate, phenoxyethylene glycol acrylate, phenoxydiethylene glycol acrylate, and 2 to 6 functional acrylates. Examples of the bifunctional acrylate include 1,6-hexanediol diacrylate, 1,9-nonanediol diacrylate, isononanediol diacrylate, 1,10-decanediol diacrylate, neopentyl glycol diacrylate, 2-hydroxy-3-methacrylpropyl acrylate, diethylene glycol diacrylate, triethylene glycol diacrylate, polyethylene glycol diacrylate, dipropylene glycol diacrylate, tripropylene glycol diacrylate, polypropylene glycol diacrylate, polytetramethylene glycol diacrylate, polyethylene polypropylene glycol diacrylate, dioxane glycol diacrylate, tricyclodecanedimethanol diacrylate, 9,9-bis[4-(2-hydroxyethoxy)phenyl]fluorene diacrylate, ethoxylated bisphenol A diacrylate, propoxylated bisphenol A diacrylate, and ethoxylated propoxylated bisphenol A diacrylate. Examples of the trifunctional acrylate include trimethylolpropane triacrylate, ethoxylated trimethylolpropane triacrylate, propoxylated trimethylolpropane triacrylate, glycerin triacrylate, ethoxylated glycerin triacrylate, propoxylated glycerin triacrylate, tris(2-acryloxyethyl)isocyanurate, caprolactone modified tris(2-acryloxyethyl)isocyanurate, and pentaerythritol triacrylate. Examples of the tetrafunctional acrylate include pentaerythritol tetraacrylate, ethoxylated pentaerythritol tetraacrylate, propoxylated pentaerythritol tetraacrylate, ditrimethylolpropane tetraacrylate, ethoxylated ditrimethylolpropane tetraacrylate, and propoxylated ditrimethylolpropane tetraacrylate. Examples of the penta- or hexa-functional acrylate include dipentaerythritol polyacrylate, ethoxylated dipentaerythritol polyacrylate, and propoxylated dipentaerythritol polyacrylate. It is also possible to use these monomers in which each acrylate is replaced by methacrylate.

When the stretchable film is formed using the compound having a maleimide group at a terminal, the curing can be performed by combining heat-curing and photo-curing. For example, it is possible to form a stretchable film, which serves as base, by heat-curing, and then form a stretchable film having an uneven pattern on the base by photo-curing. The merits of photo-curing are that heating is not necessarily essential, and the curing can be performed in a short period. The demerit is that the area where light does not reach cannot be cured. By combining heat-curing and photo-curing, a curing method that takes advantage of each curing merit can be selected.

When the compound having a maleimide group at a terminal is cured by heating, the heat-curing can be performed, for example, with a hot plate, in an oven, or by irradiation of far infrared ray. The heating conditions are preferably at 30 to 150°C for 10 seconds to 60 minutes, more preferably at 50 to 120°C for 30 seconds to 20 minutes. The baking environment may be in the atmosphere, in an inert gas, or in vacuum.

When the compound having a maleimide group at a terminal is cured by light irradiation, the curing by light irradiation is preferably performed with light having a wavelength of 200 to 500 nm. As the light source, for example, a halogen lamp, a xenon lamp, excimer laser, a metal halide lamp, LED, or the like can be used. Alternatively, electron beam irradiation may be adopted. The irradiation quantity is preferably in a range of 1 mJ/cm² to 100 J/cm².

The invention stretchable film can be used not only as a self-standing film alone, but can also be formed on fiber or a membrane film.

### <Use Examples of the Inventive Stretchable Film>

Here, FIG. 1 shows an example of using the inventive stretchable film. FIG. 1 is a schematic illustration of an electrocardiograph 1 formed on the inventive stretchable film 6, which is viewed from the bio-electrode side. As shown in FIG. 1, in the electrocardiograph 1, three bio-electrodes 2 are linked with each other by a wiring 3, which conducts electric signals, and are connected to a center device 4; and an adhesive part 5 is disposed around each bio-electrode 2. The electrocardiograph 1 is described in Patent Document 1. In the center device 4, mounted are a device for processing biological signals, an antenna for data communications with a nearby smartphone and so forth, a battery, etc.

As the material of the wiring 3, electrically conductive materials are generally used, including carbon and metals such as gold, silver, platinum, titanium, and stainless steel. Note that, to provide stretchability, the wiring 3 can be a meandering-shaped wiring as described in Patent Document 1, and can be formed by pasting a powder of the electrically conductive material or a wire of the electrically conductive material on a stretchable film, printing electrically conductive ink containing the electrically conductive material on a stretchable film, or using an electrically conductive fabric in which the electrically conductive material and fibers are combined.

Since the electrocardiograph 1 has to be attached to skin, the adhesive part 5 is disposed around the bio-electrode 2. Incidentally, when the bio-electrode 2 has adhesiveness, the surrounding adhesive part 5 is not necessarily essential.

This electrocardiograph 1 is formed on the stretchable film 6, which is the inventive stretchable film, as shown in FIG. 1. When printing is performed on the stretchable film 6 by screen printing or the like, the inventive stretchable film with the maleimide crosslinking shows favorable printing plate-release. If the printing plate-release is unfavorable, the ink is released together when the printing plate is released. This is not preferable because the ink may not be transferred on the stretchable film properly.

Further, the stretchable wiring 3 and the center device 4 can be covered with the inventive stretchable film. In this case, after attached on the stretchable film 6, the wiring 3 and the center device 4 are covered with the inventive stretchable film, followed by curing. To cover a center device and wire of certain heights, the inventive stretchable material is preferably applied with inkjet or spray.

When the center device 4 is removable, the center device does not have to be covered continuously from the stretchable substrate with the stretchable film.

### EXAMPLE

Hereinafter, the present invention will be specifically described with reference to Examples and Comparative Examples. However, the present invention is not limited thereto. Incidentally, weight-average molecular weight (Mw) and dispersity (Mw/Mn) are expressed by values determined by GPC in terms of polystyrene.

### (Synthesis Example 1)

Under a nitrogen stream, 100 g of propylene glycol monoethyl ether acetate (PGMEA) was mixed with 0.2 moles of polytetramethylene ether glycol with Mw of 1000, 0.1 moles of Silicone diol 1, 0.4 moles of isophorone diisocyanate, and 0.001 moles of dibutyltin dilaurate in a reaction container of a planetary mixer, and stirred for 30 minutes. Then, the temperature was raised to 90°C and the stirring was continued for another 6 hours. After cooling, 0.2 moles of N-(2-hydroxyethyl)maleimide was added dropwise and mixed. The temperature was raised to 90°C again, and the mixture was stirred for 1 hour. The PGMEA was evaporated under vacuum. Thus, Silicone polyurethane maleimide 1 was obtained, which had a weight-average molecular weight and a dispersity as follows.

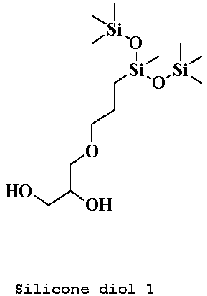

Silicone polyurethane maleimide 1: Mw=5,400, Mw/Mn=1.65

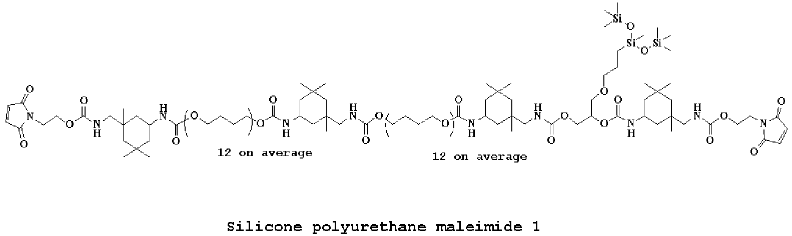

### (Synthesis Examples 2 to 20, Comparative Synthesis Examples 1 to 2)

By methods similar to that in Synthesis Example 1, Silicone polyurethane maleimides 2 to 20, Silicone polyurethane acrylate 1 having acrylate groups at the terminals, and Comparative polyurethane maleimide 1 prepared without adding silicone diol were synthesized.

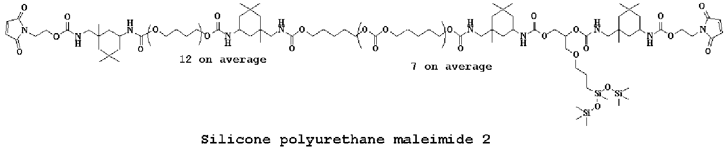

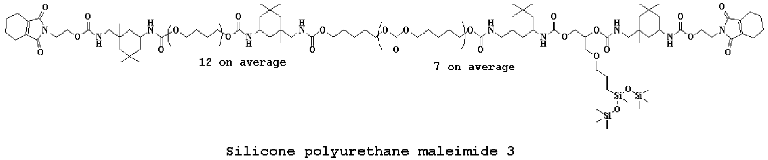

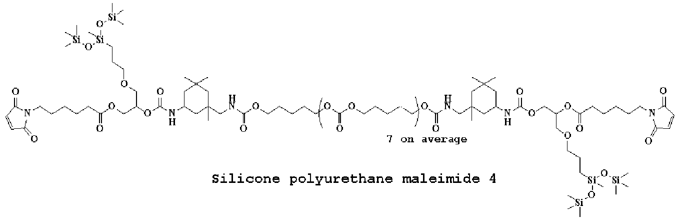

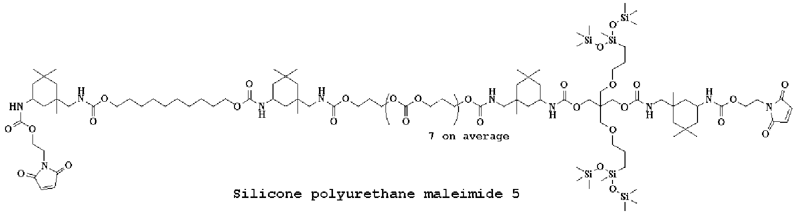

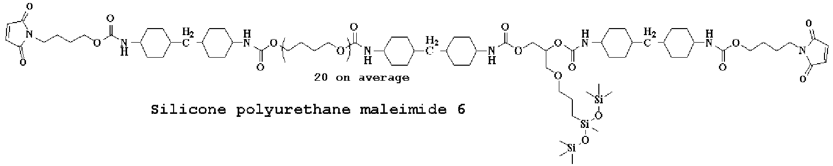

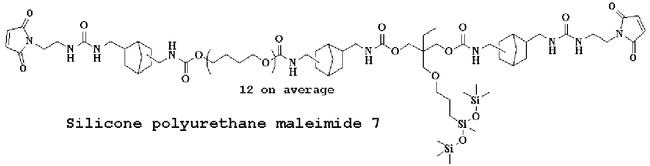

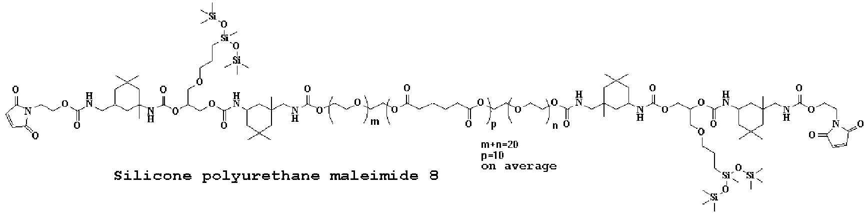

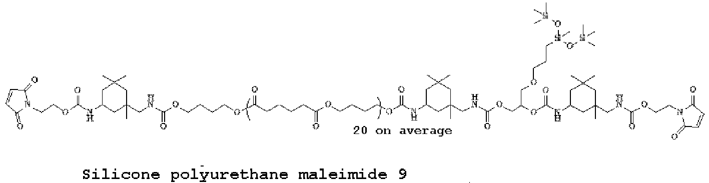

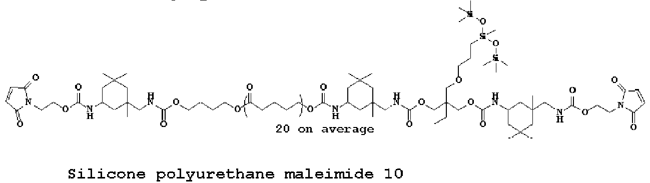

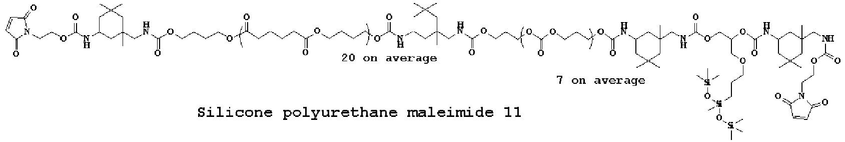

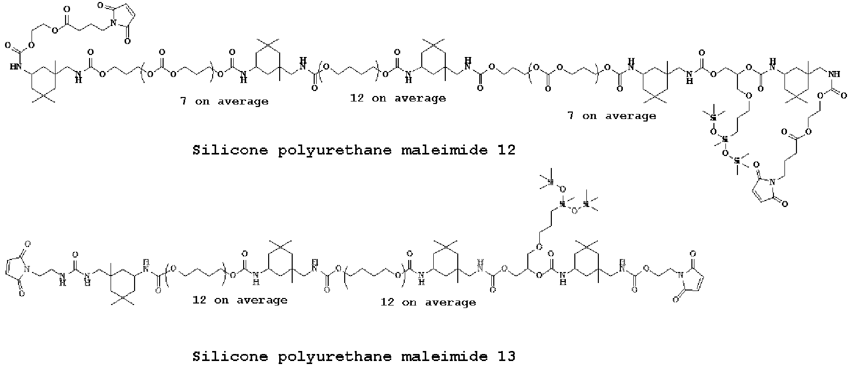

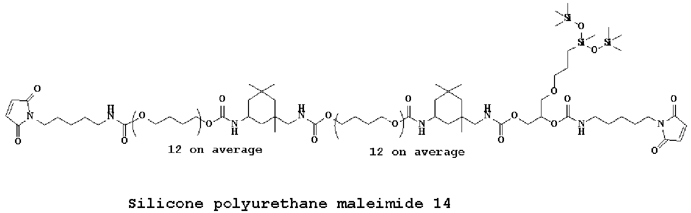

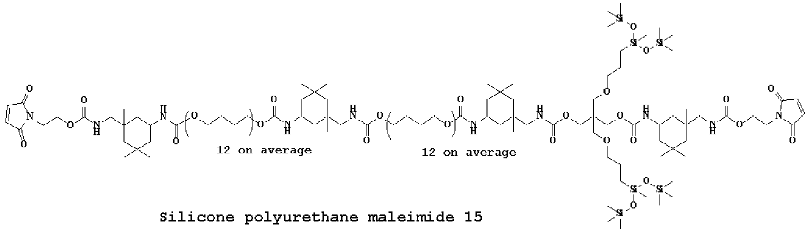

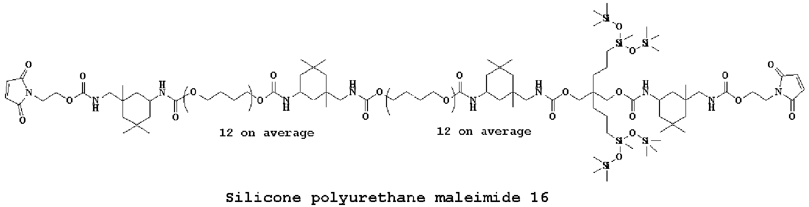

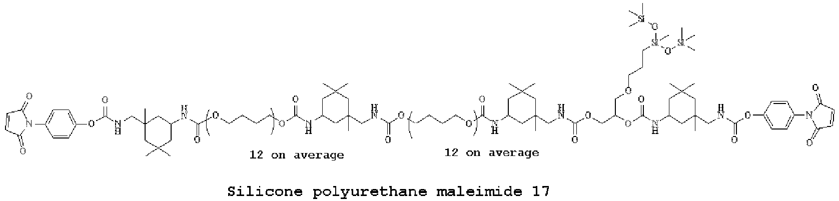

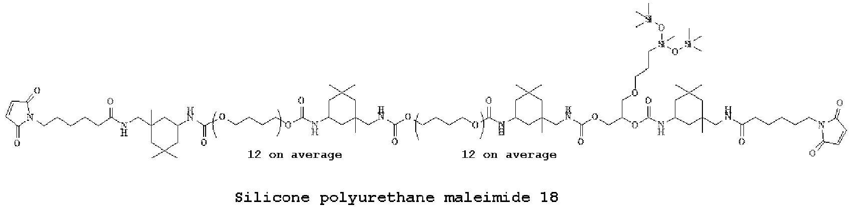

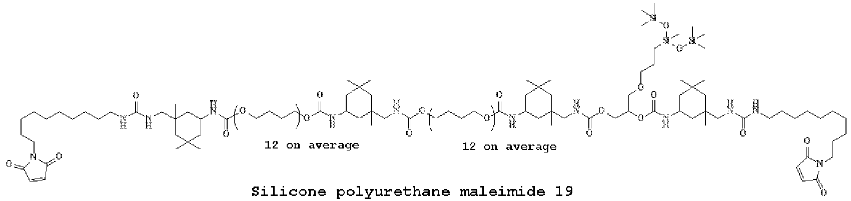

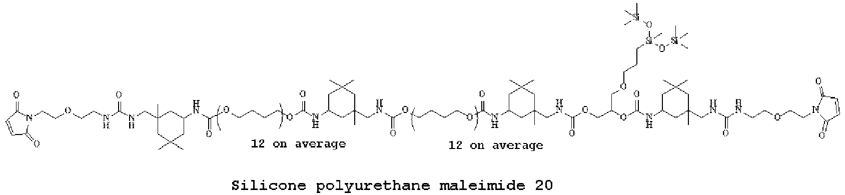

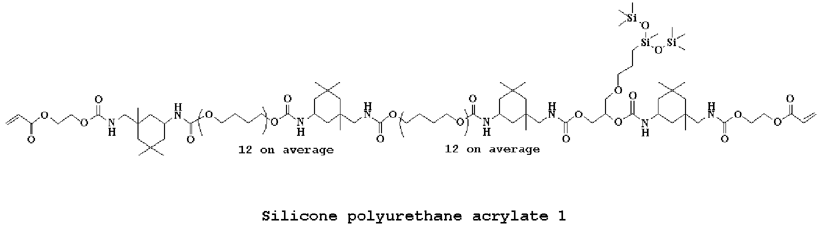

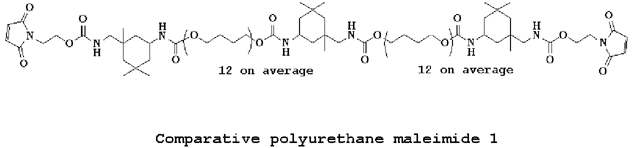

Photo radical generator-1 blended as an additive to Stretchable film materials 6 to 13, 22, 23, and Comparative stretchable film material 1 is shown below.

### Photo radical generator-1: diphenyl(2,4,6-trimethylbenzoyl)phosphine oxide

A monomer having an alkyl group blended to Stretchable film materials 6 to 13 is shown below.

### Monomer having an alkyl group: isobornyl acrylate

### [Examples, Comparative Examples]

According to compositions shown in Table 1, the silicone polyurethanes having a maleimide group at a terminal were optionally mixed with the photo radical generator. Consequently, Stretchable film material 1 to 23 and Comparative stretchable film materials 1, 2 (compositions for forming a stretchable film) were prepared.

**[Table 1]**

| Stretchable film material | Polyurethane (parts by mass) | Additive (parts by mass) |
|---|---|---|
| Stretchable film material 1 | Silicone polyurethane maleimide 1(100) | - |
| Stretchable film material 2 | Silicone polyurethane maleimide 2(100) | - |
| Stretchable film material 3 | Silicone polyurethane maleimide 3(100) | - |
| Stretchable film material 4 | Silicone polyurethane maleimide 1(70) | - |
| | Silicone polyurethane maleimide 4(30) | |
| Stretchable film material 5 | Silicone polyurethane maleimide 1(70) | - |
| | Silicone polyurethane maleimide 5(30) | |
| Stretchable film material 6 | Silicone polyurethane maleimide 1(80) isobornyl acrylate(20) | Photo radical generator-1(1) |
| Stretchable film material 7 | Silicone polyurethane maleimide 2(80) isobornyl acrylate (20) | Photo radical generator-1(1) |
| Stretchable film material 8 | Silicone polyurethane maleimide 6(80) isobornyl acrylate (20) | Photo radical generator-1(1) |
| Stretchable film material 9 | Silicone polyurethane maleimide 7(80) isobornyl acrylate (20) | Photo radical generator-1(1) |
| Stretchable film material 10 | Silicone polyurethane maleimide 8(80) isobornyl acrylate (20) | Photo radical generator-1(1) |
| Stretchable film material 11 | Silicone polyurethane maleimide 9(80) isobornyl acrylate (20) | Photo radical generator-1(1) |
| Stretchable film material 12 | Silicone polyurethane maleimide 10(80) isobornyl acrylate (20) | Photo radical generator-1(1) |
| Stretchable film material 13 | Silicone polyurethane maleimide 11(80) isobornyl acrylate(20) | Photo radical generator-1(1) |
| Stretchable film material 14 | Silicone polyurethane maleimide 12(50) | - |
| | Silicone polyurethane maleimide 1(50) | |
| Stretchable film material 15 | Silicone polyurethane maleimide 13(100) | - |
| Stretchable film material 16 | Silicone polyurethane maleimide 14(100) | - |
| Stretchable film material 17 | Silicone polyurethane maleimide 15(100) | - |
| Stretchable film material 18 | Silicone polyurethane maleimide 16(50) | - |
| | Silicone polyurethane acrylate 1(50) | |
| Stretchable film material 19 | Silicone polyurethane maleimide 16(70) | - |
| | Comparative polyurethane maleimide 1(30) | |
| Stretchable film material 20 | Silicone polyurethane maleimide 17(100) | - |
| Stretchable film material 21 | Silicone polyurethane maleimide 18(100) | - |
| Stretchable film material 22 | Silicone polyurethane maleimide 19(100) | Photo radical generator-1(0.5) |
| Stretchable film material 23 | Silicone polyurethane maleimide 20(100) | Photo radical generator-1(0.5) |
| Comparative stretchable film material 1 | Silicone polyurethane acrylate 1(100) | Photo radical generator-1(1) |
| Comparative stretchable film material 2 | Comparative polyurethane maleimide 1(100) | - |

### (Preparation of Stretchable Films)

The stretchable film materials shown in Table 2 heated to 40°C were respectively applied using a slit coater onto Teflon(registered trademark) films, and cured by irradiation with light of 500 mJ/cm² from a 1,000 W xenon lamp in a nitrogen atmosphere to form stretchable films.

### (Measurement of Film Thickness, Contact Angle, Stretching Property, and Strength)

After the curing, the stretchable films (Examples 1 to 23) and the stretchable films of Comparative Examples (Comparative Examples 1, 2) were measured for film thickness and contact angle with water on the top surface. Moreover, the stretching property (elongation) and strength were measured by a method in conformity to JIS K 6251. Table 2 shows the results.

**[Table 2]**

| | Stretchable film material | Stretchable film thickness (µm) | Contact angle (°) | Elongation (%) | Strength (MPa) |
|---|---|---|---|---|---|
| Example 1 | Stretchable film material 1 | 250 | 95 | 270 | 28.1 |
| Example 2 | Stretchable film material 2 | 280 | 96 | 210 | 30.1 |
| Example 3 | Stretchable film material 3 | 220 | 97 | 200 | 32.8 |
| Example 4 | Stretchable film material 4 | 225 | 95 | 200 | 28.5 |
| Example 5 | Stretchable film material 5 | 230 | 101 | 250 | 25.8 |
| Example 6 | Stretchable film material 6 | 213 | 96 | 270 | 24.3 |
| Example 7 | Stretchable film material 7 | 210 | 95 | 270 | 25.5 |
| Example 8 | Stretchable film material 8 | 220 | 95 | 220 | 28.7 |
| Example 9 | Stretchable film material 9 | 225 | 95 | 210 | 29.8 |
| Example 10 | Stretchable film material 10 | 205 | 95 | 230 | 27.5 |
| Example 11 | Stretchable film material 11 | 207 | 95 | 200 | 32.7 |
| Example 12 | Stretchable film material 12 | 230 | 96 | 204 | 29.4 |
| Example 13 | Stretchable film material 13 | 240 | 95 | 220 | 28.7 |
| Example 14 | Stretchable film material 14 | 220 | 95 | 280 | 25.0 |
| Example 15 | Stretchable film material 15 | 230 | 95 | 210 | 28.9 |
| Example 16 | Stretchable film material 16 | 220 | 96 | 260 | 25.3 |
| Example 17 | Stretchable film material 17 | 205 | 106 | 260 | 24.8 |
| Example 18 | Stretchable film material 18 | 204 | 103 | 250 | 24.1 |
| Example 19 | Stretchable film material 19 | 220 | 102 | 220 | 26.6 |
| Example 20 | Stretchable film material 20 | 235 | 96 | 200 | 29.9 |
| Example 21 | Stretchable film material 21 | 200 | 95 | 290 | 25.1 |
| Example 22 | Stretchable film material 22 | 270 | 95 | 210 | 28.1 |
| Example 23 | Stretchable film material 23 | 220 | 95 | 215 | 26.5 |
| Comparative Example 1 | Comparative stretchable film material 1 | 240 | 95 | 260 | 21.1 |
| Comparative Example 2 | Comparative stretchable film material 2 | 260 | 70 | 180 | 27.0 |

As shown in Table 2, the stretchable films formed by curing the stretchable film materials each containing a silicone polyurethane having a maleimide group at least at a terminal according to the present invention showed higher water repellency, strength, and stretchability.

On the other hand, the film formed by curing the silicone polyurethane having no maleimide group as in Comparative Example 1 had insufficient strength. The film formed by curing the polyurethane having terminal maleimide but no silicone as in Comparative Example 2 had lower water repellency and stretchability.

The above results revealed that the inventive stretchable films formed by curing the stretchable film materials each containing a silicone polyurethane having a maleimide group at least at a terminal has excellent stretchability and strength and also excellent water repellency on the film surface. The inventive stretchable film has excellent properties as a film that is capable of printing stretchable wirings used for wearable devices and so on.

Moreover, the inventive silicone polyurethane can form a film by itself, does not necessarily require a reaction initiator or a solvent, and thus has such merits of being environmentally friendly.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A silicone polyurethane comprising a maleimide group at least at a terminal, wherein the silicone polyurethane is a reaction product of a diol compound having a short-chain silicone pendant selected from formulae (A1) to (A9) below, a soft segment selected from formulae (B1) to (B6) below, wherein the numbers of the parenthesized repeating units in (B1) to (B6) are 1 to 200, an isocyanate compound selected from formulae (C1) to (C2), wherein "t" represents an integer of 1 or more, and a maleimide compound selected from formulae (D1) to (D6) below:

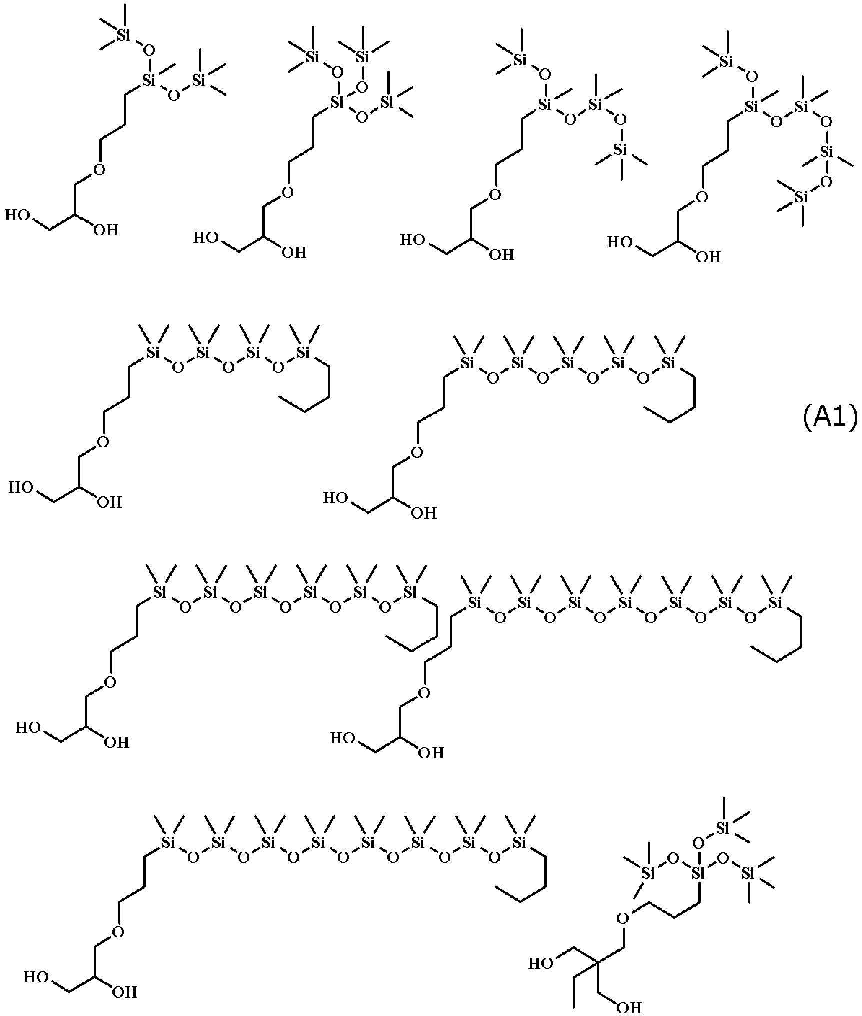

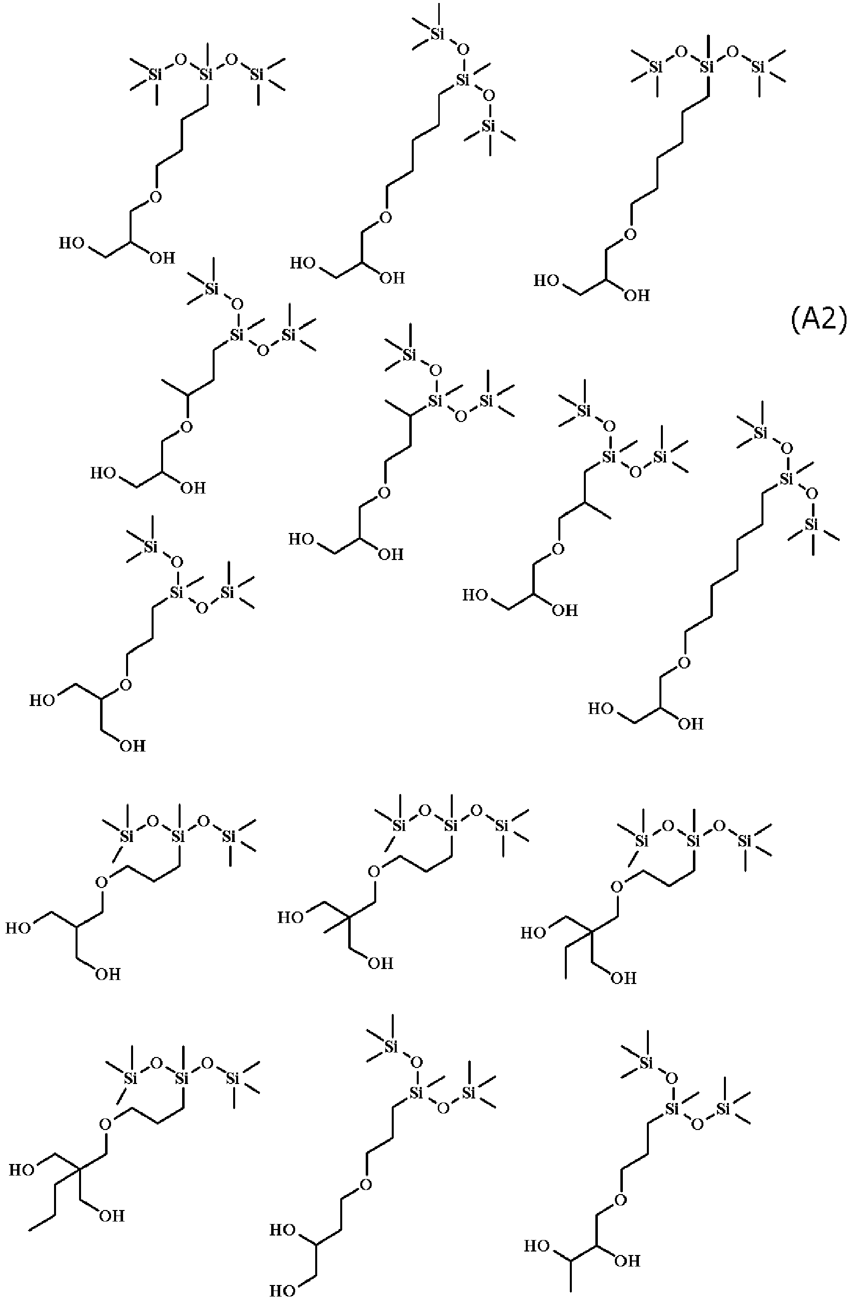

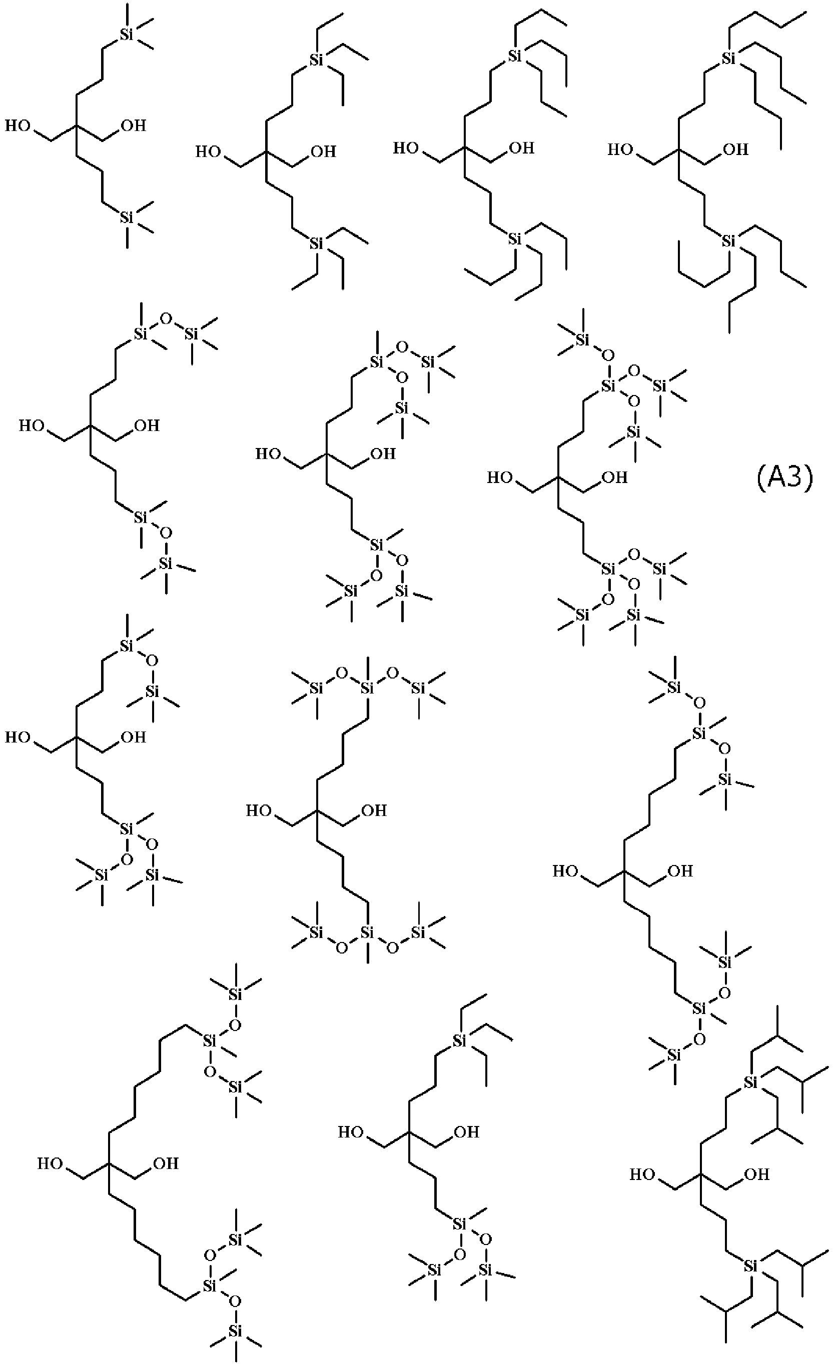

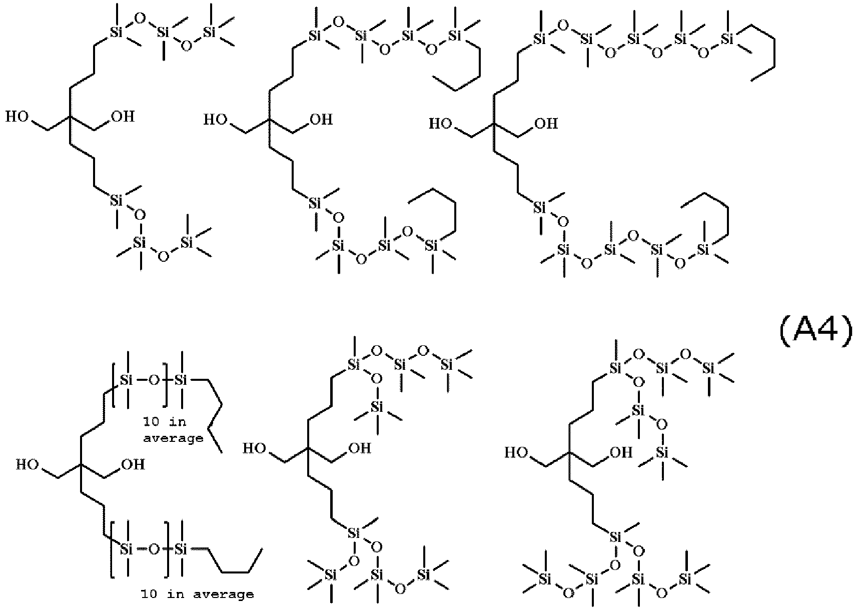

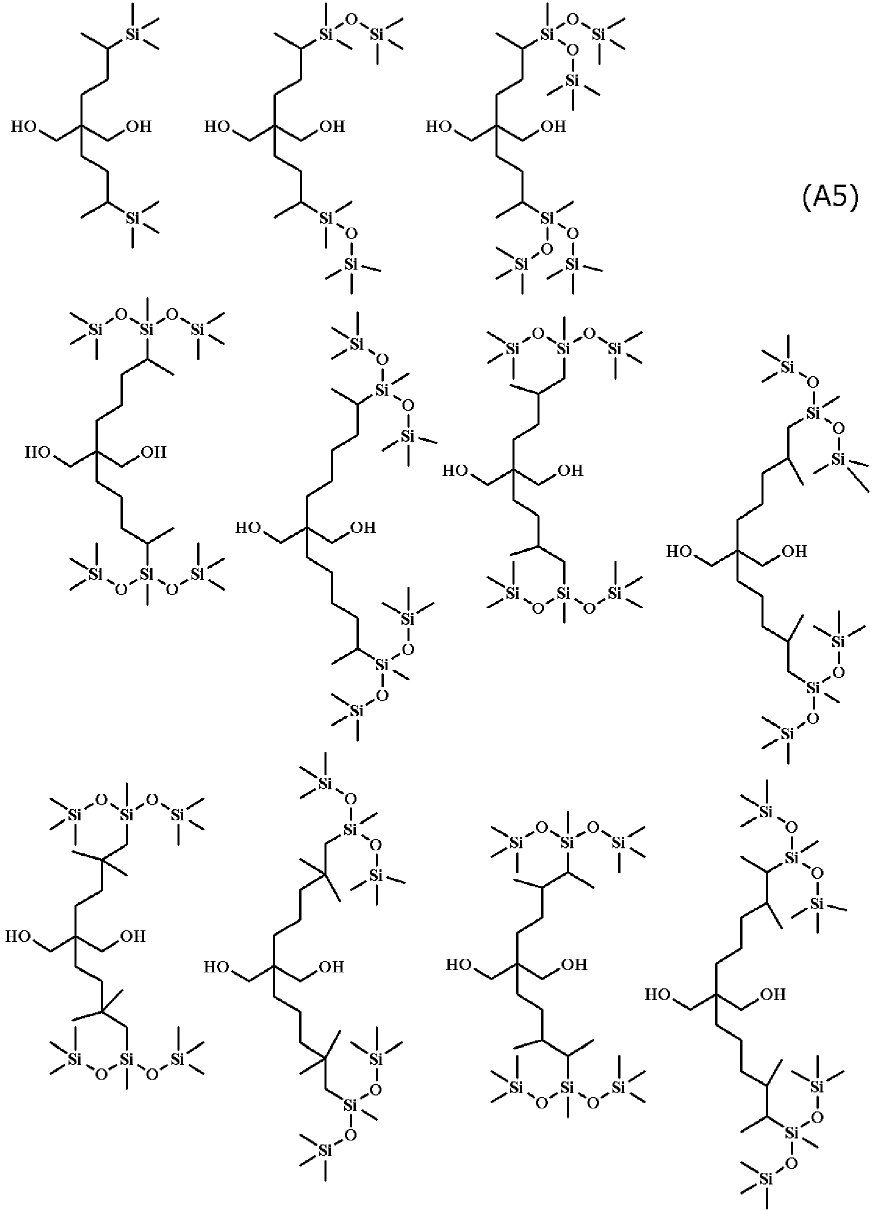

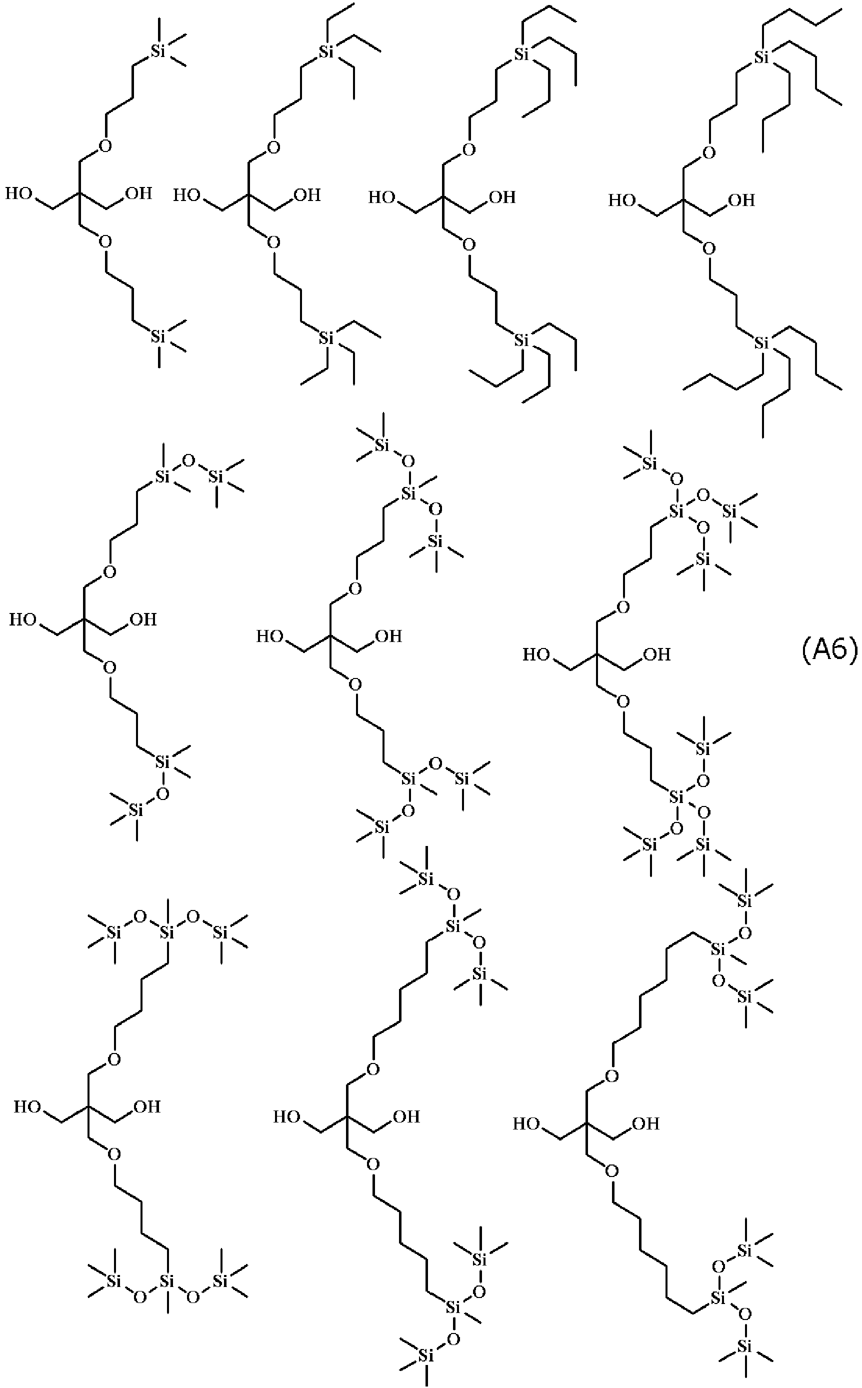

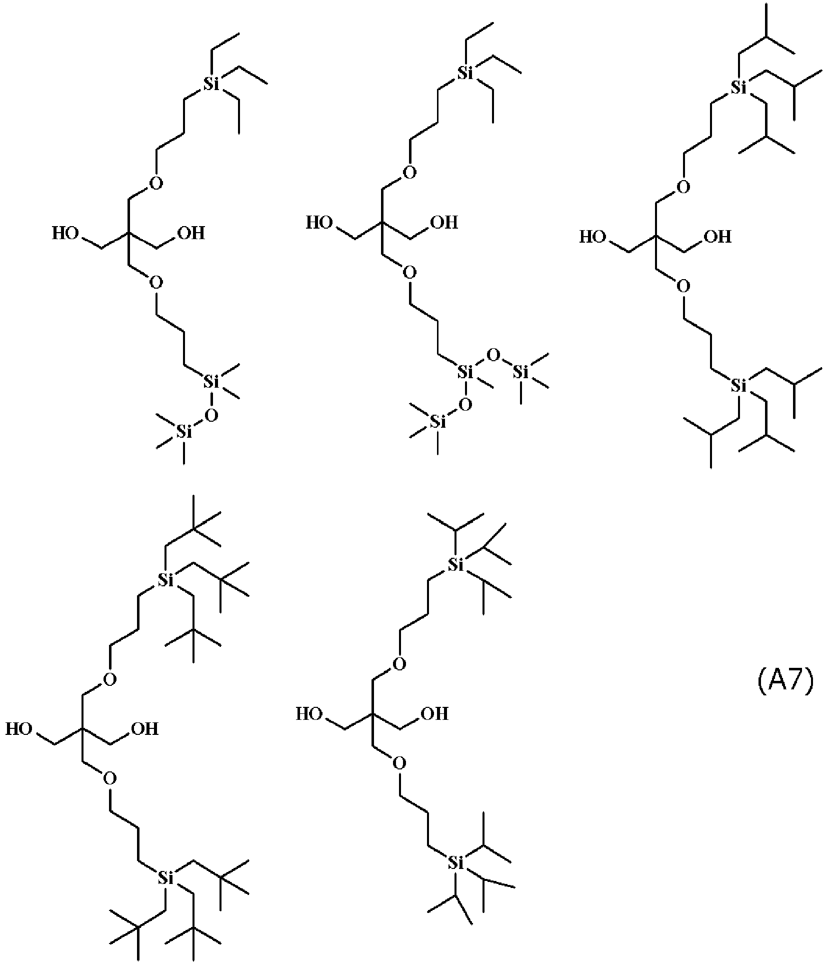

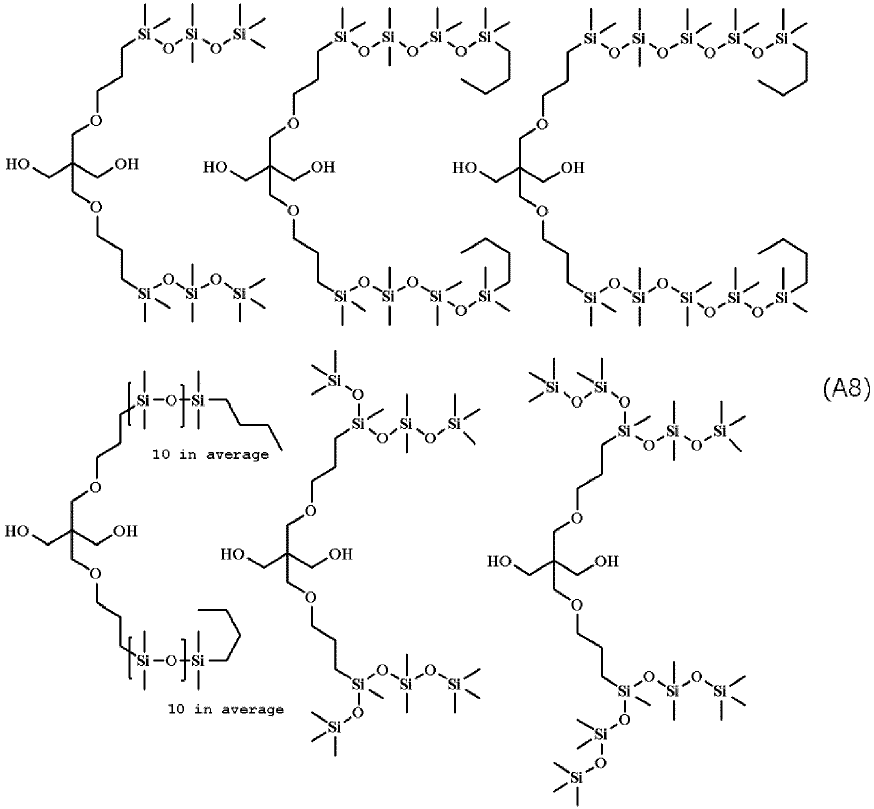

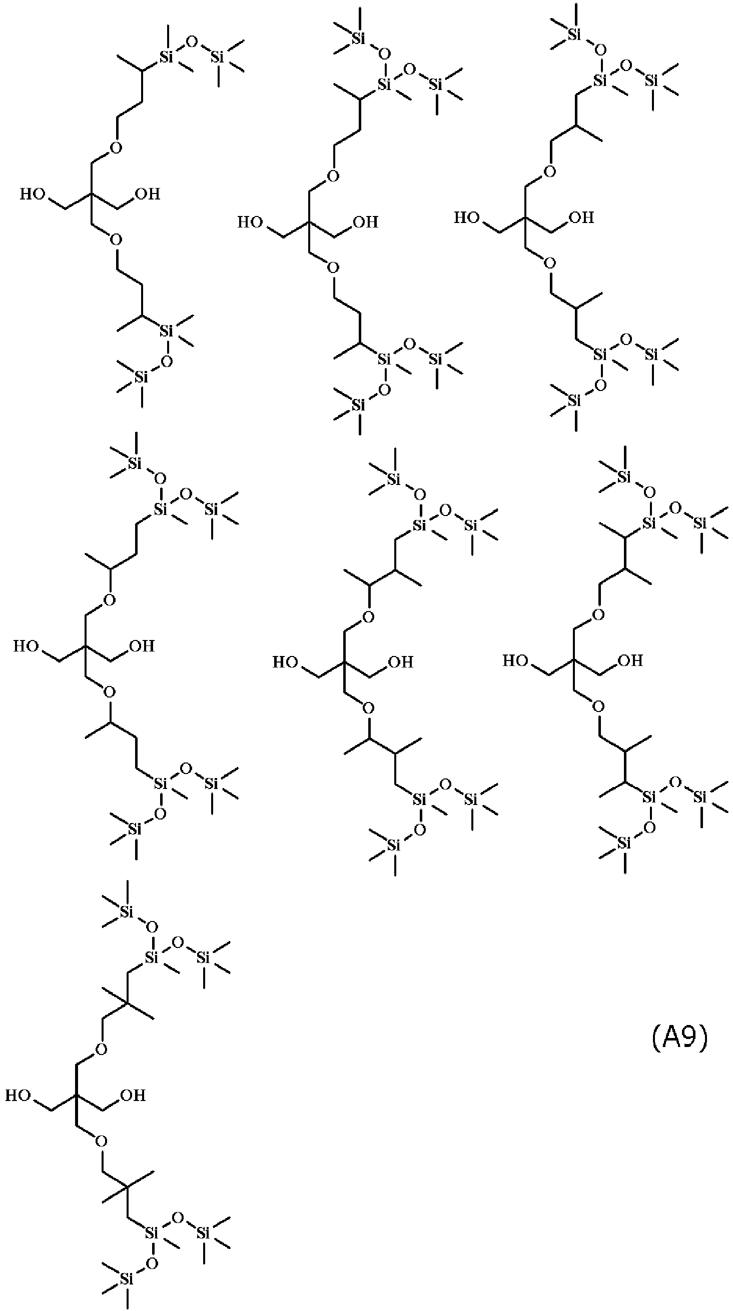

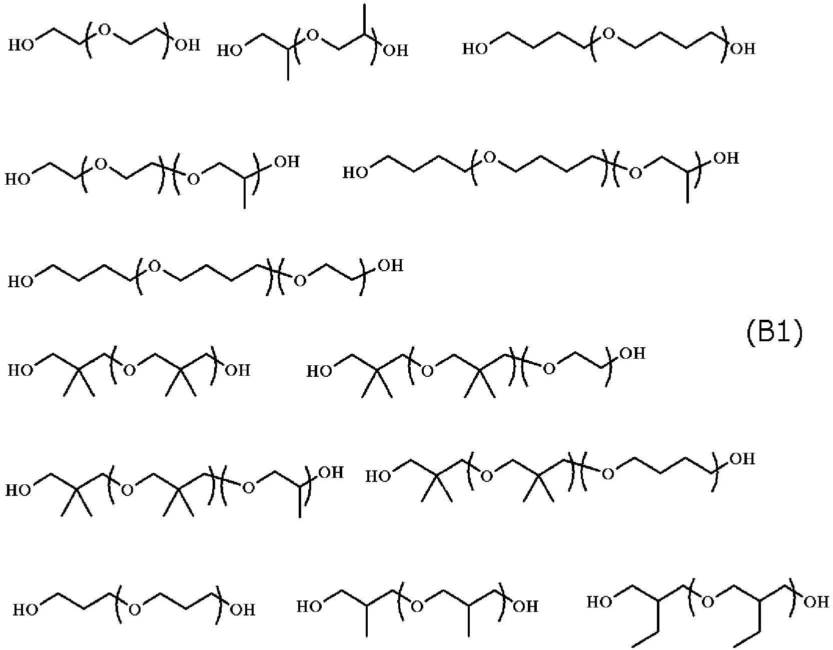

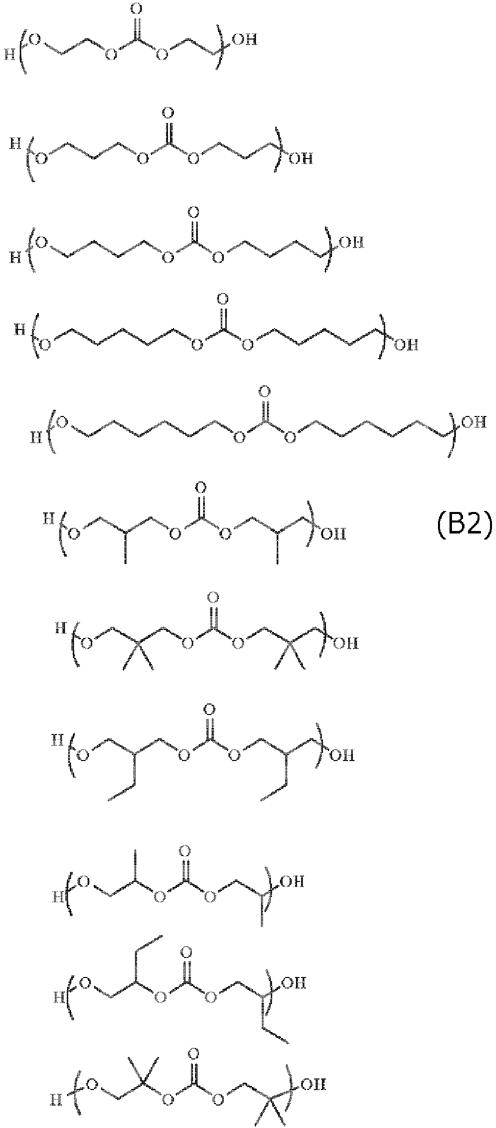

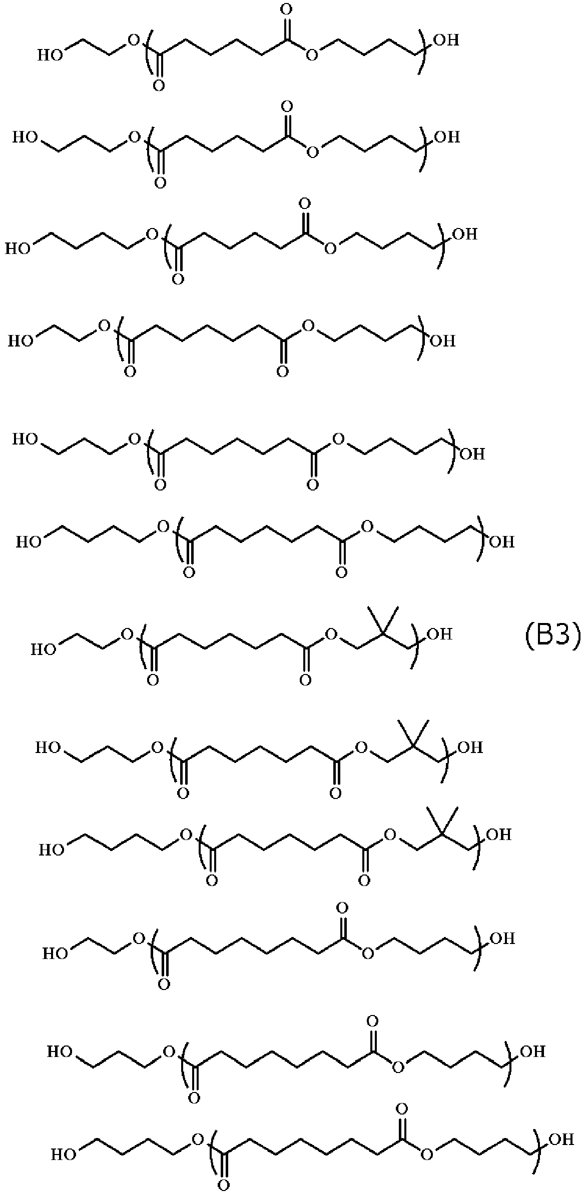

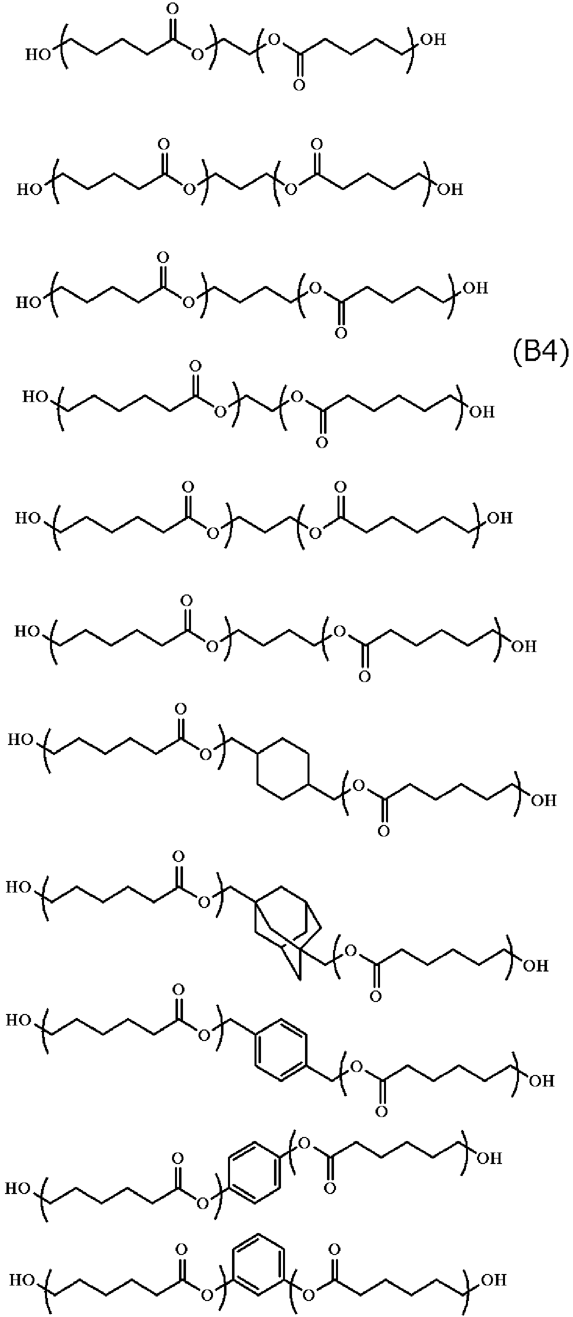

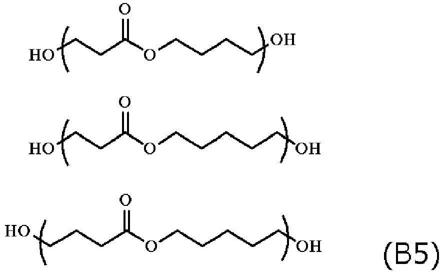

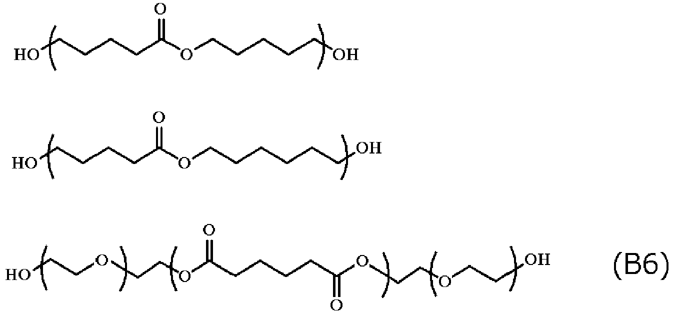

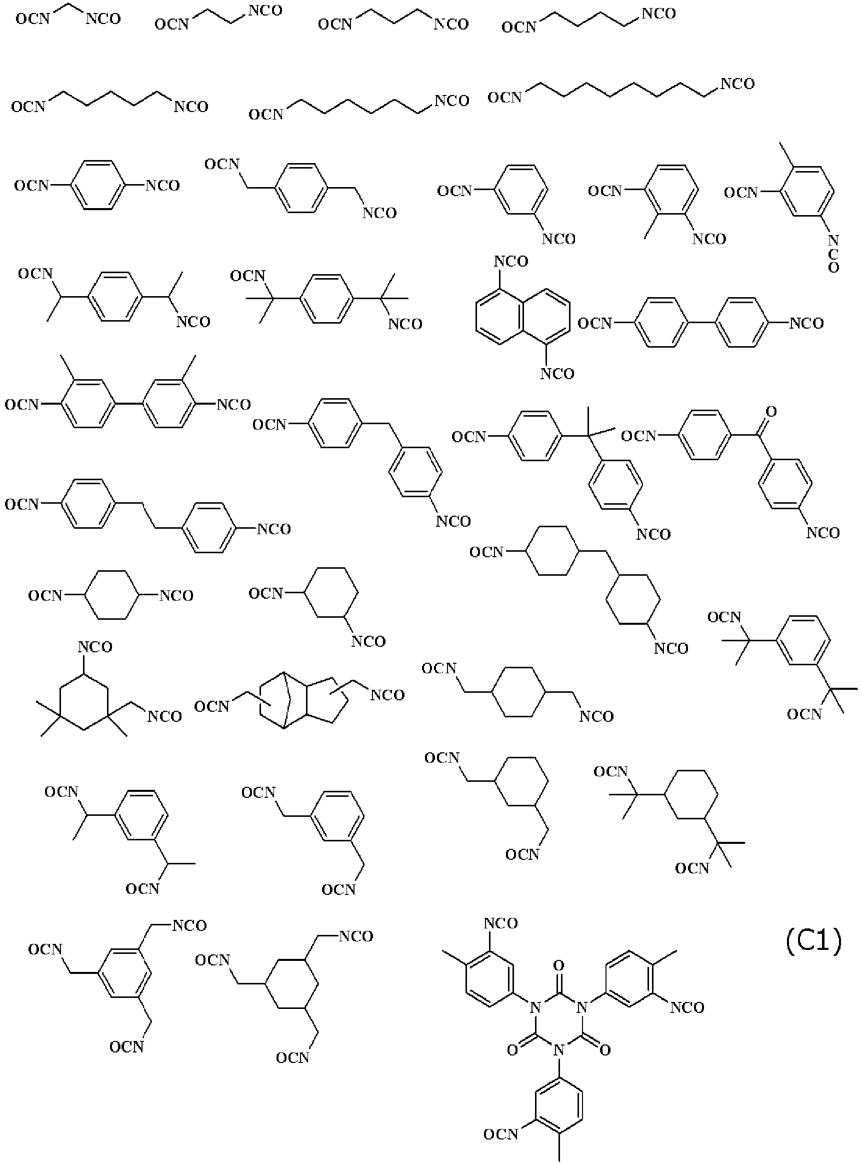

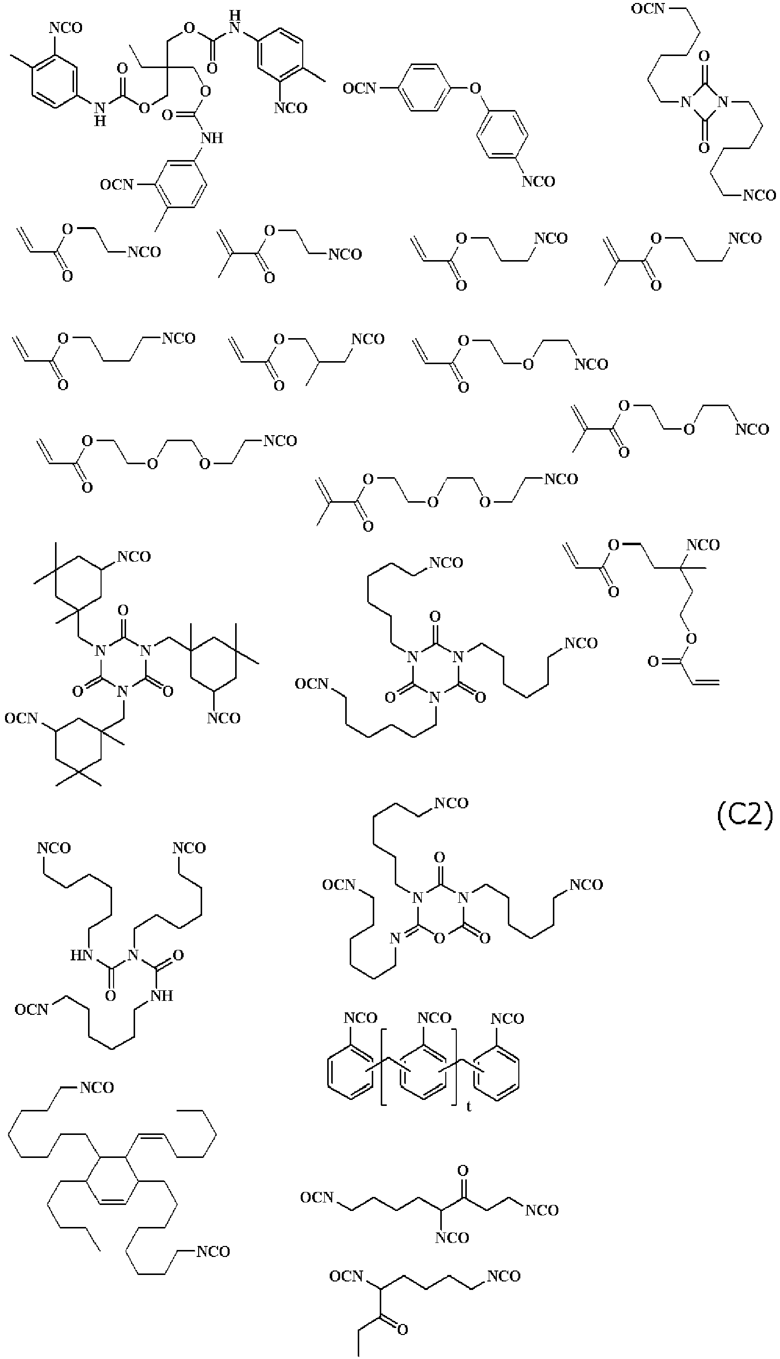

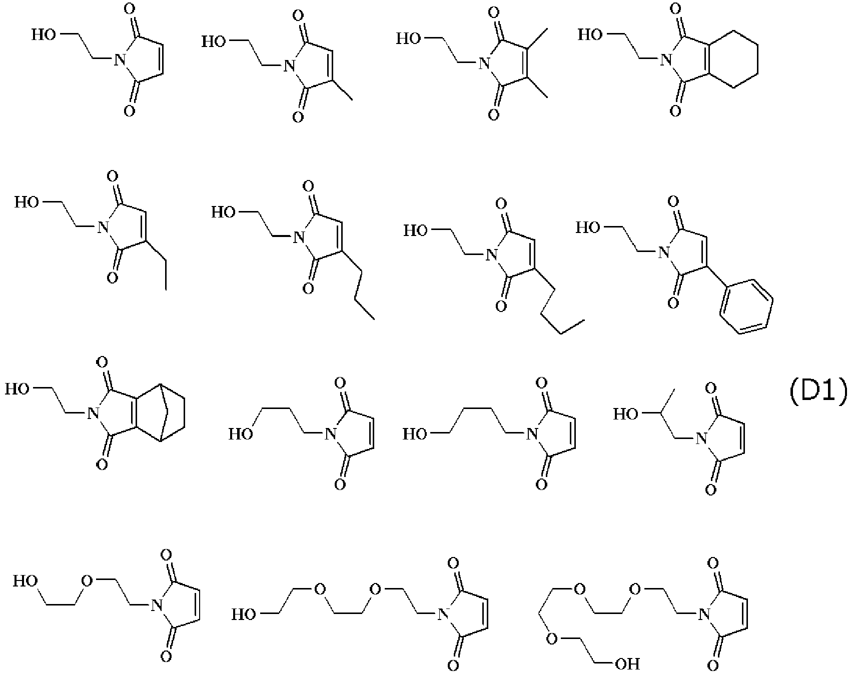

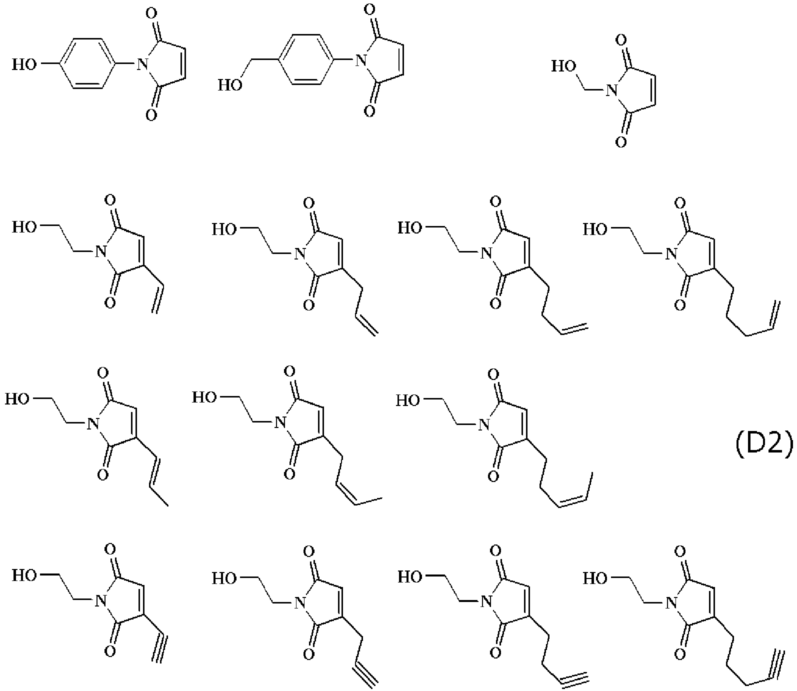

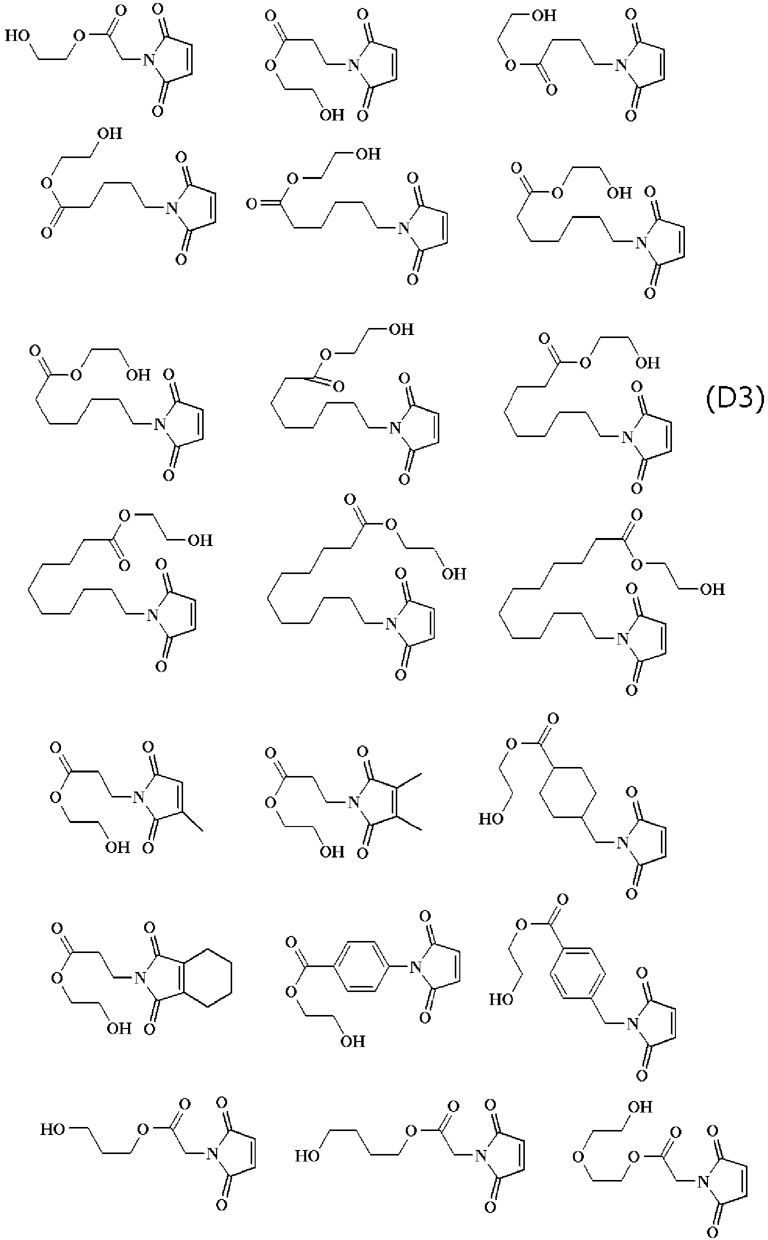

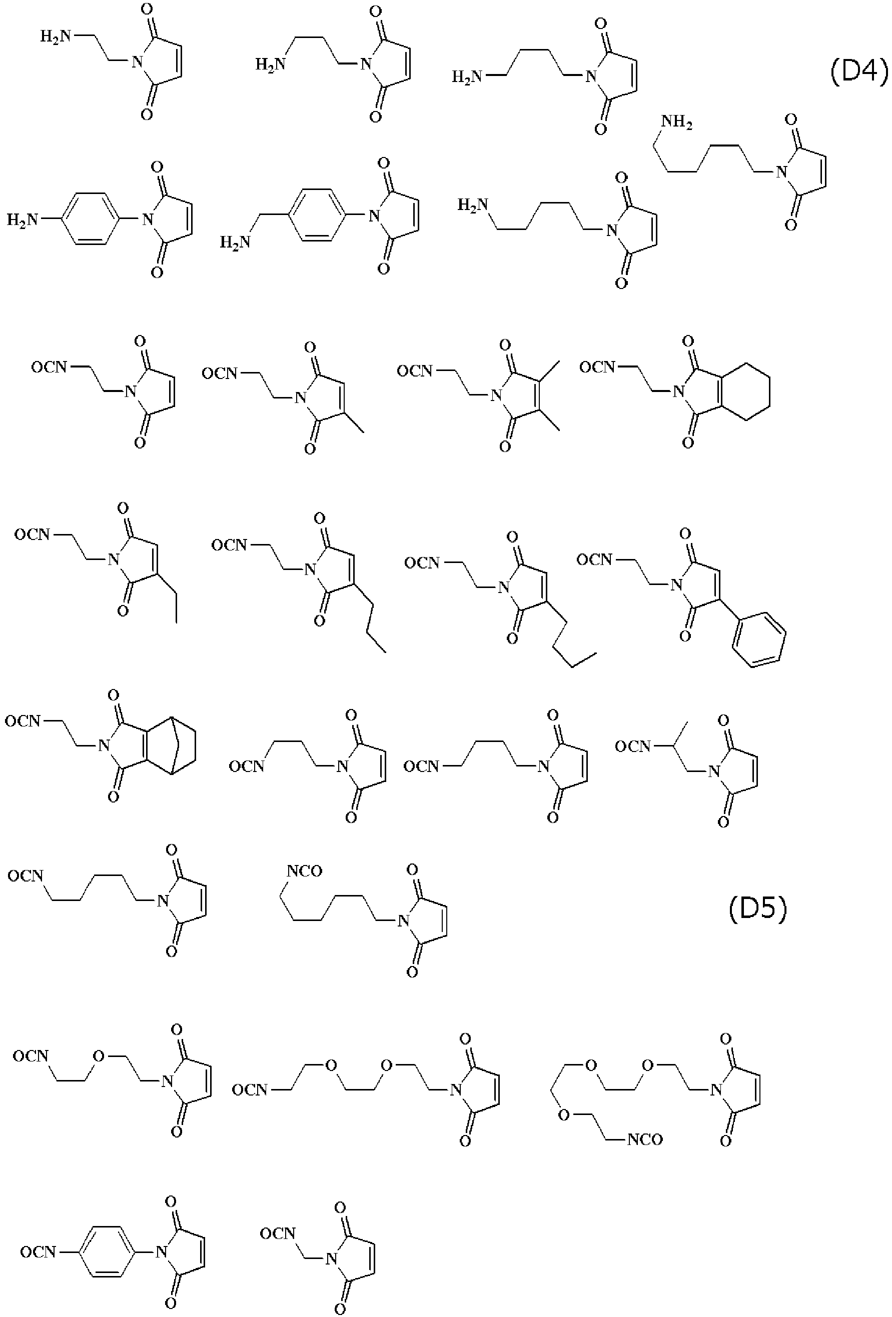

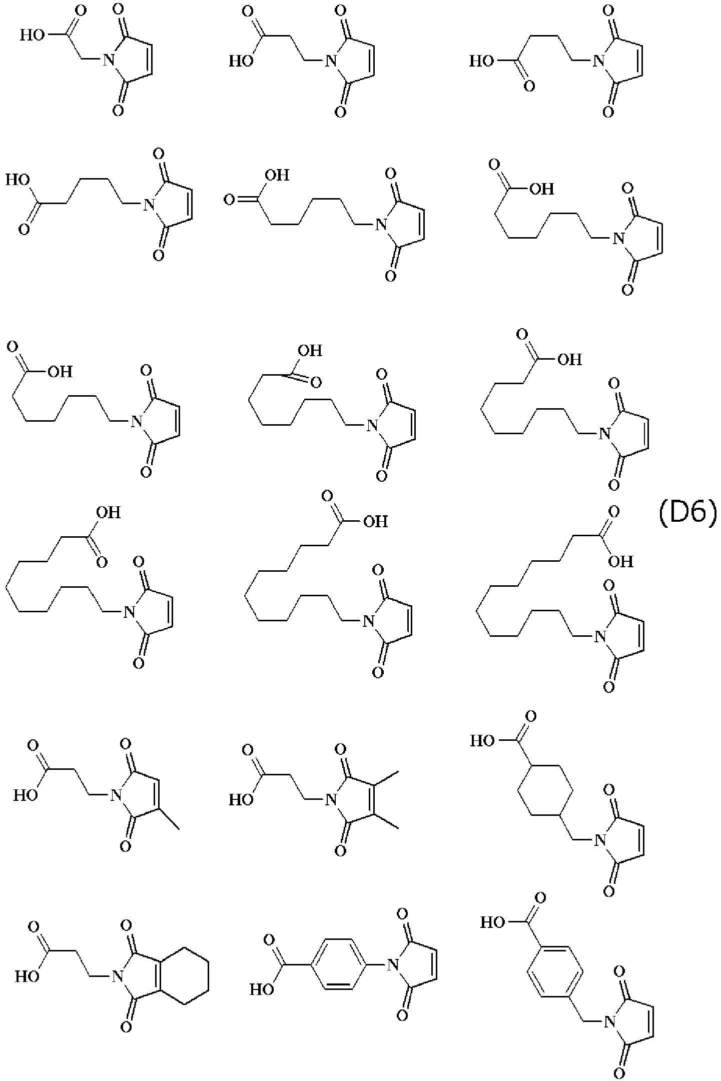

2. The silicone polyurethane according to claim 1, wherein the silicone polyurethane is **characterized by** the following silicone polyurethane maleimide land has a weight-average molecular weight and a dispersity of Mw=5,400, and Mw/Mn=1.65:

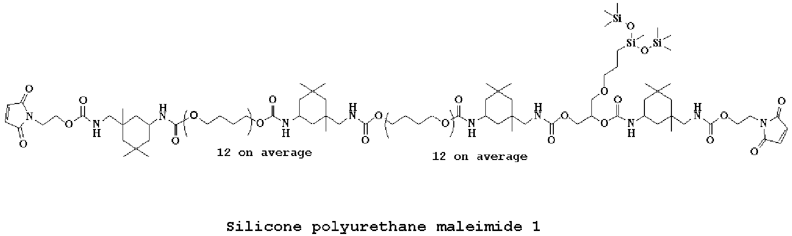

3. The silicone polyurethane according to claim 1, wherein the silicone polyurethane is **characterized by** the following silicone polyurethane maleimides 2 to 20:

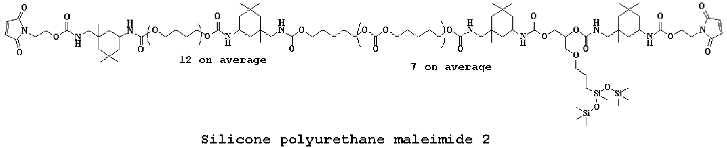

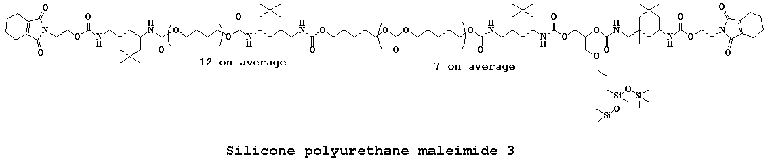

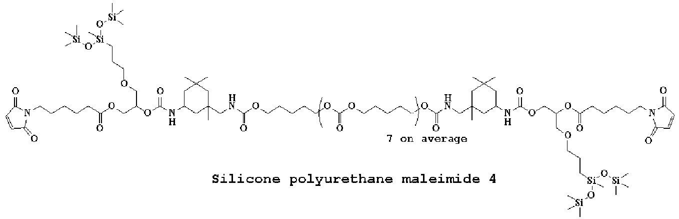

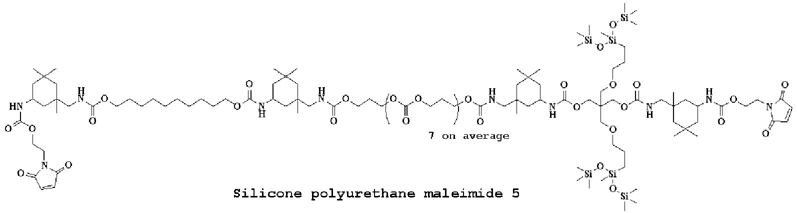

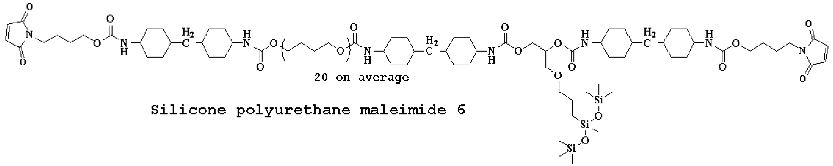

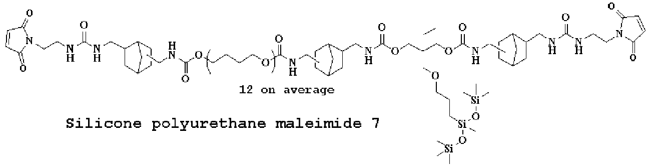

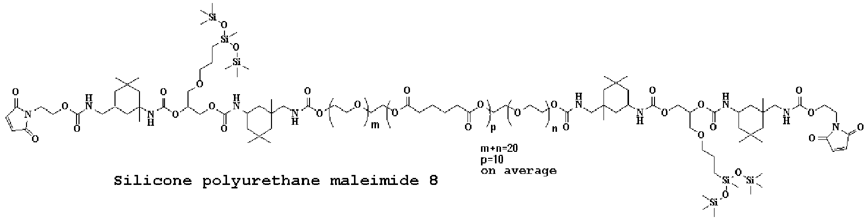

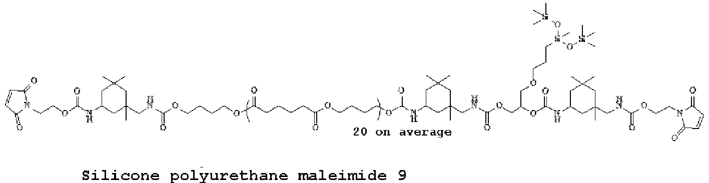

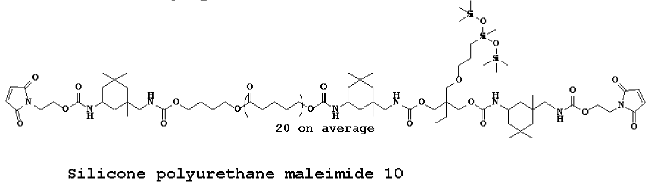

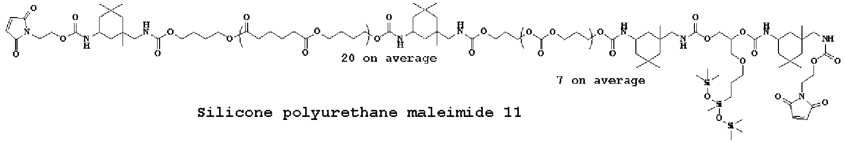

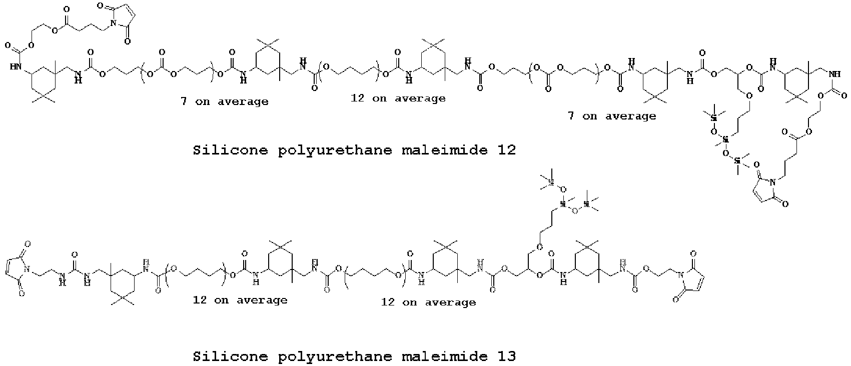

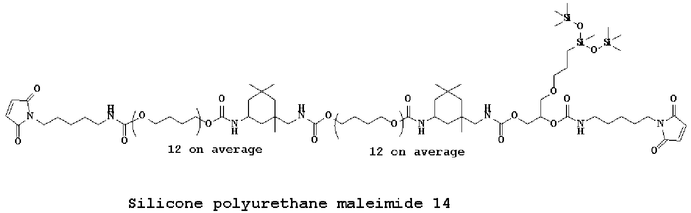

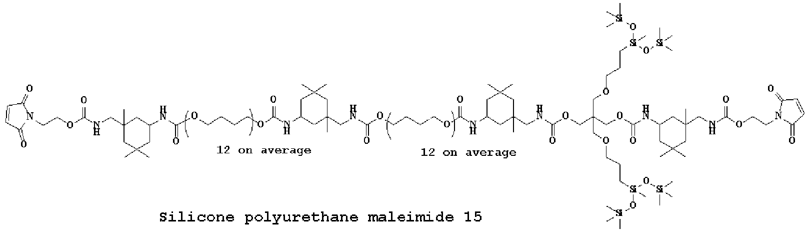

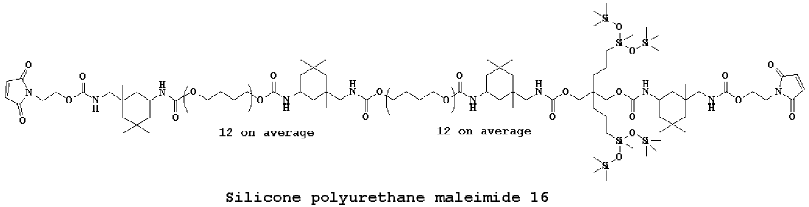

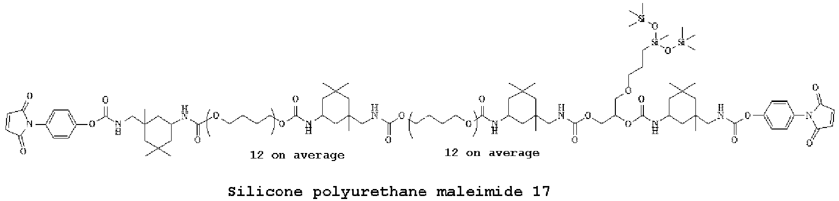

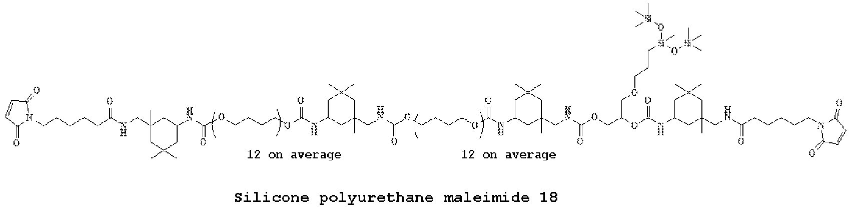

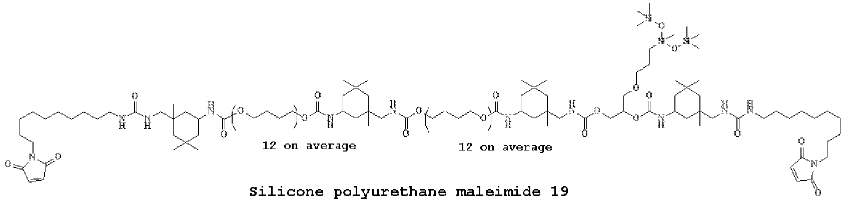

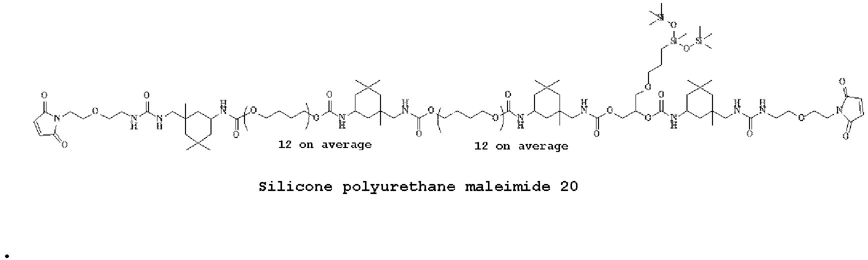

4. A stretchable film comprising a cured stretchable film material comprising the silicone polyurethane according to any one of claims 1 to 3.

5. A method for forming a stretchable film, comprising steps of:
applying a stretchable film material comprising the silicone polyurethane according to any one of claims 1 to 3; and
curing the stretchable film material by heating and/or light irradiation.

## Patentansprüche

1. Silikonpolyurethan, umfassend mindestens eine Maleimidgruppe an einer Endstelle, wobei das Silikonpolyurethan ein Reaktionsprodukt aus einer Diolverbindung mit einer kurzkettigen Silikon-Einheit, ausgewählt aus den nachstehenden Formeln (A1) bis (A9), einem weichen Segment, ausgewählt aus den folgenden Formeln (B1) bis (B6), wobei die Anzahl der in Klammern gesetzten Wiederholungseinheiten in (B1) bis (B6) 1 bis 200 beträgt, eine Isocyanatverbindung, ausgewählt aus den Formeln (C1) bis (C2), wobei "t" eine ganze Zahl von 1 oder mehr darstellt, und eine Maleimidverbindung, ausgewählt aus den folgenden Formeln (D1) bis (D6):

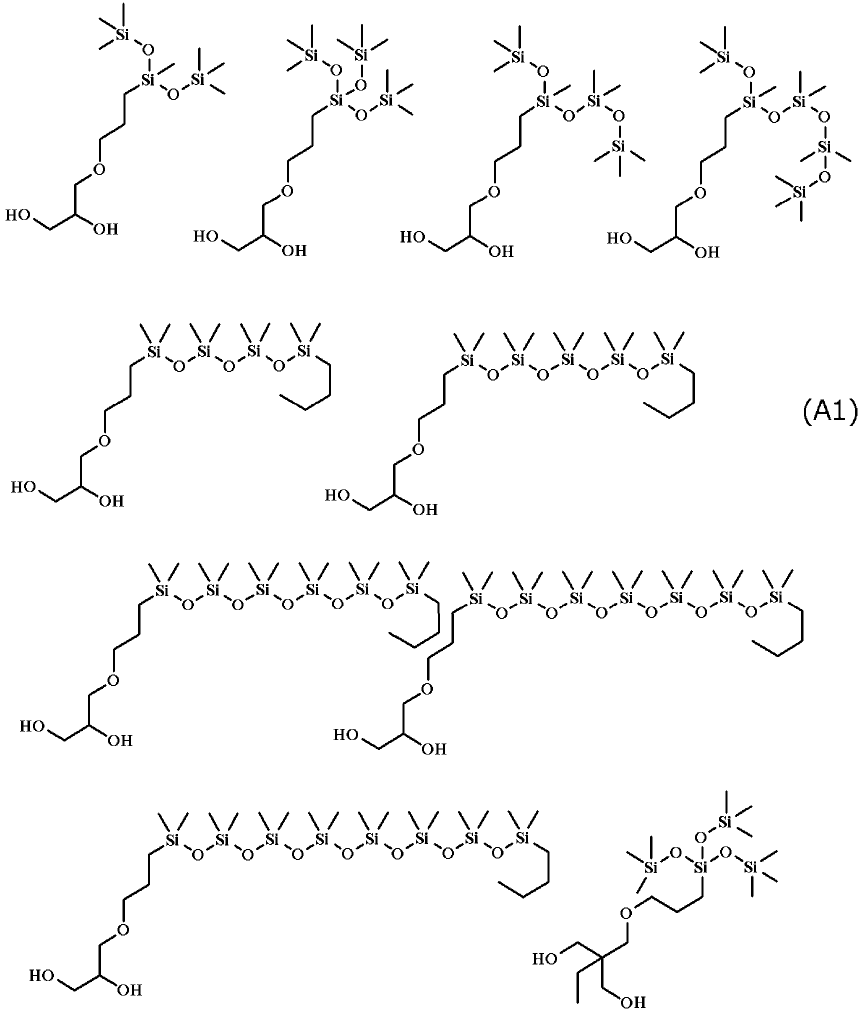

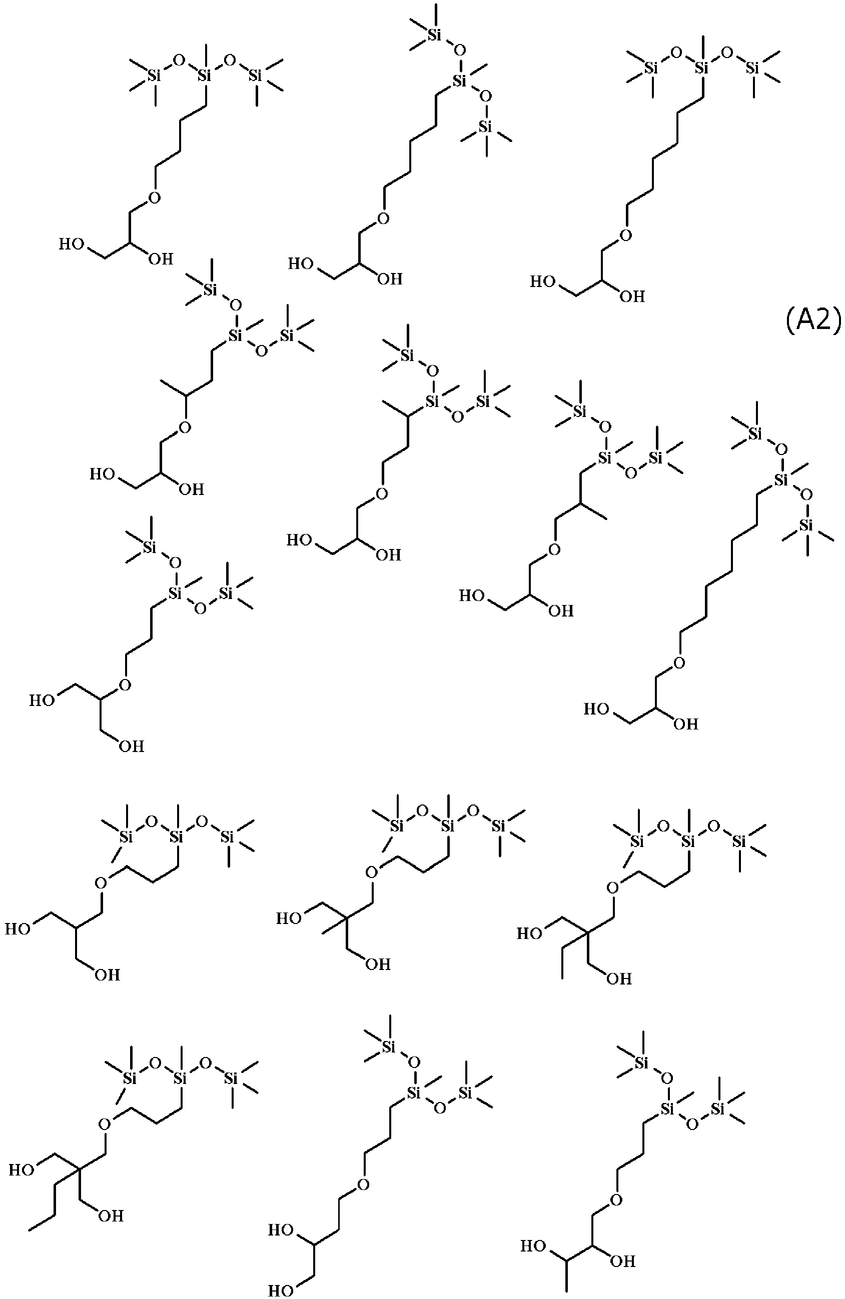

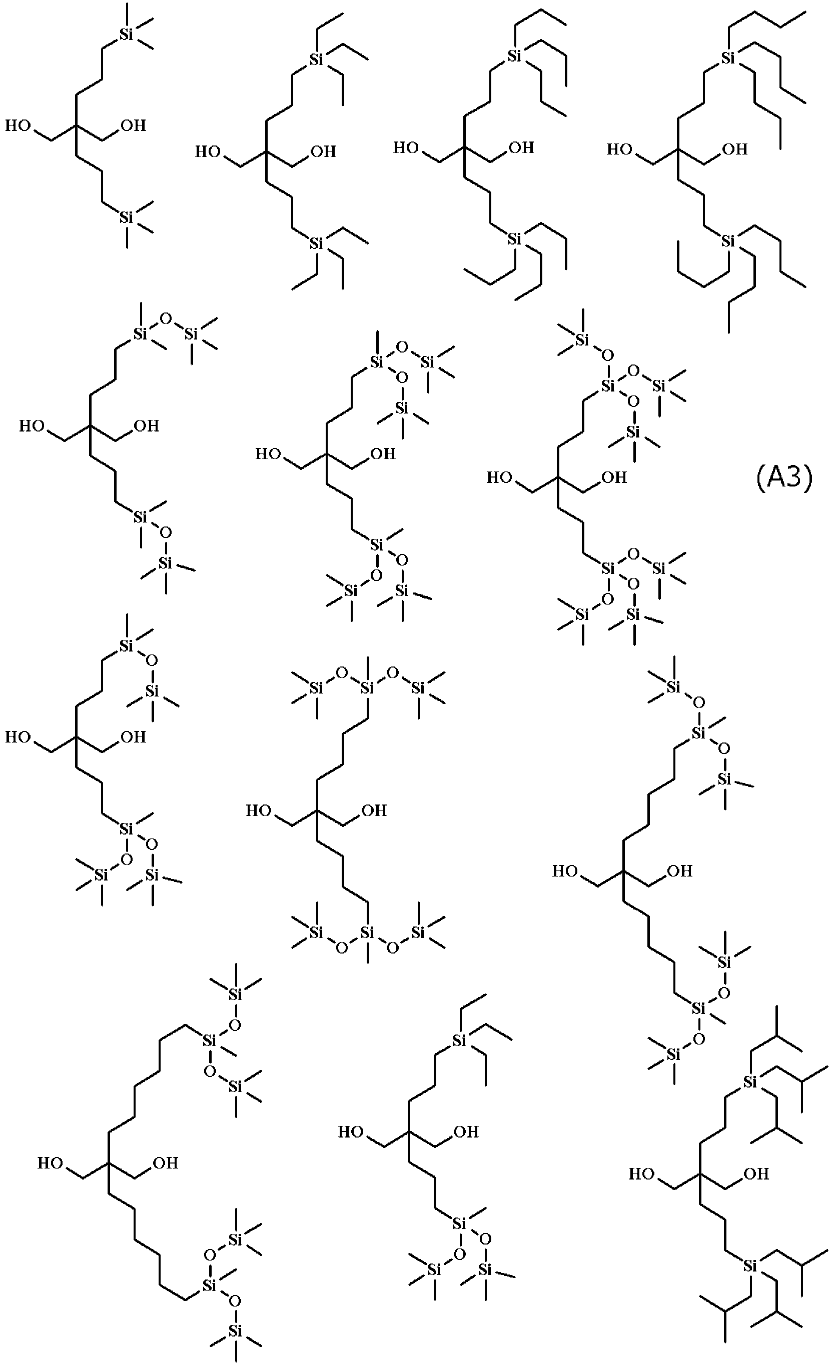

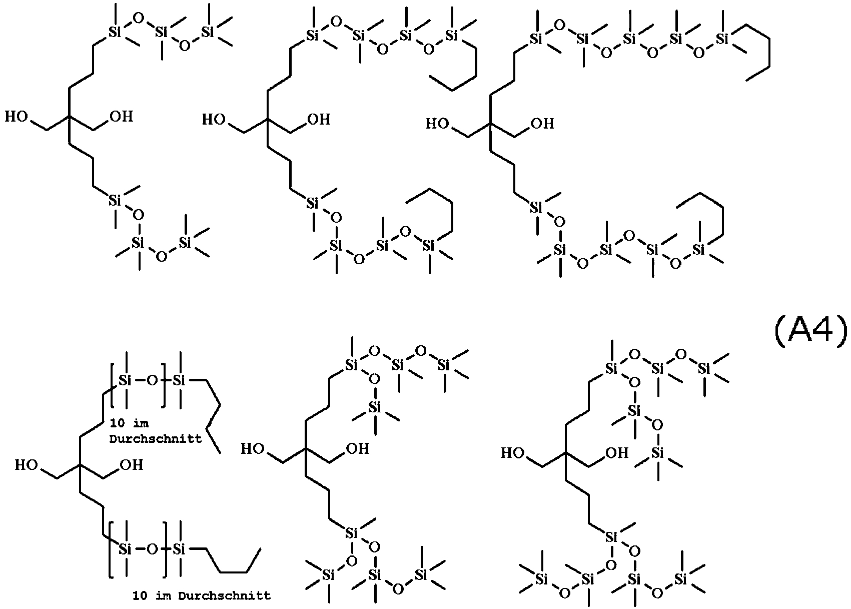

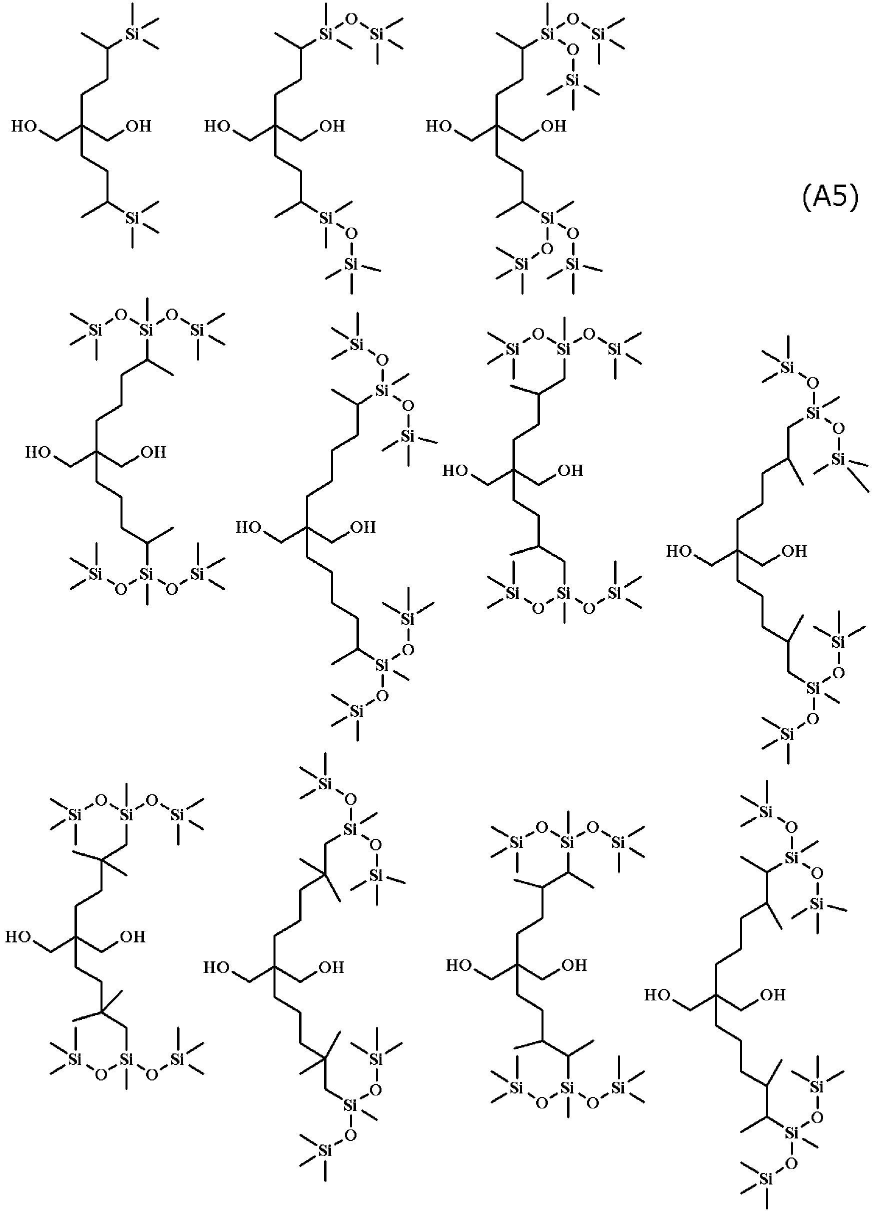

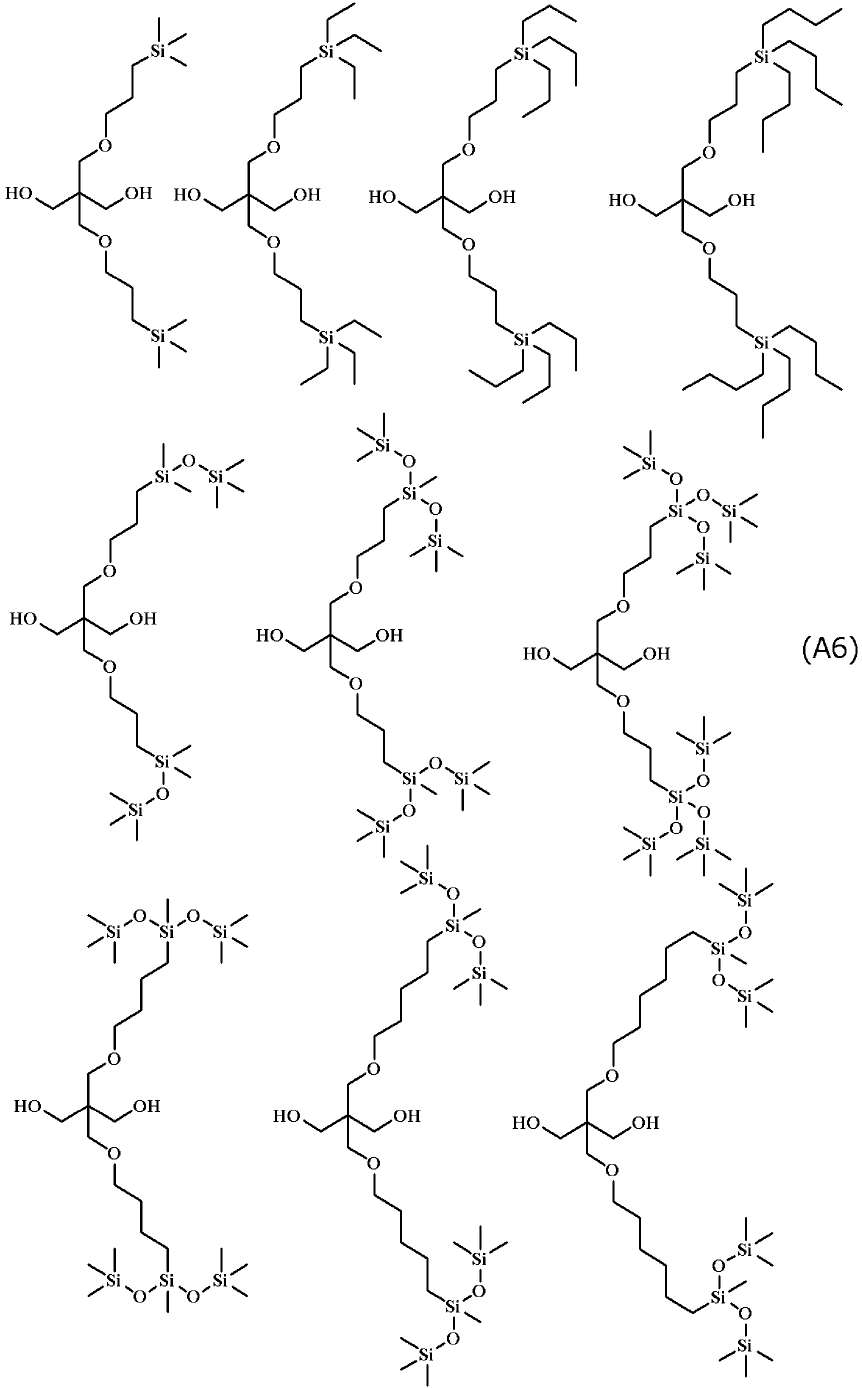

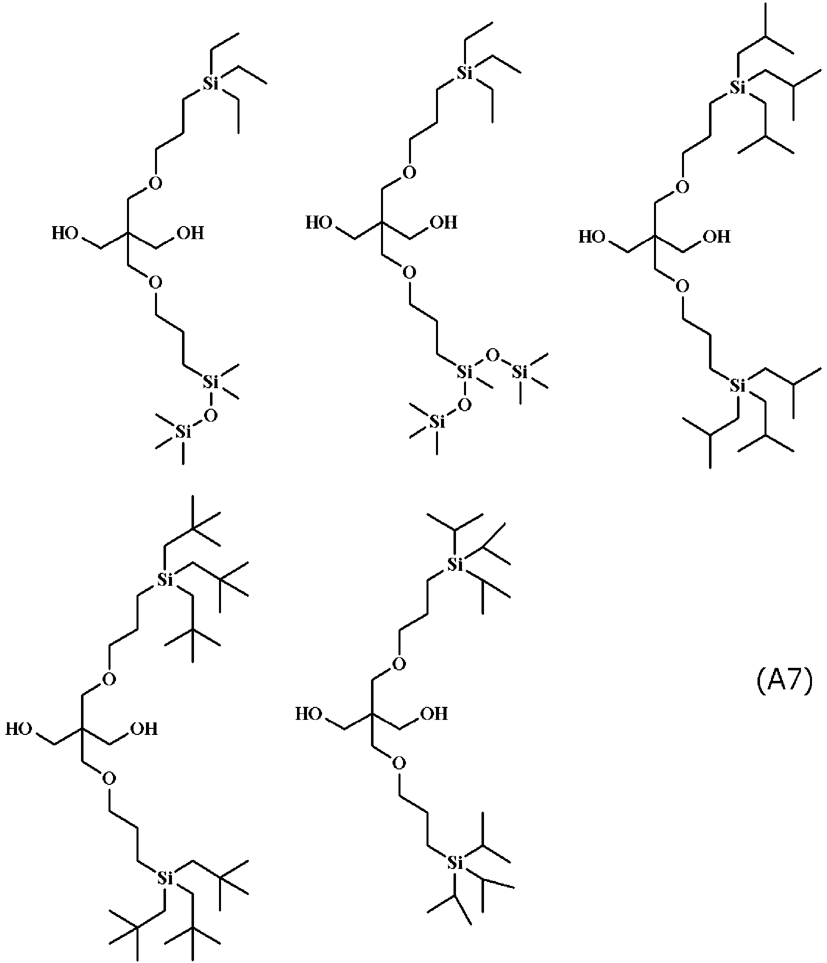

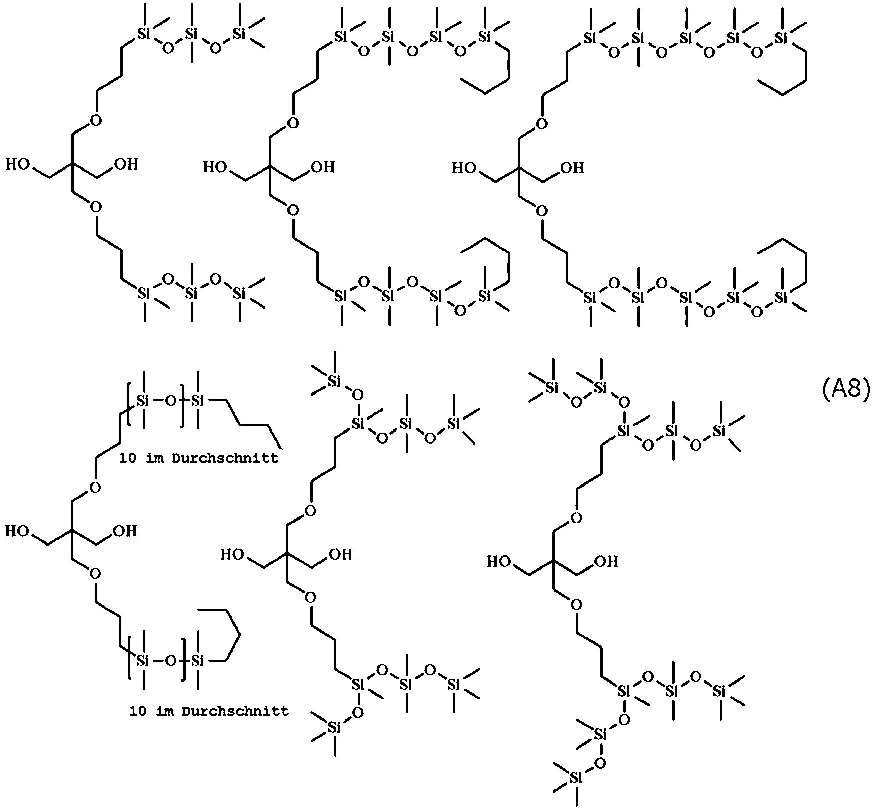

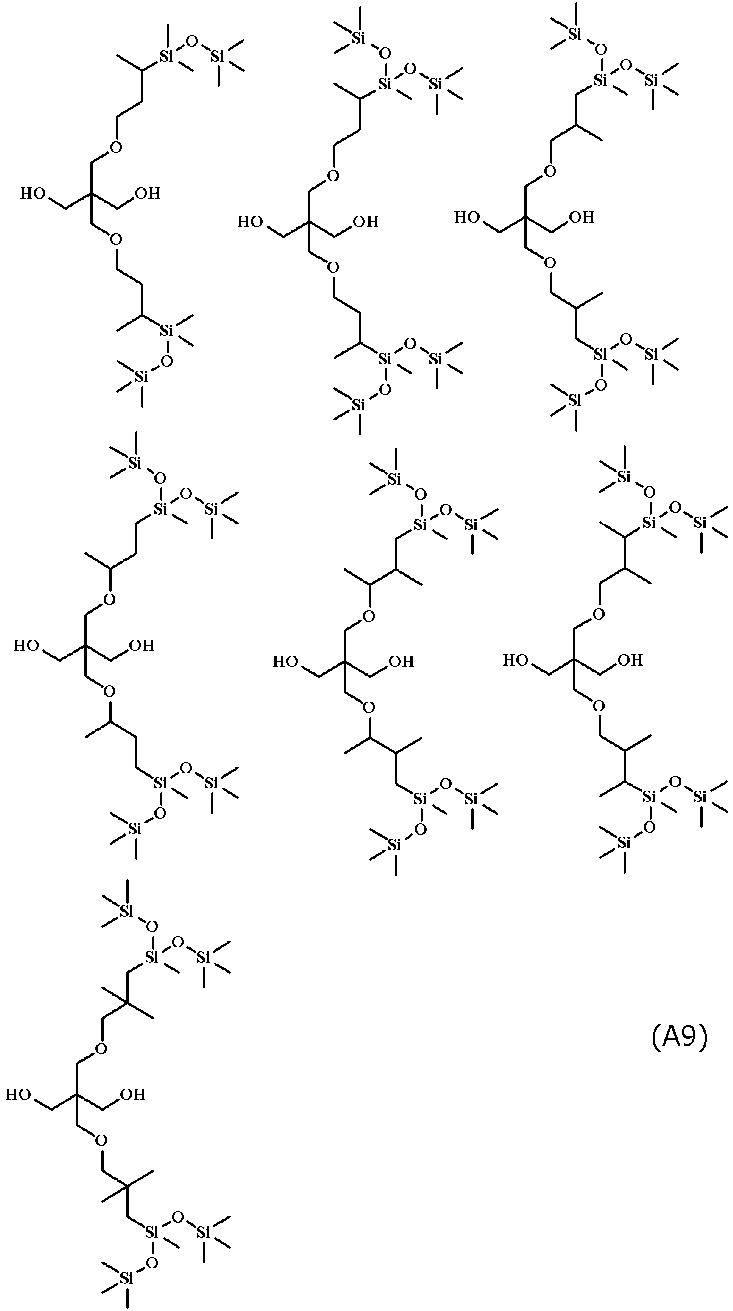

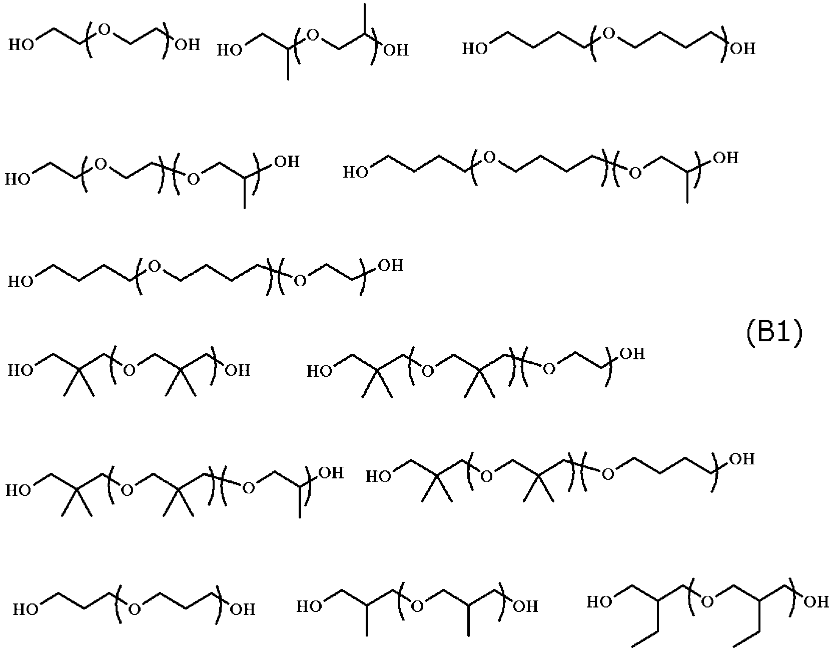

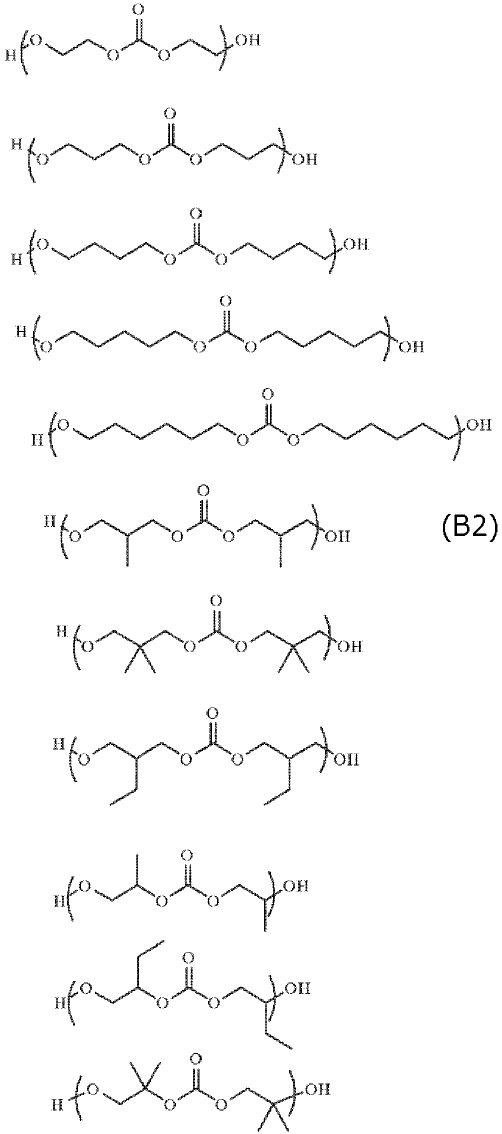

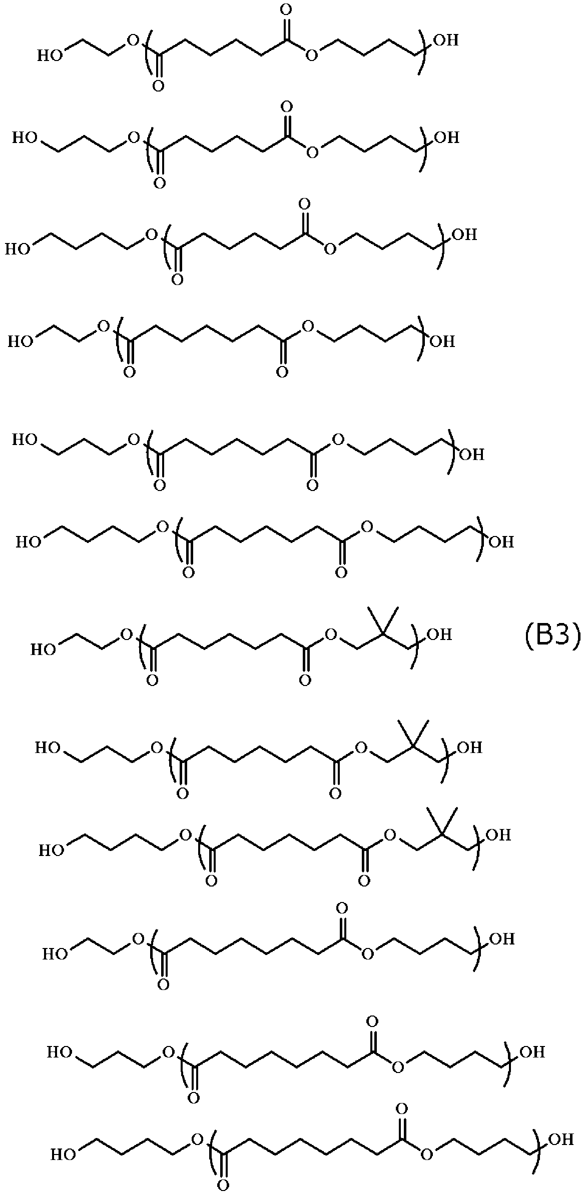

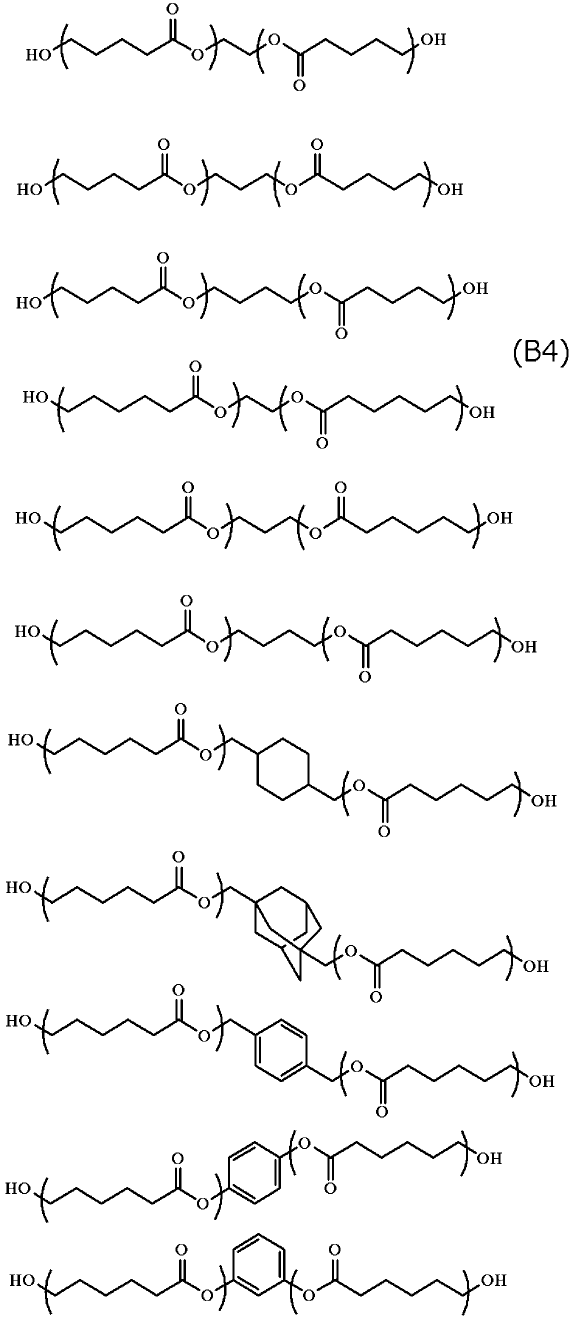

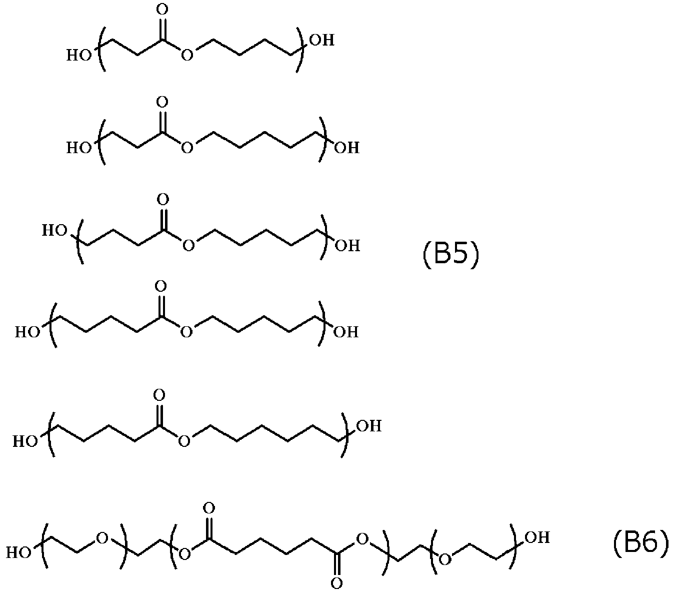

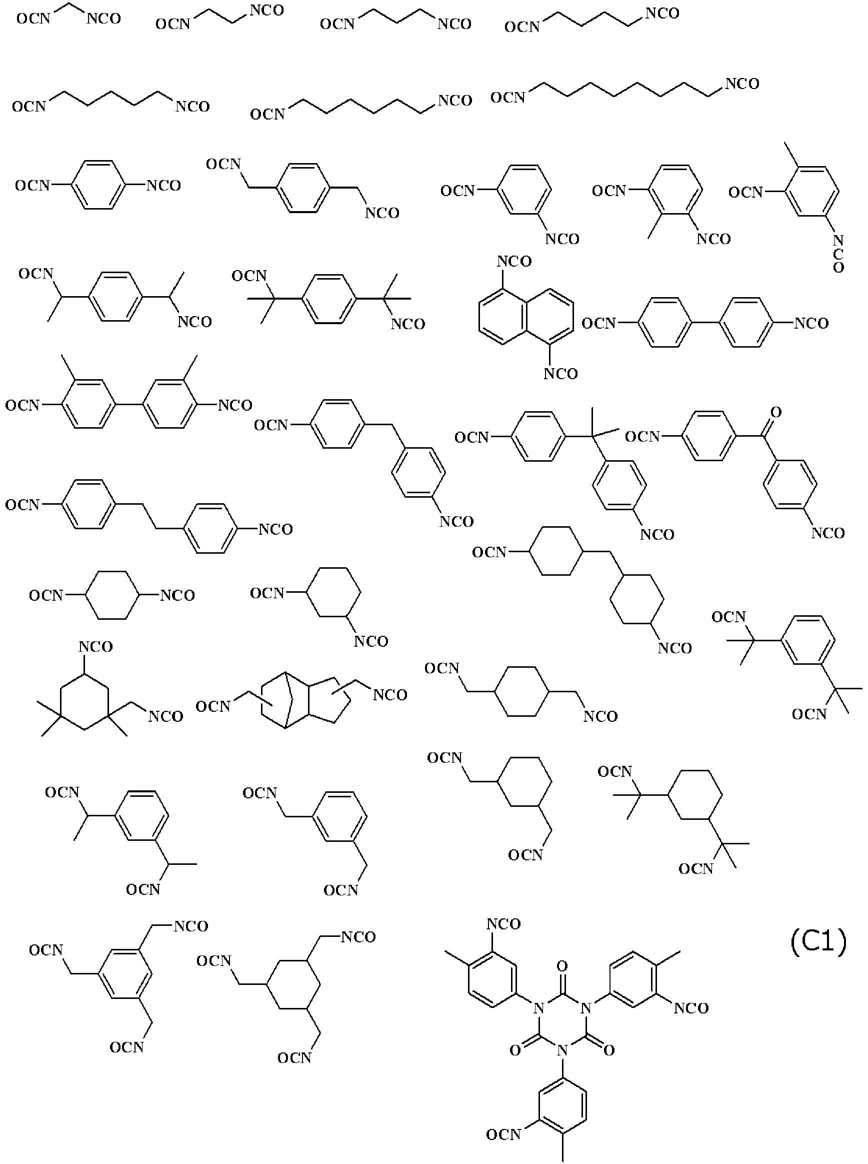

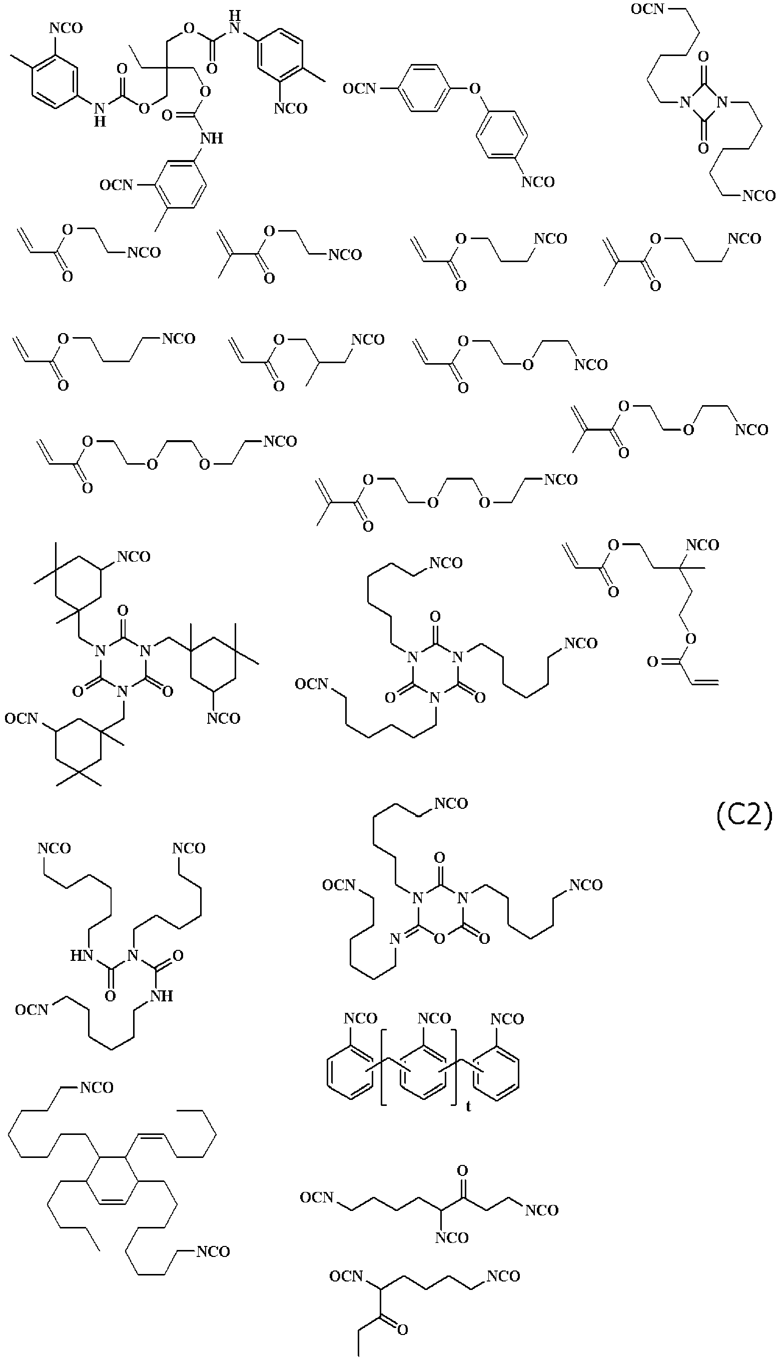

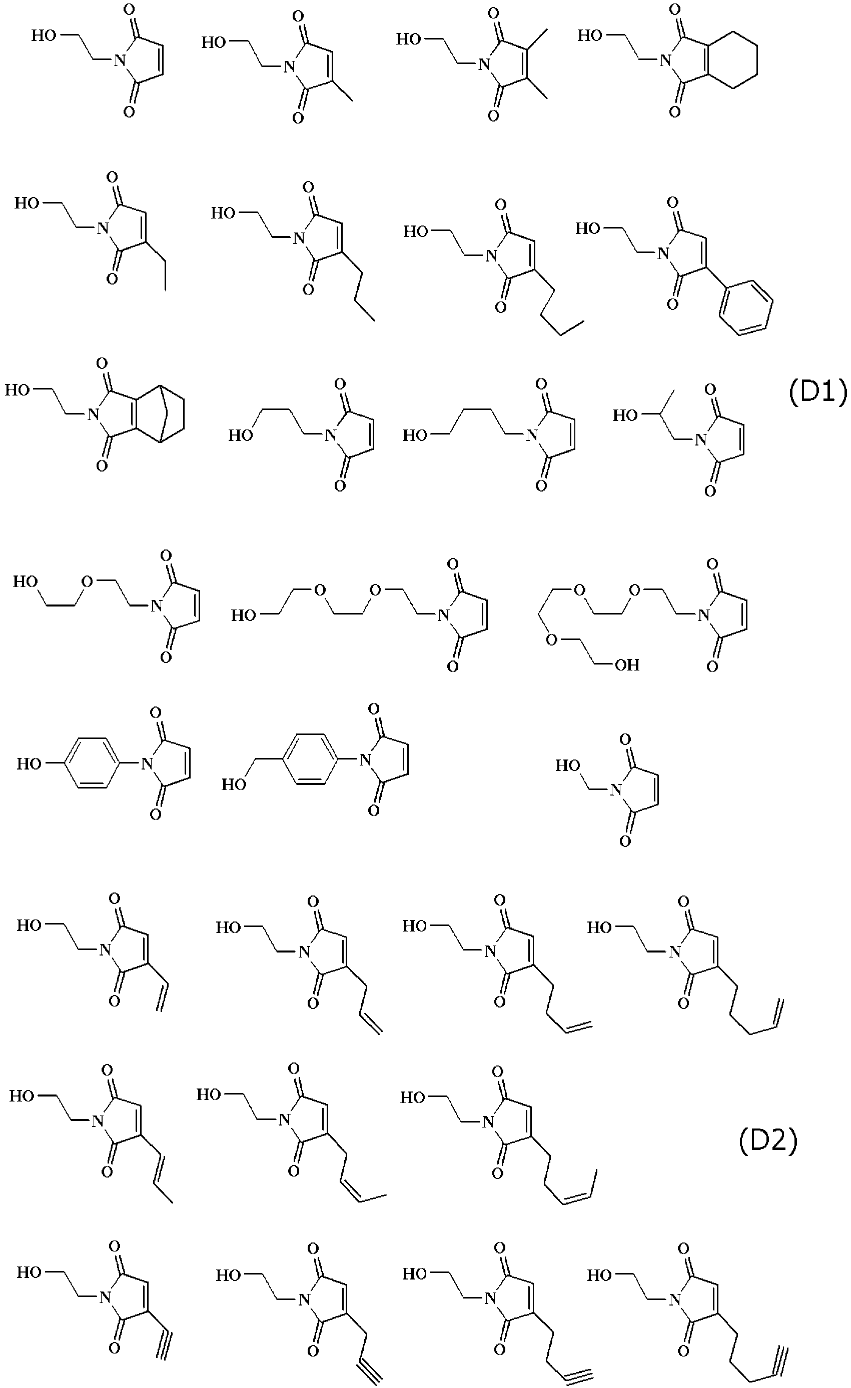

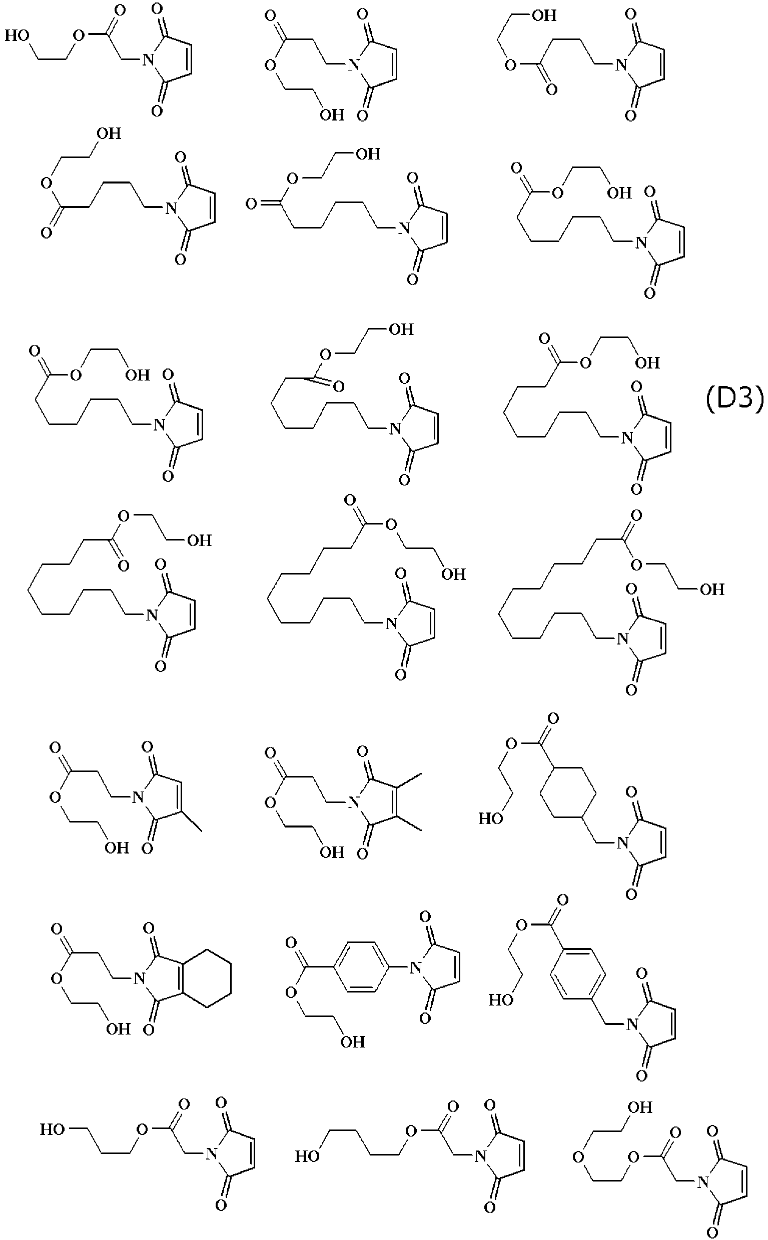

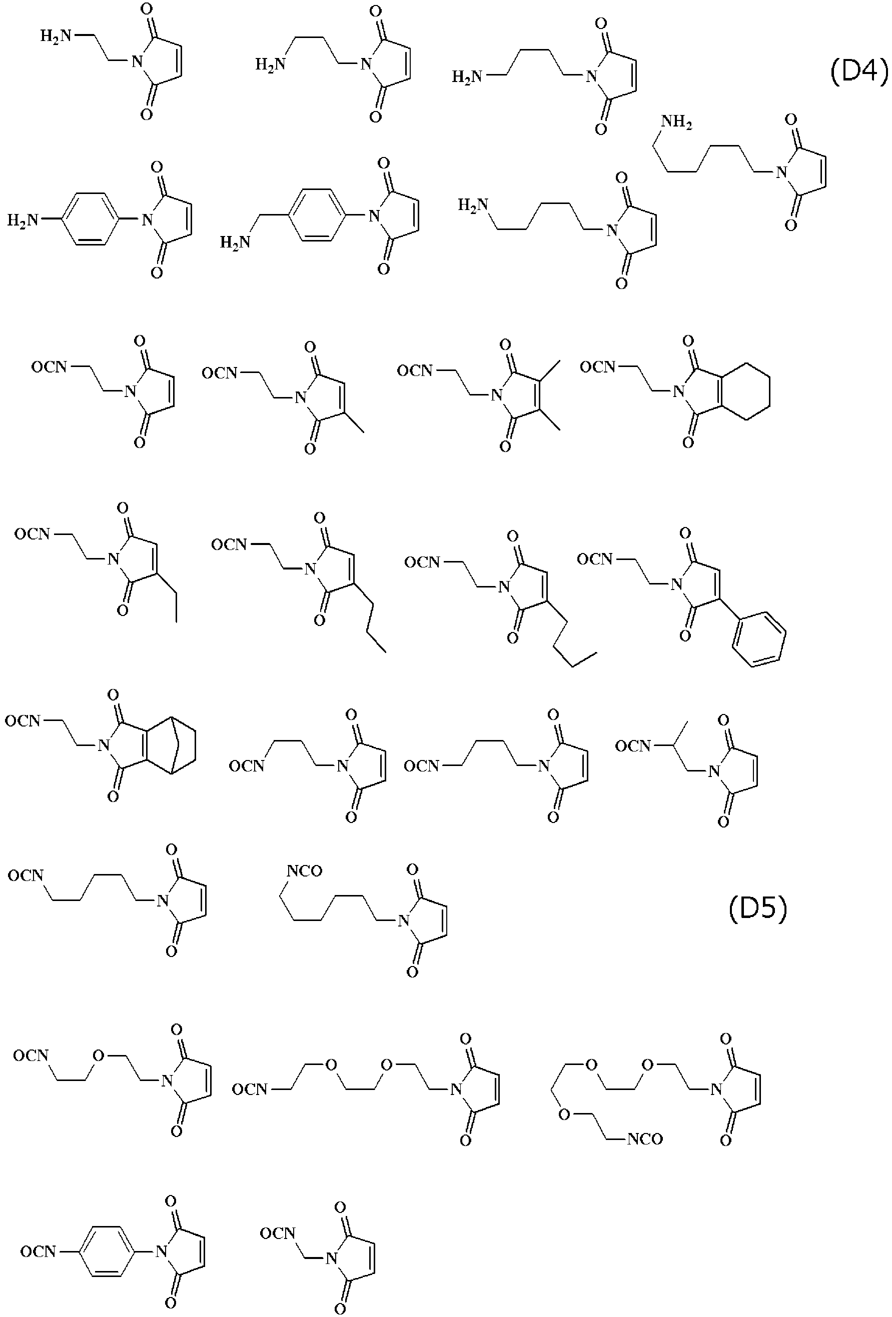

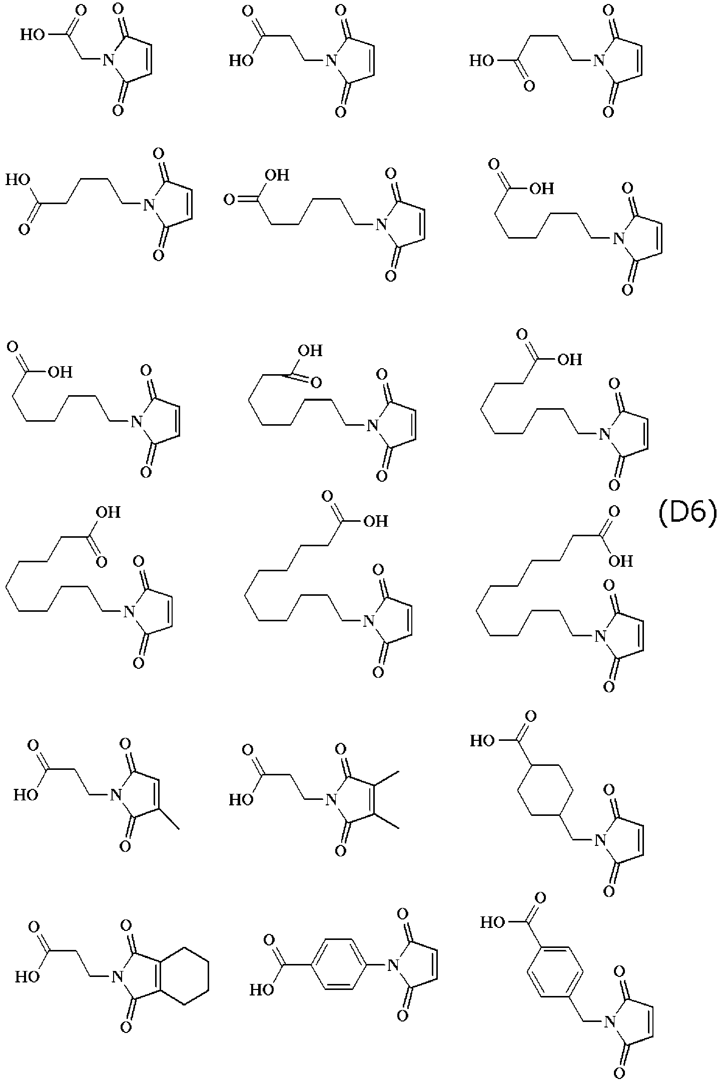

2. Silikonpolyurethan gemäß Anspruch 1, wobei das Silikonpolyurethan durch das folgende Silikonpolyurethanmaleimid 1 gekennzeichnet ist und ein gewichtsmittleres Molekulargewicht und eine Dispersität von Mw=5.400 und Mw/Mn=1,65 aufweist:

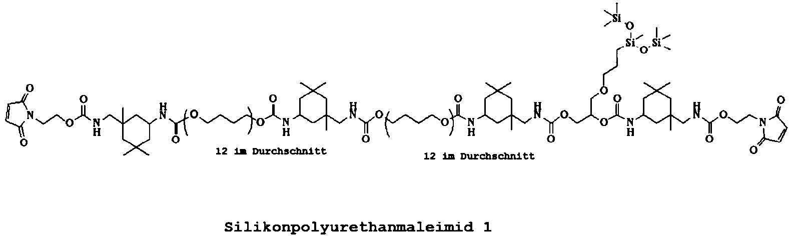

3. Silikonpolyurethan gemäß Anspruch 1, wobei das Silikonpolyurethan durch die folgenden Silikonpolyurethanmaleimide 2 bis 20 gekennzeichnet ist:

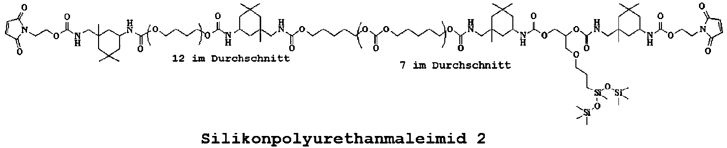

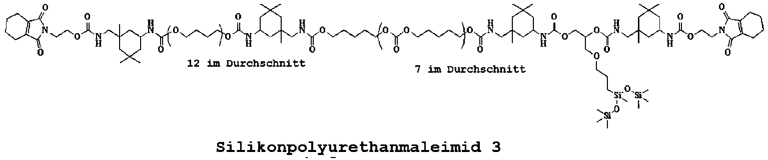

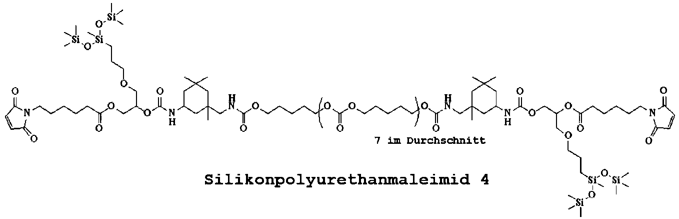

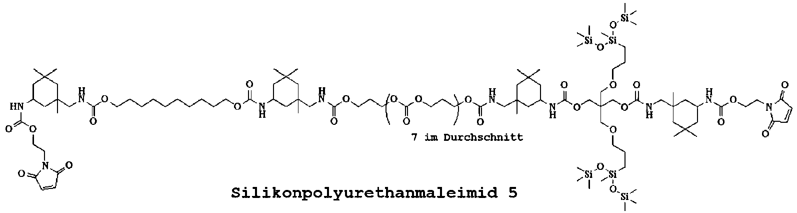

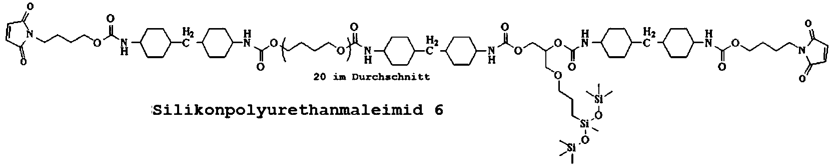

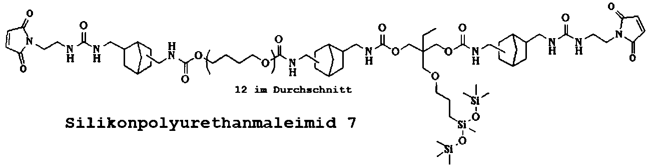

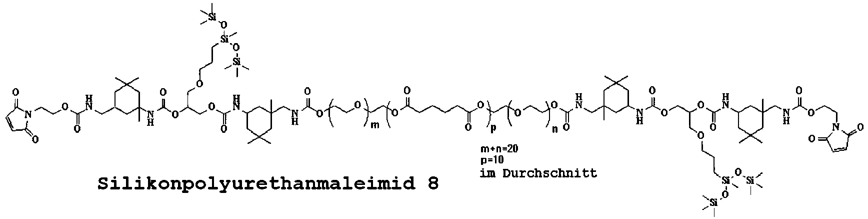

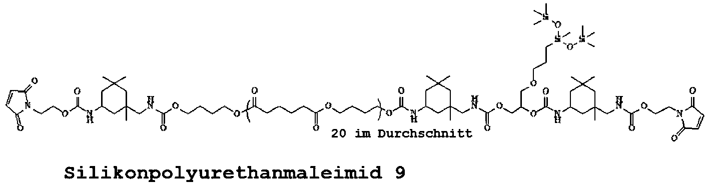

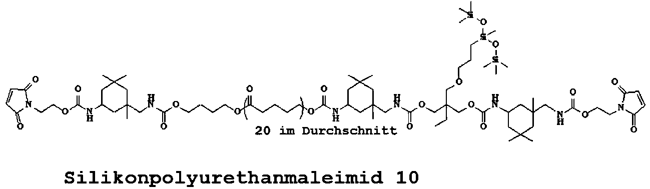

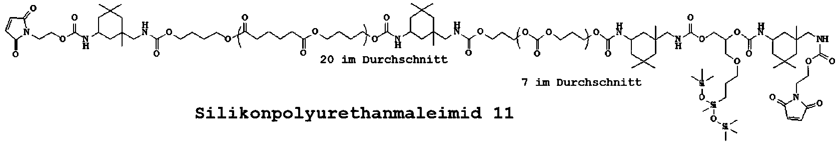

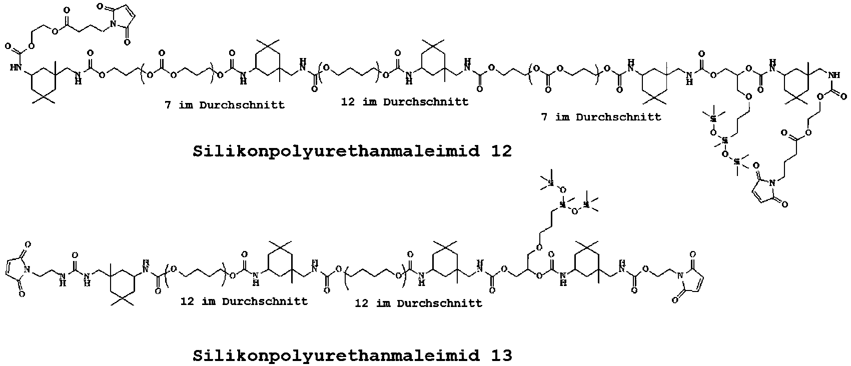

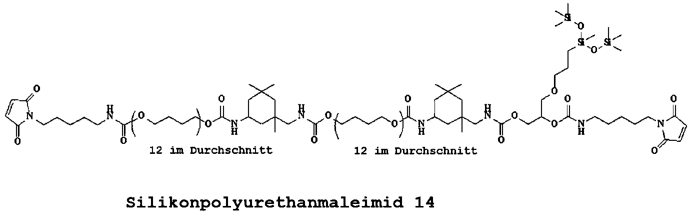

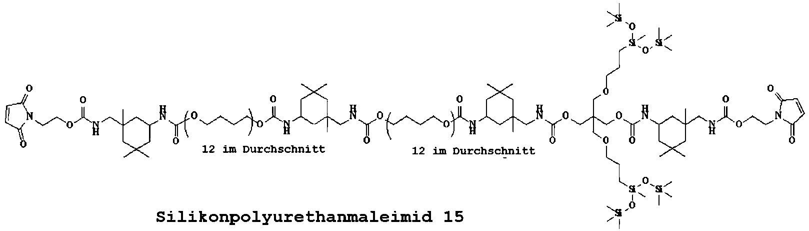

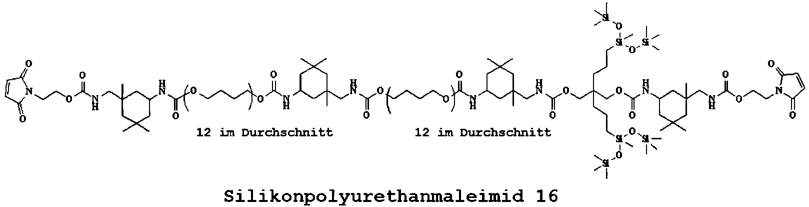

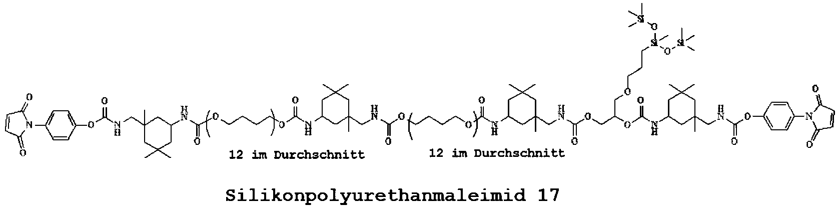

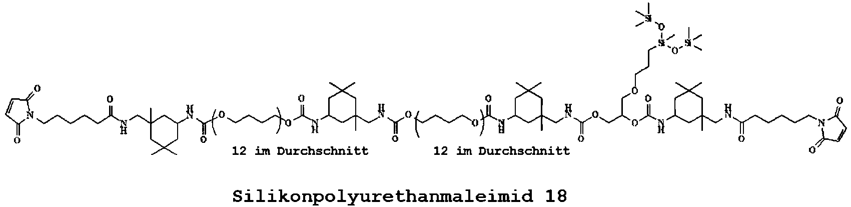

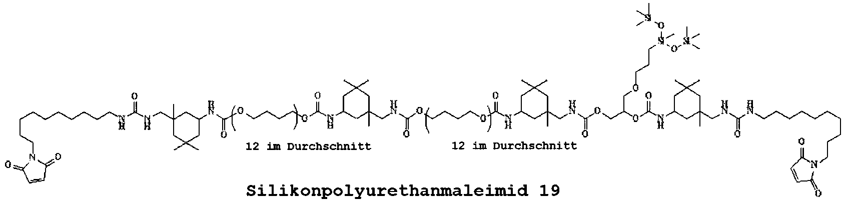

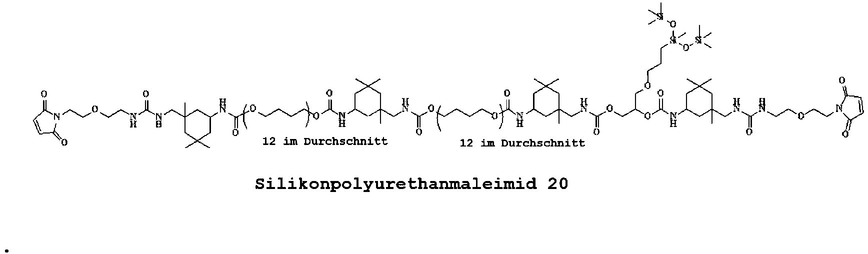

4. Dehnbare Folie, umfassend ein gehärtetes dehnbares Folienmaterial, umfassend das Silikonpolyurethan gemäß einem der Ansprüche 1 bis 3.

5. Verfahren zur Herstellung einer dehnbaren Folie, umfassend die folgenden Schritte:
Aufbringen eines dehnbaren Folienmaterials, umfassend das Silikonpolyurethan gemäß einem der Ansprüche 1 bis 3; und
Aushärten des dehnbaren Folienmaterials durch Erhitzen und/oder Bestrahlung mit Licht.

## Revendications

1. Polyuréthane à base de silicone terminé au moins par un groupe maléimide, le polyuréthane à base de silicone étant un produit de réaction d'un composé diol ayant un groupe latéral silicone à chaîne courte choisi parmi les formules (A1) à (A9) ci-dessous, un segment souple choisi parmi les formules (B1) à (B6) ci-dessous, dans lequel le nombre de motifs de répétition entre parenthèses dans (B1) à (B6) est compris entre 1 et 200, un composé isocyanate choisi parmi les formules (C1) à (C2), dans lesquelles « t » représente un nombre entier supérieur ou égal à 1, et un composé maléimide choisi parmi les formules (D1) à (D6) ci-dessous:

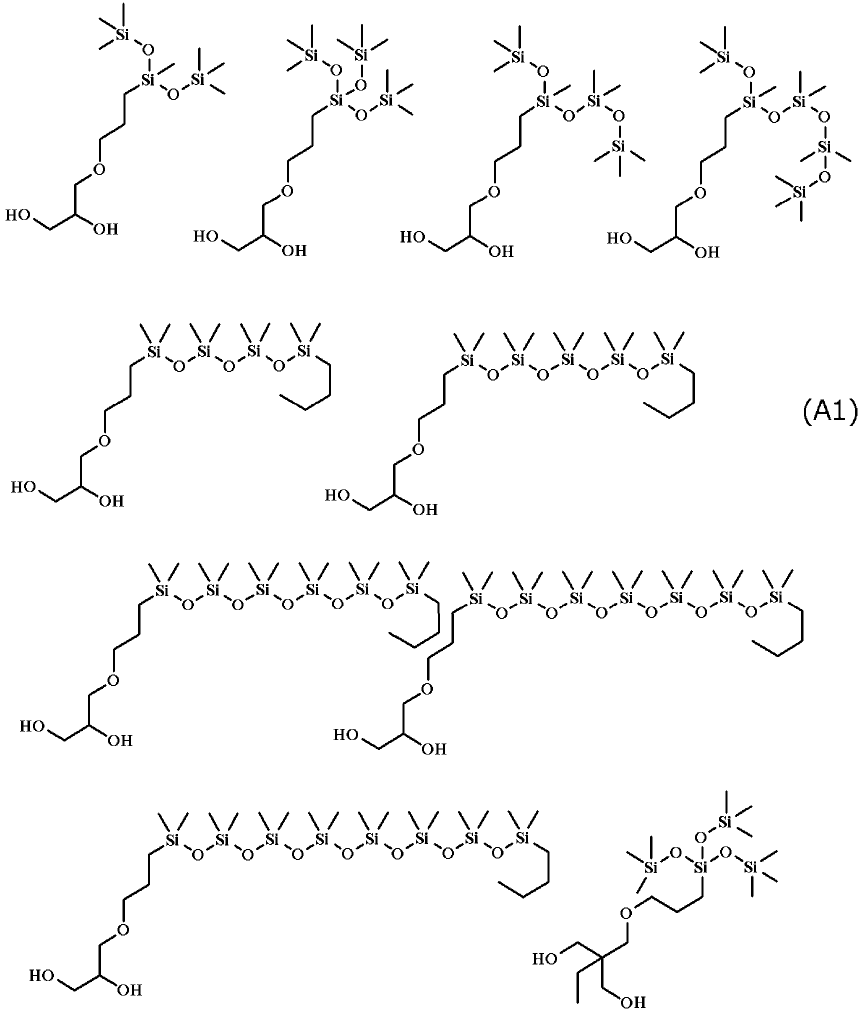

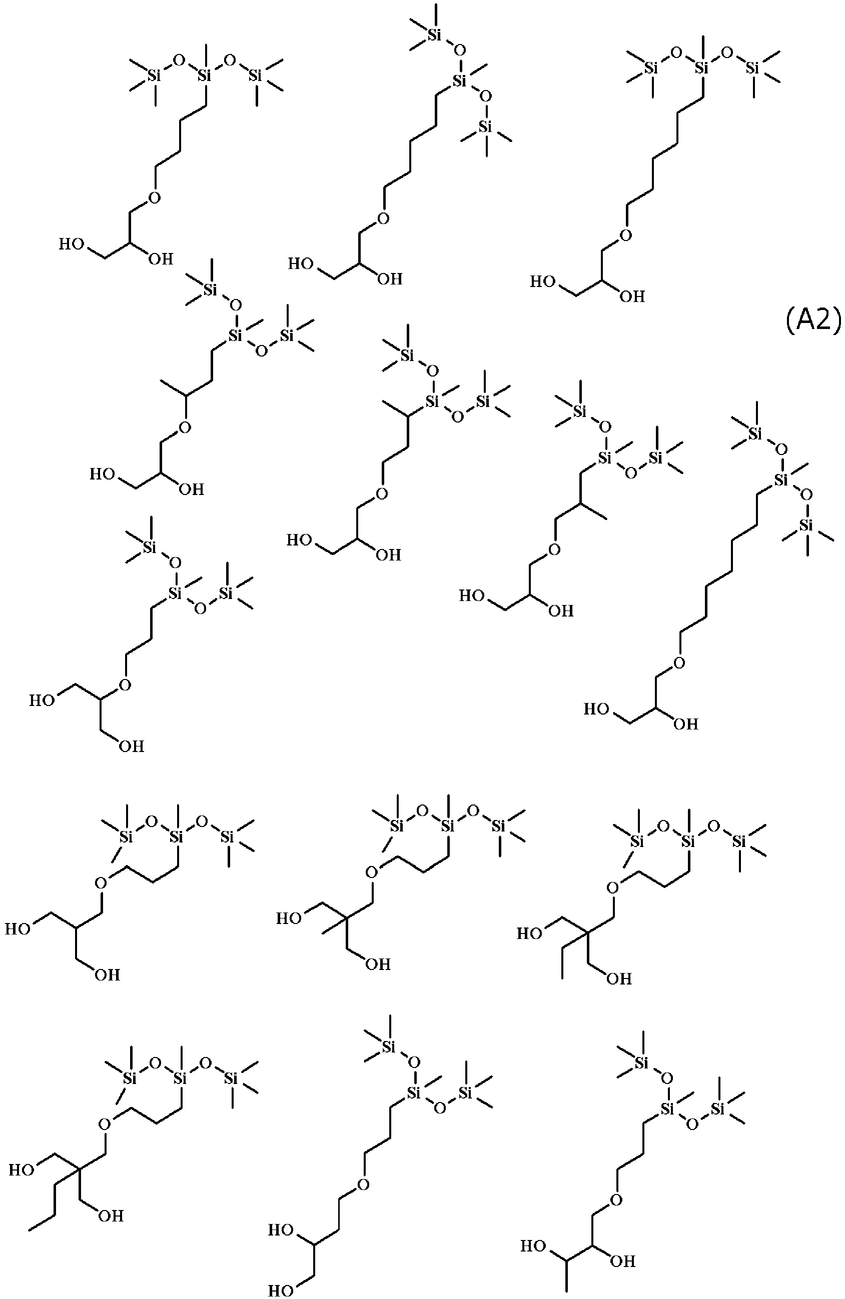

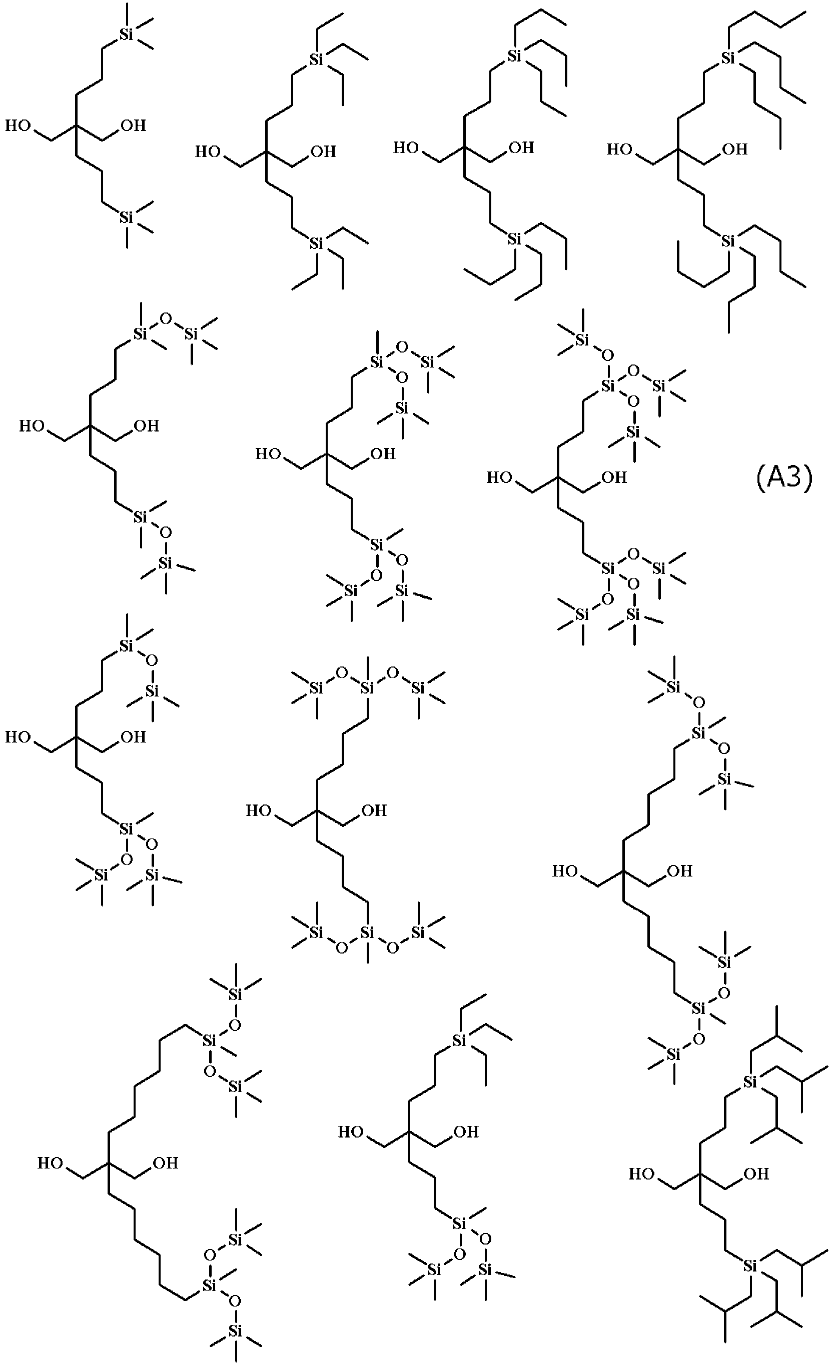

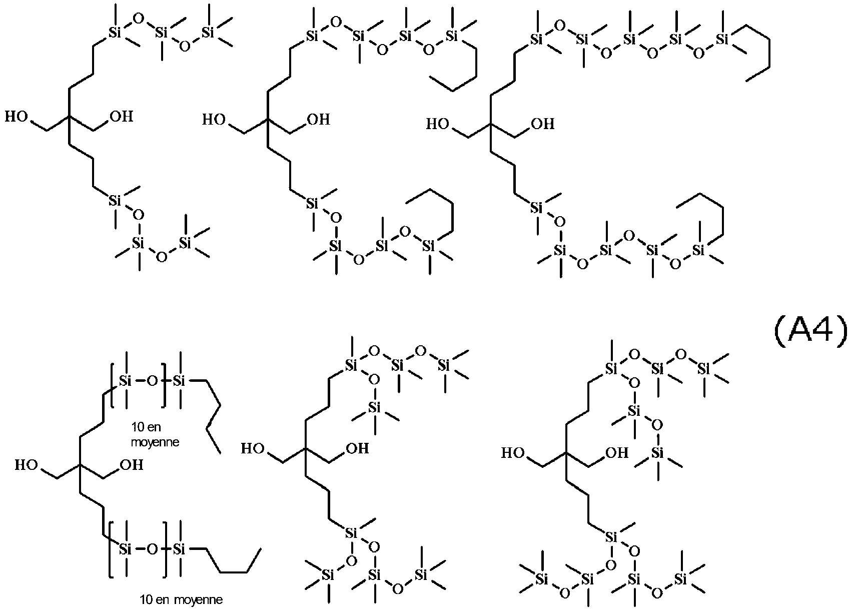

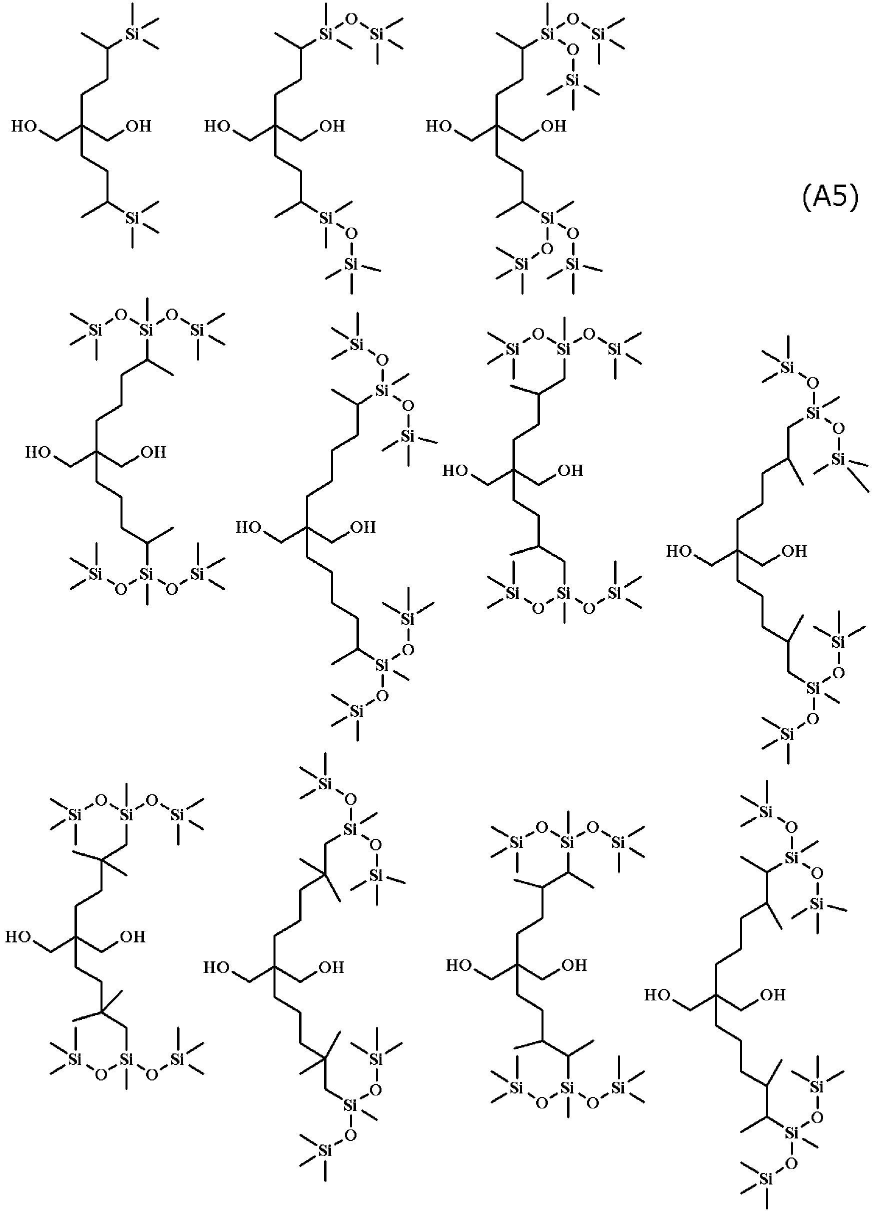

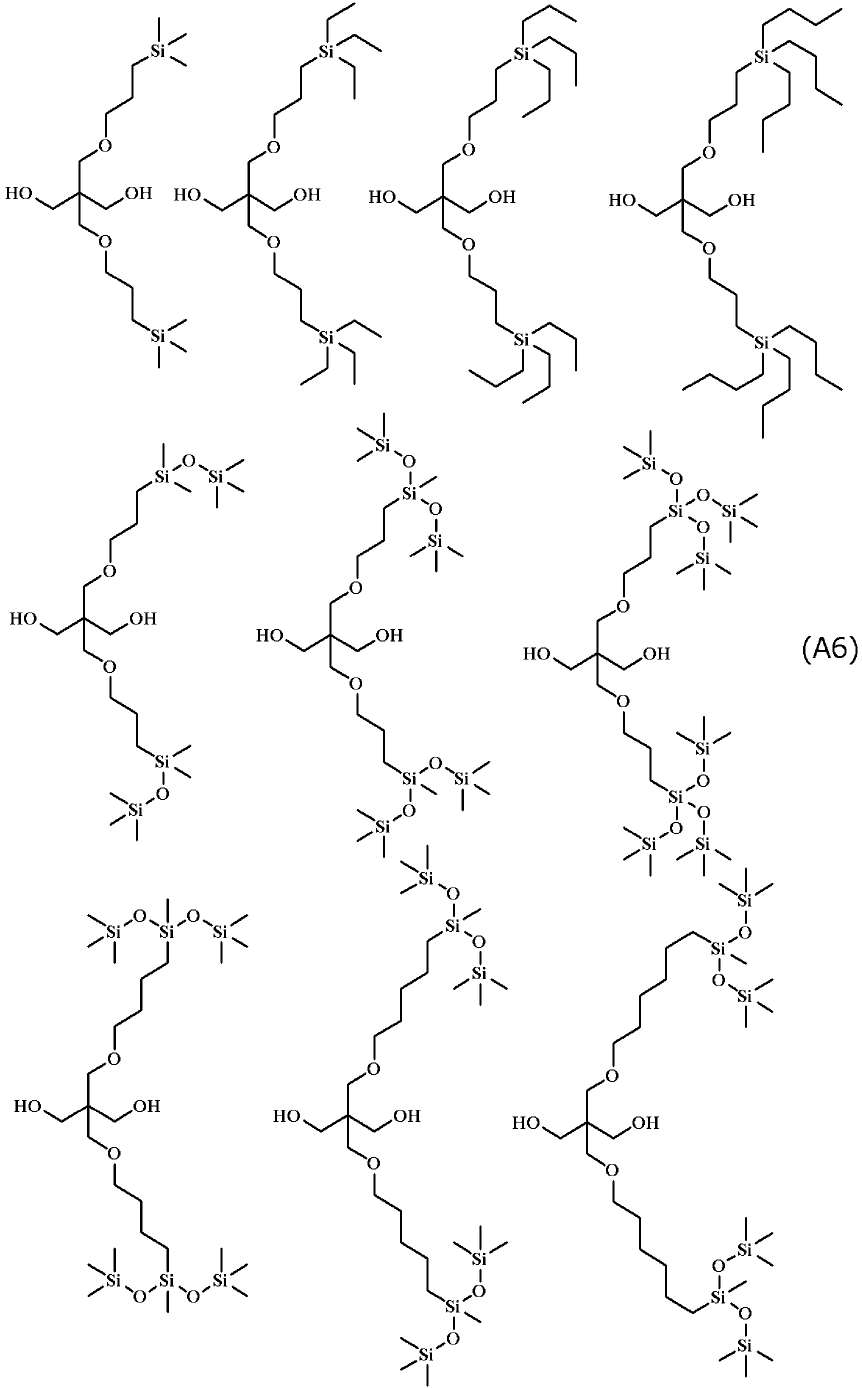

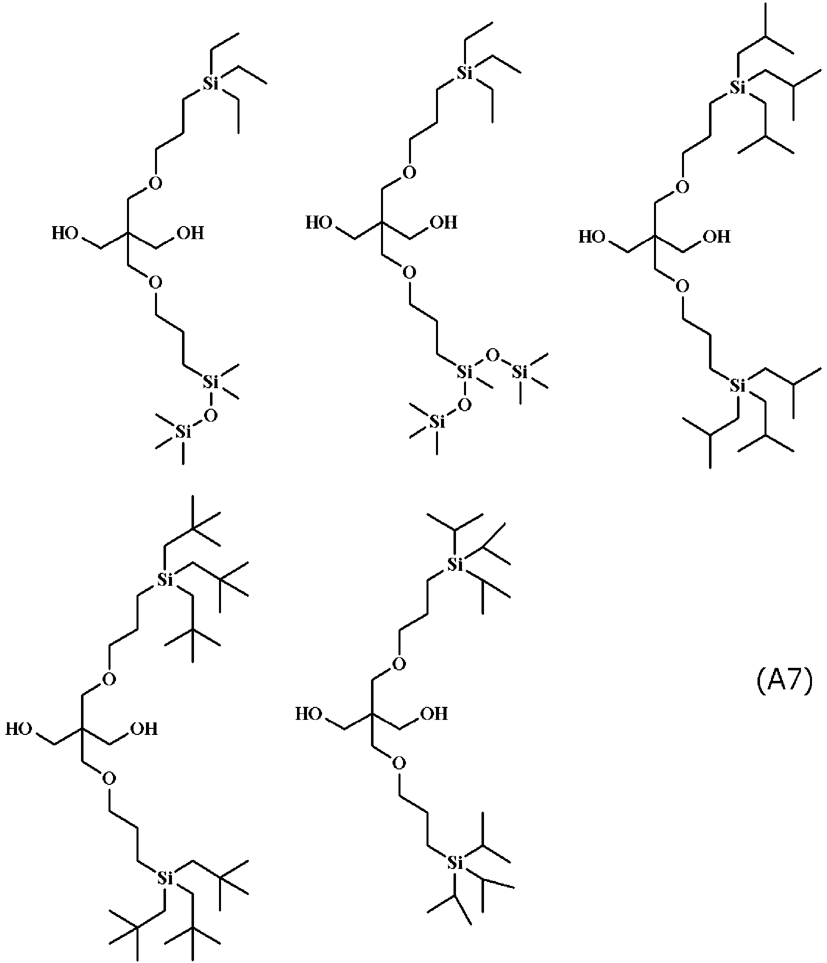

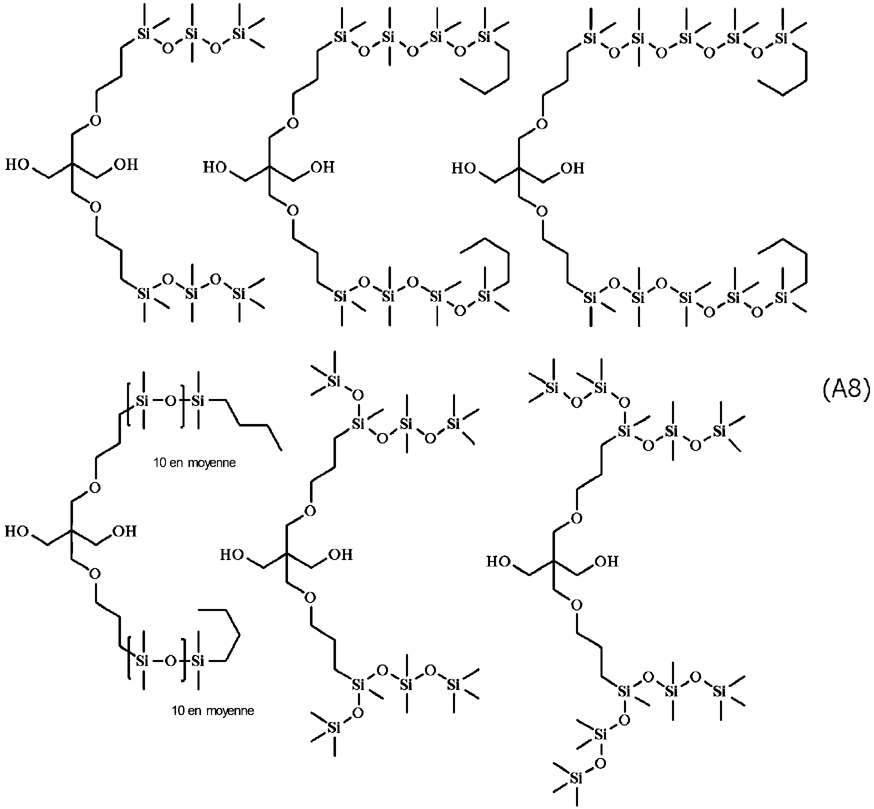

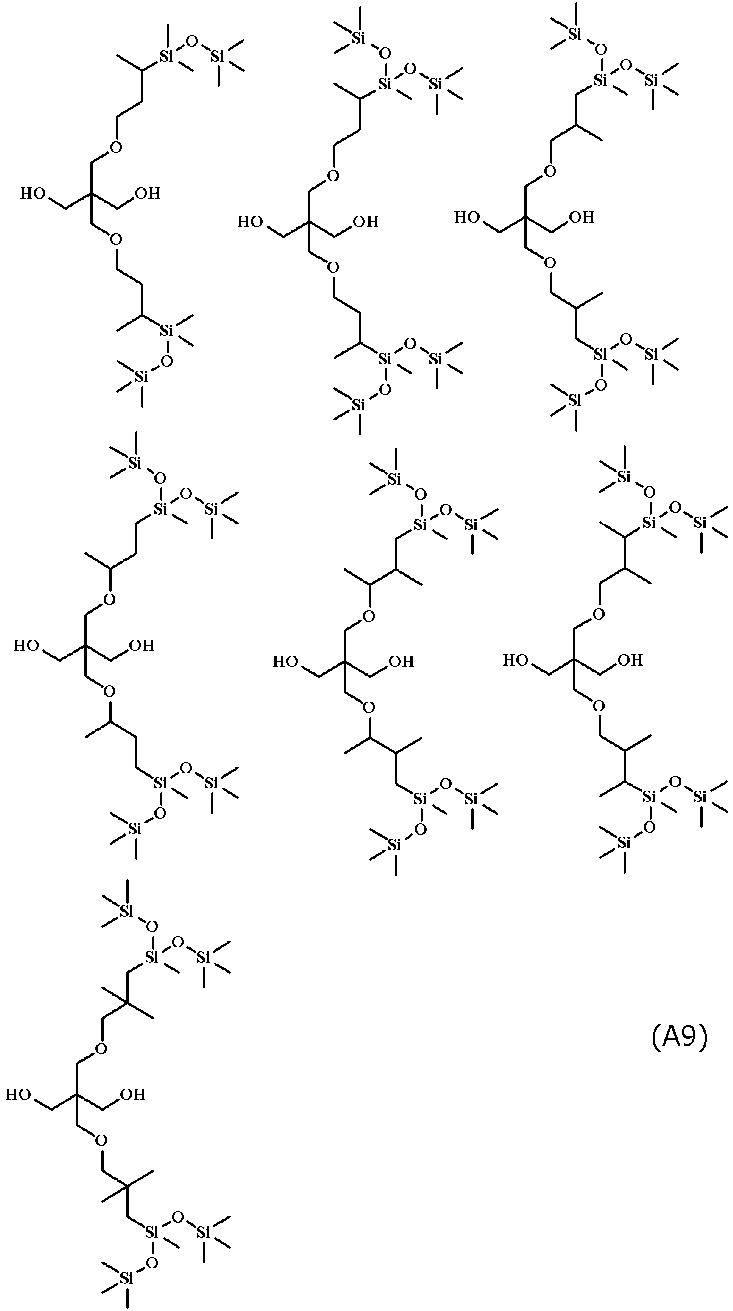

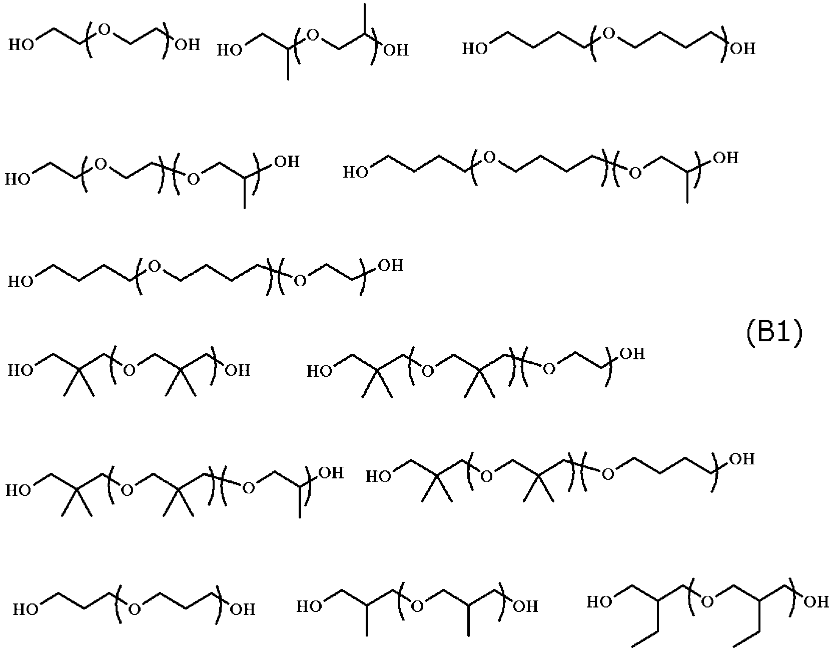

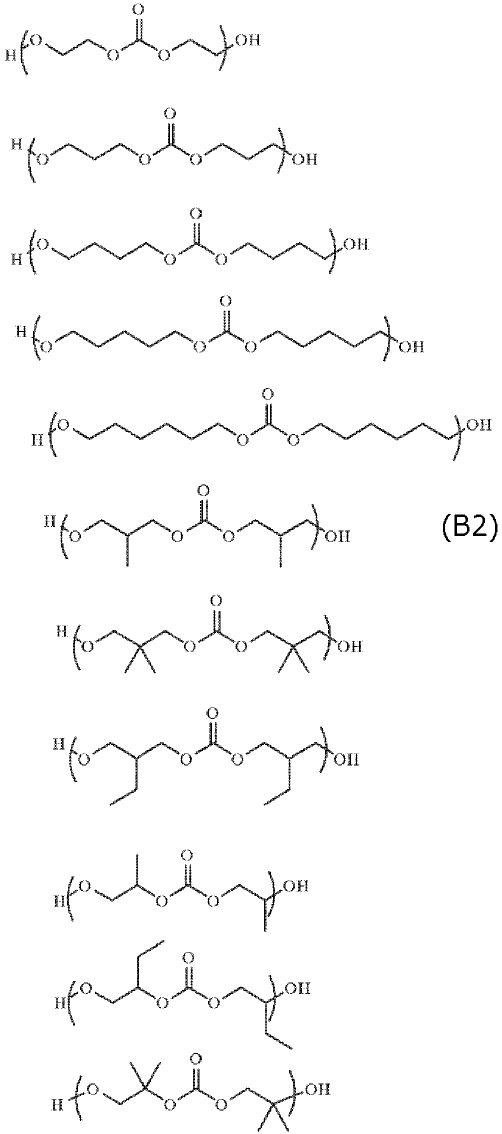

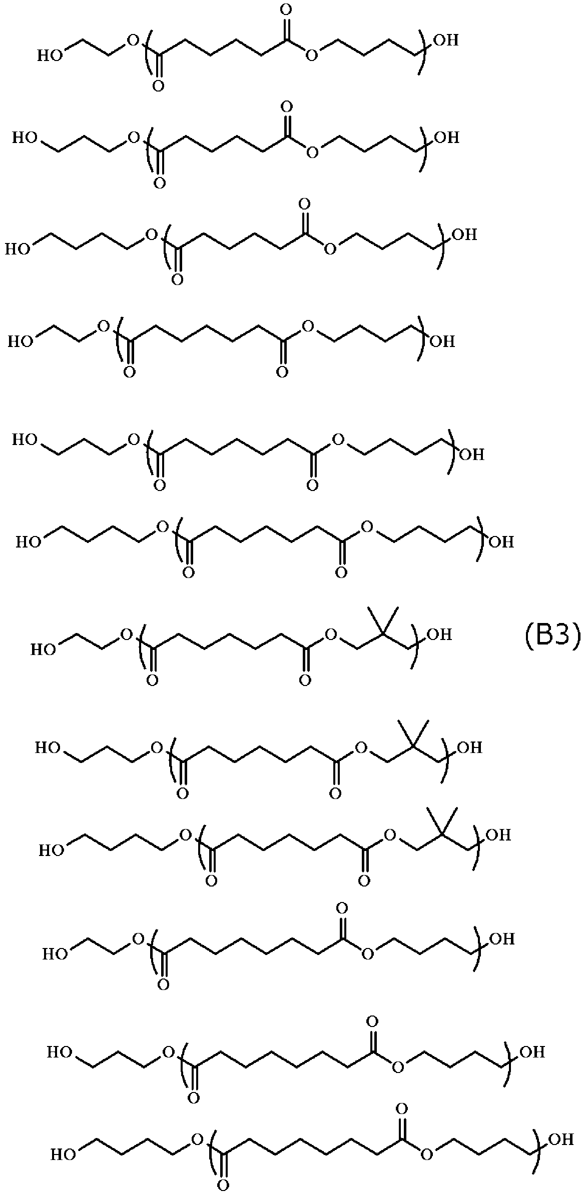

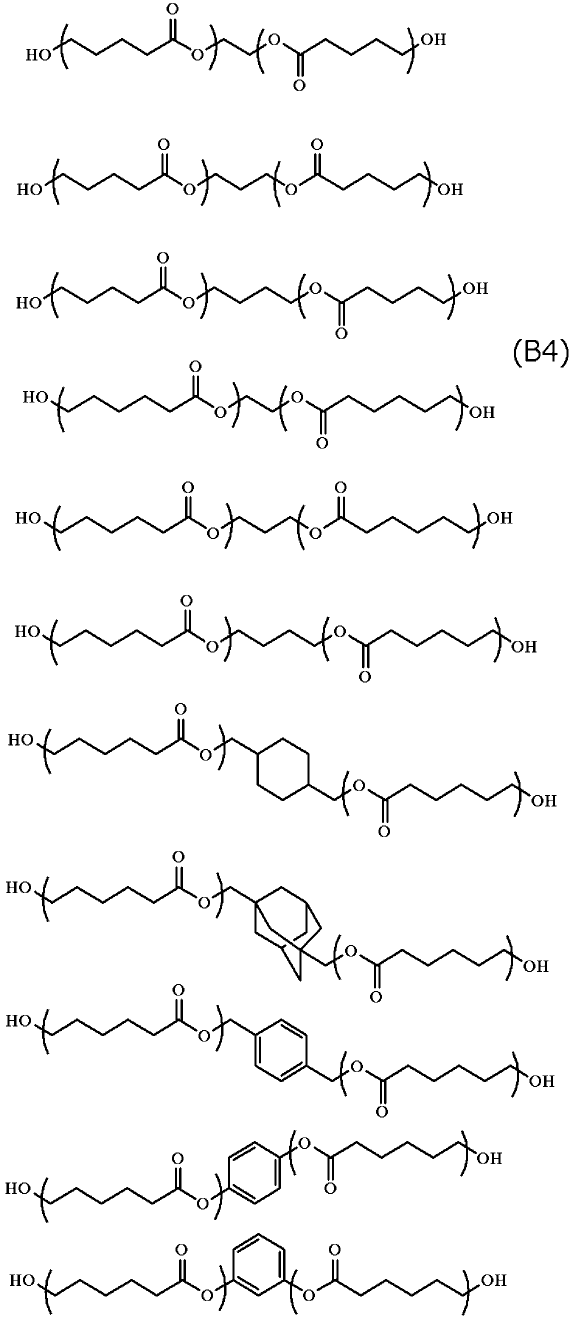

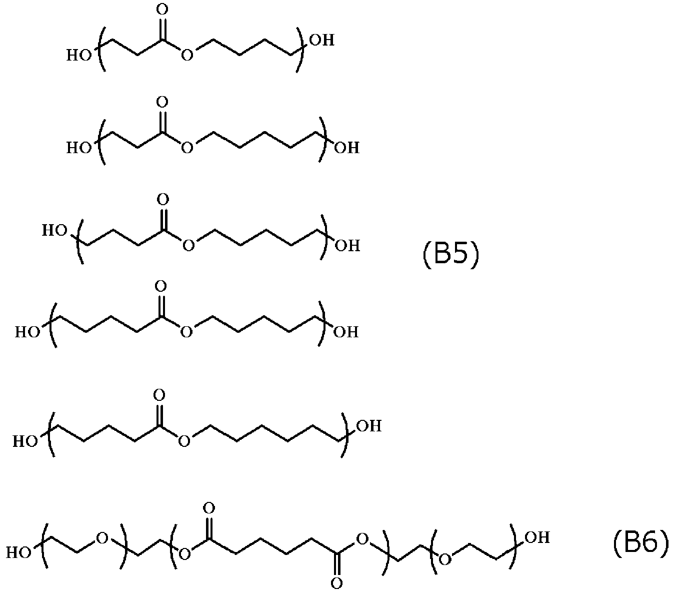

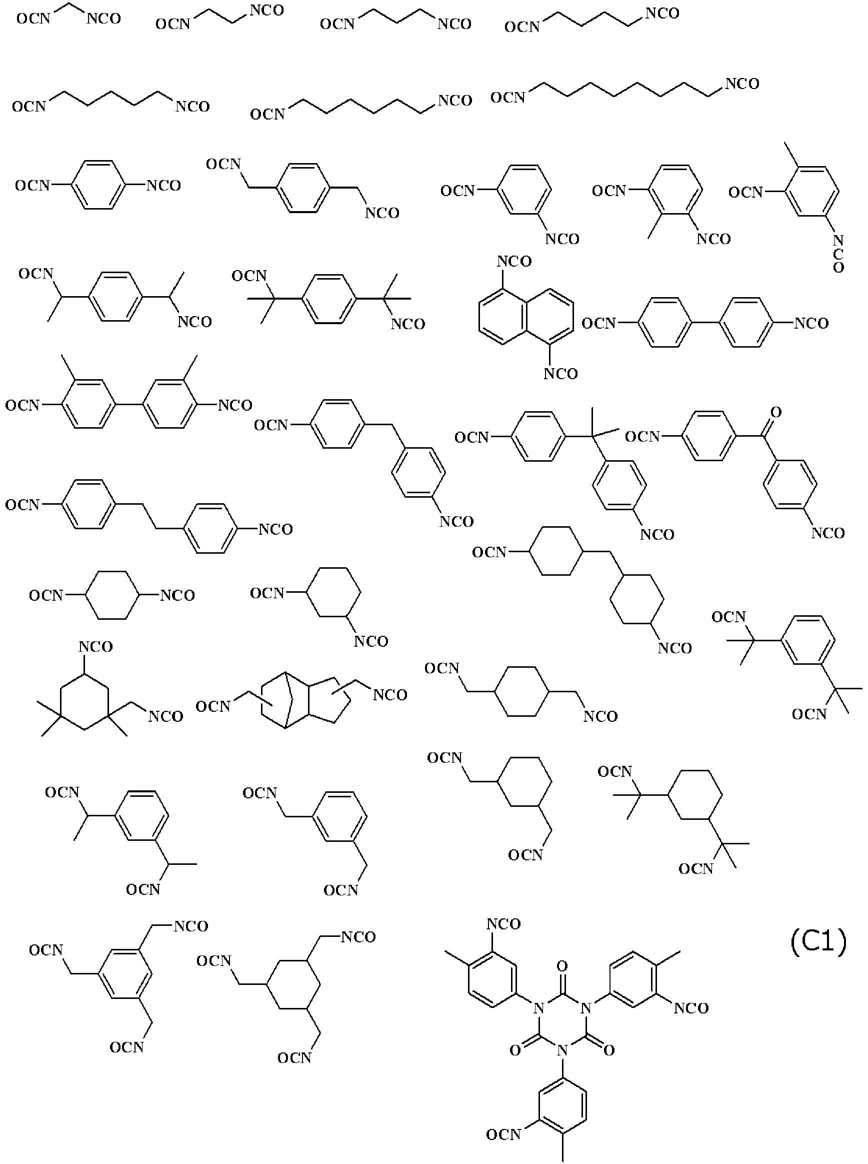

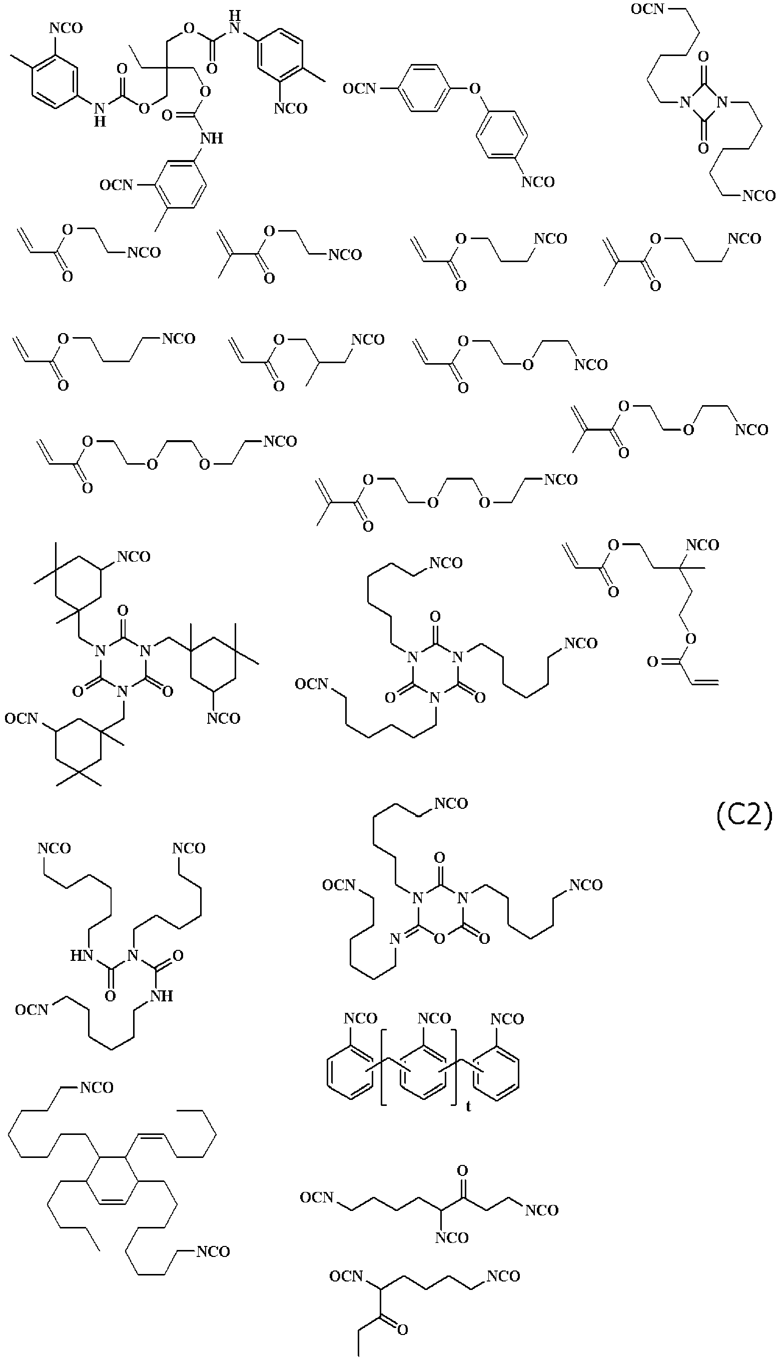

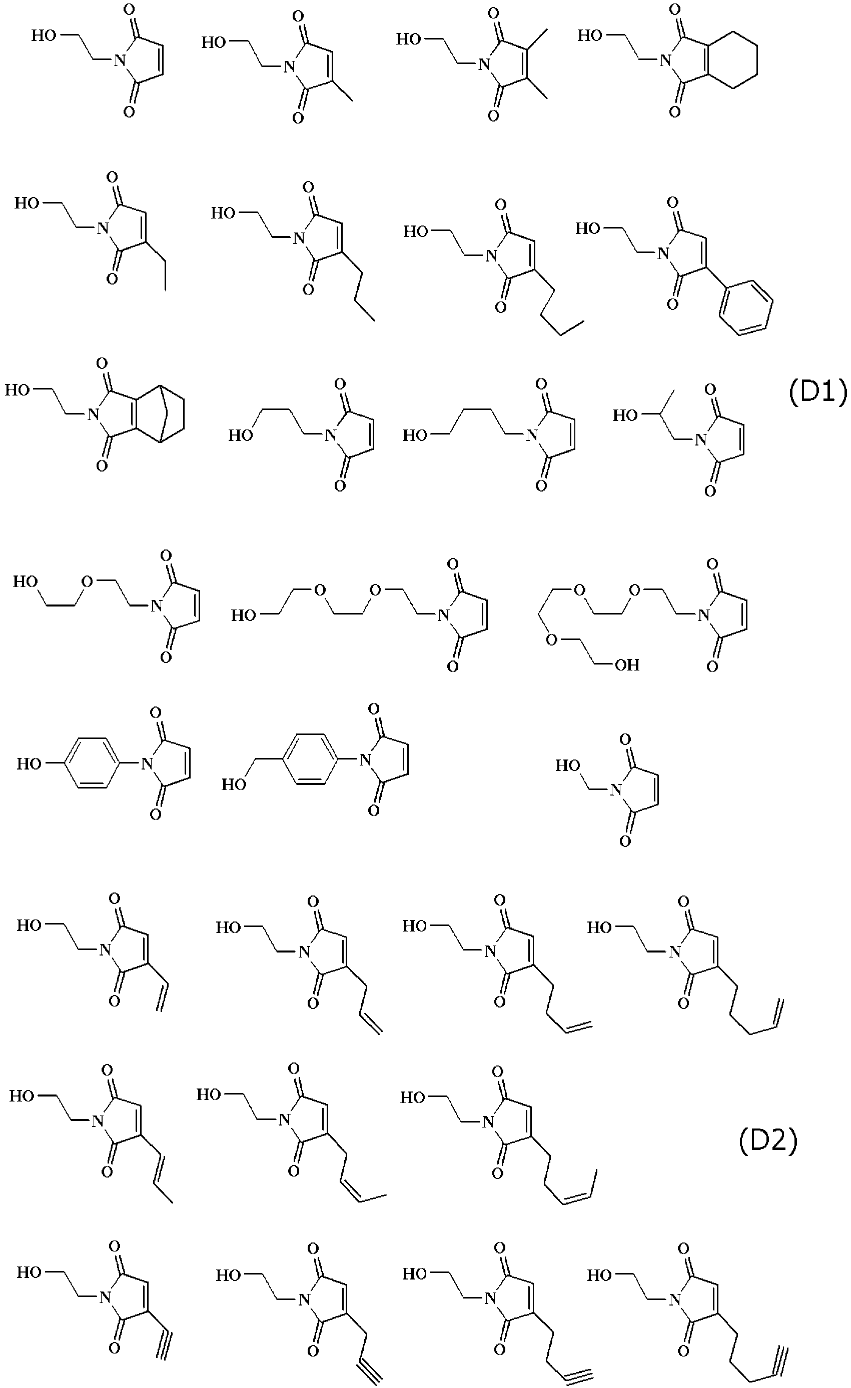

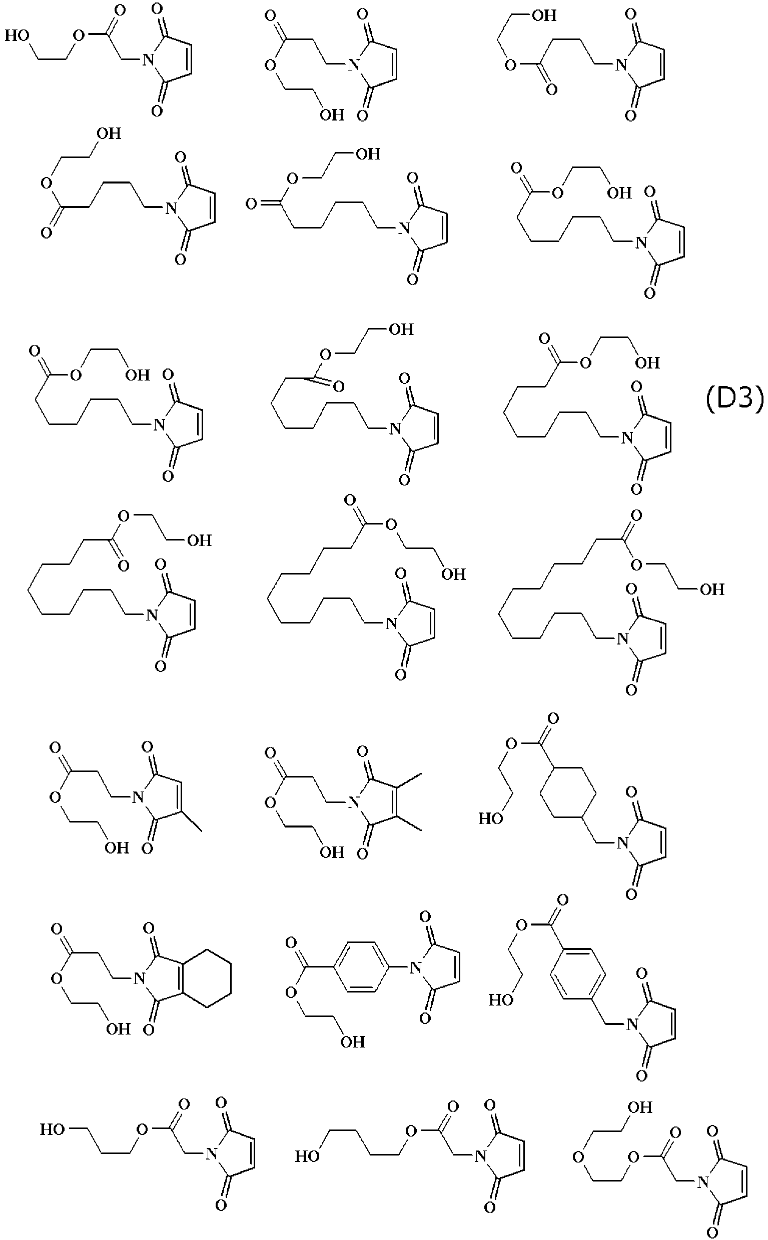

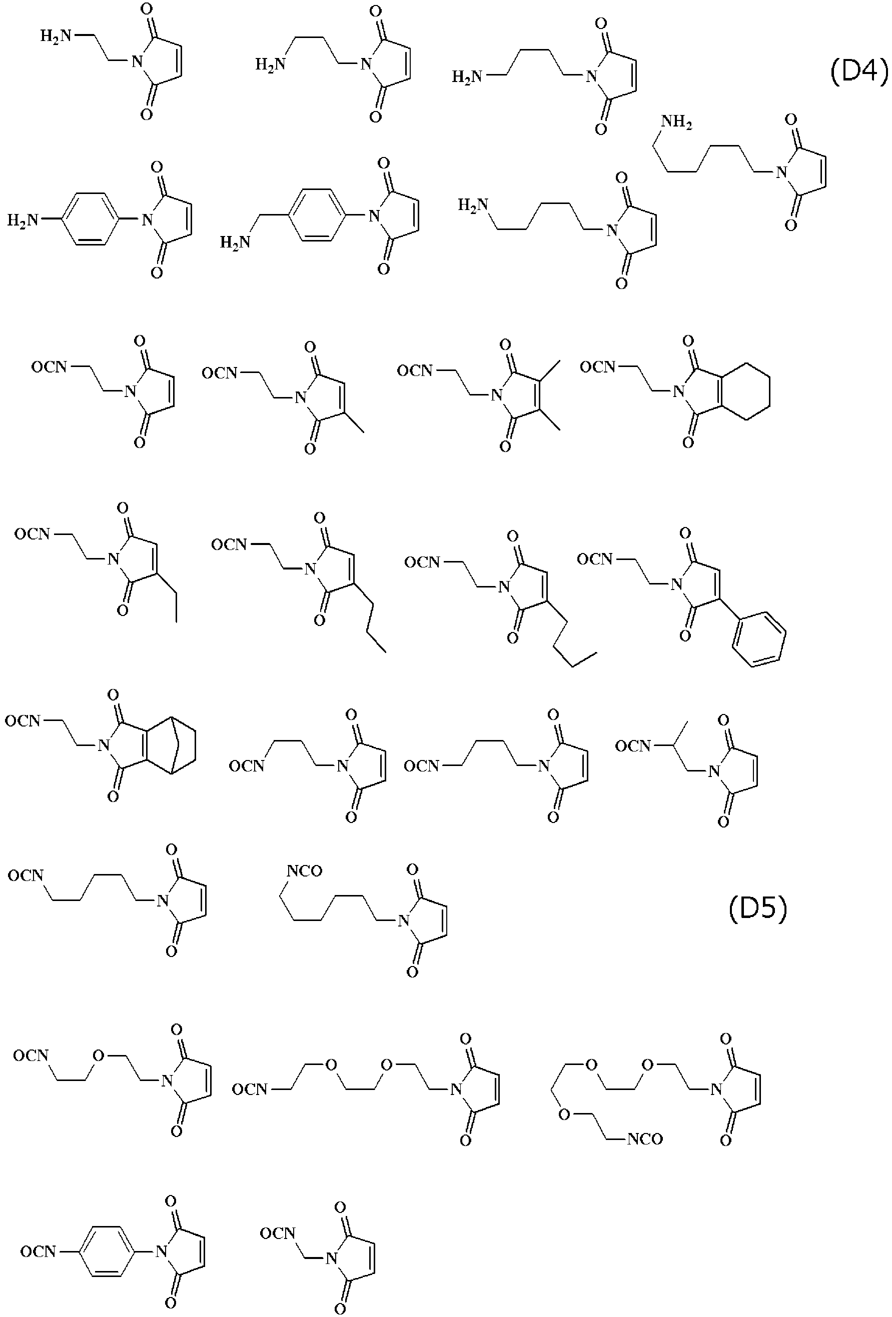

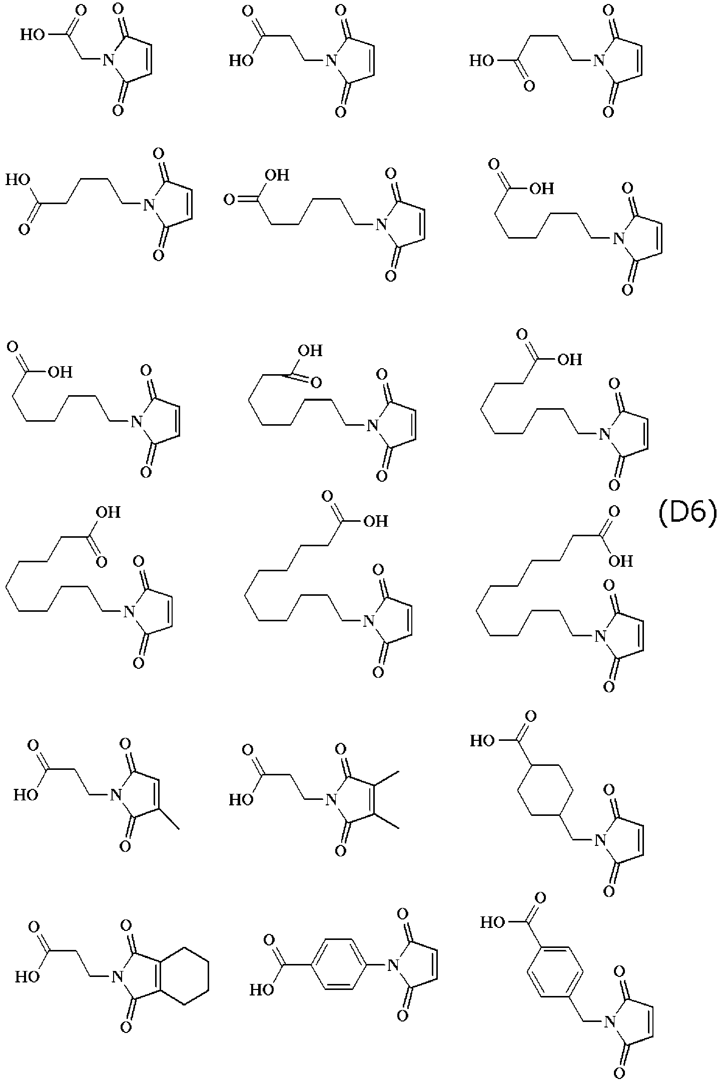

2. Polyuréthane à base de silicone selon la revendication 1, le polyuréthane silicone étant **caractérisé par** le maléimide polyuréthane à base silicone 1 suivant et présente un poids moléculaire moyen en poids et une dispersité de Mw = 5 400 et Mw/Mn = 1,65:

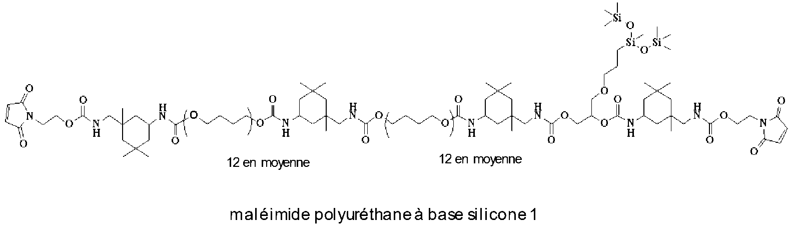

3. Polyuréthane à base de silicone selon la revendication 1, le polyuréthane silicone est **caractérisé par** les maléimides de polyuréthane à base de silicone suivants 2 à 20:

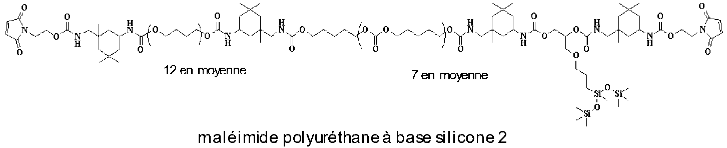

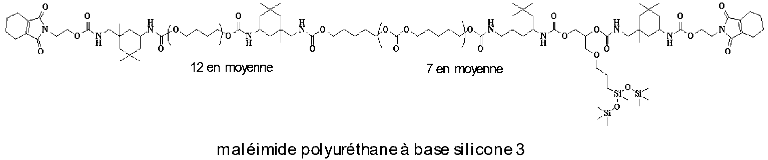

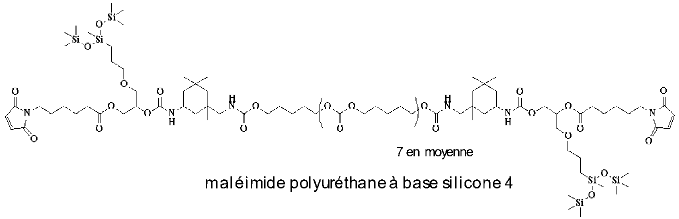

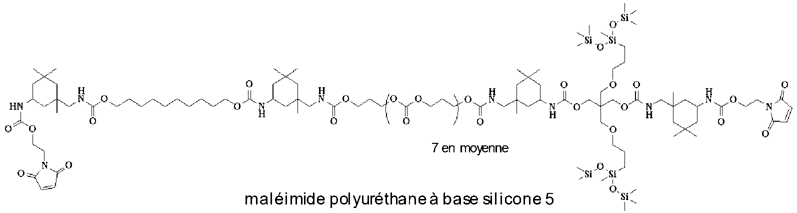

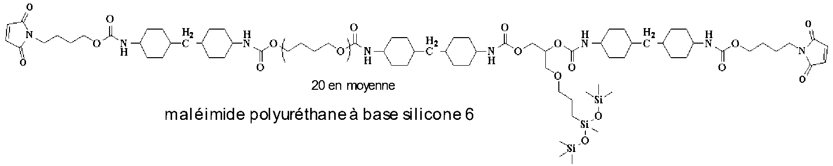

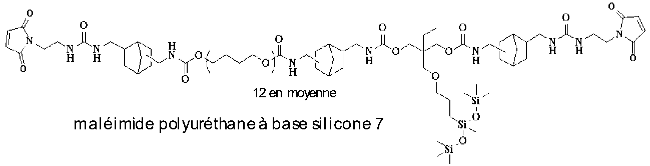

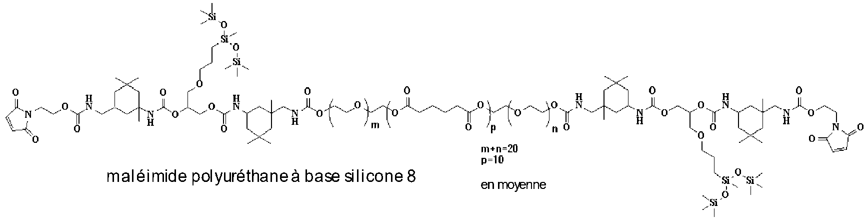

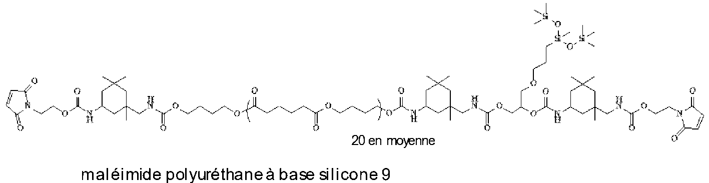

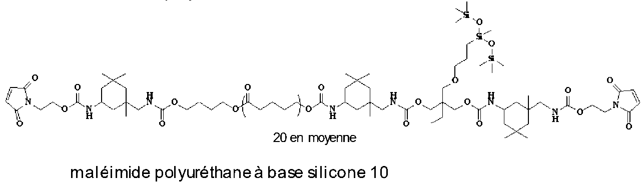

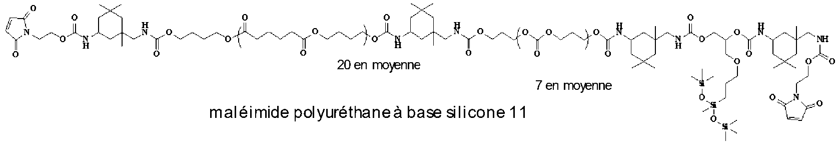

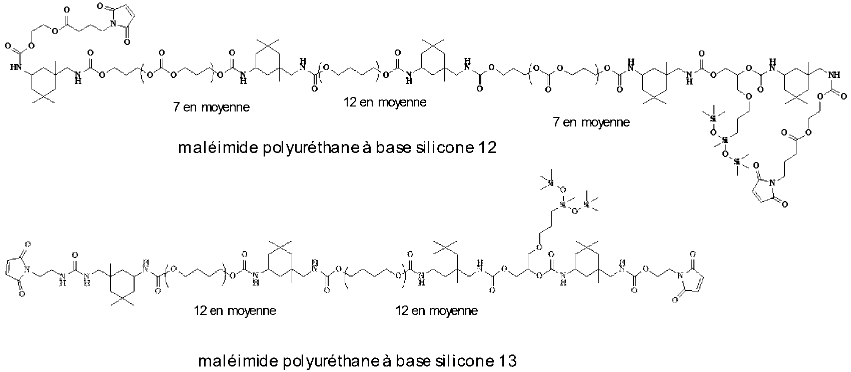

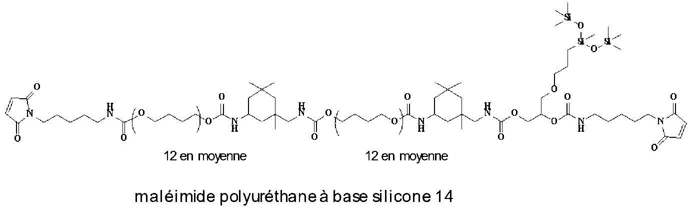

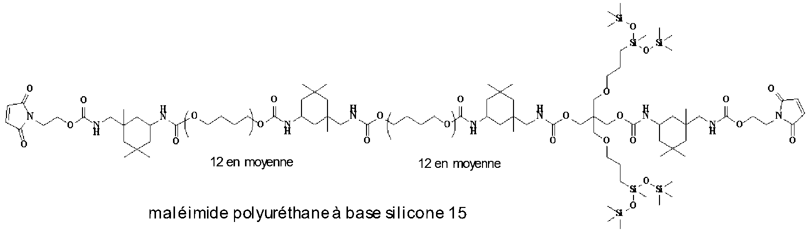

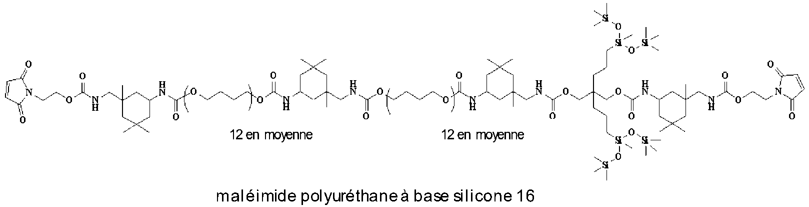

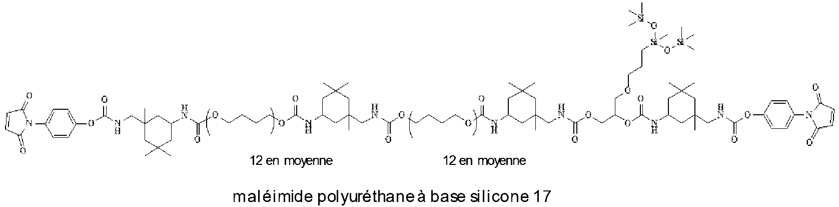

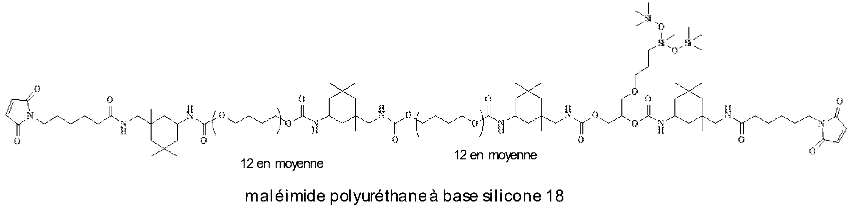

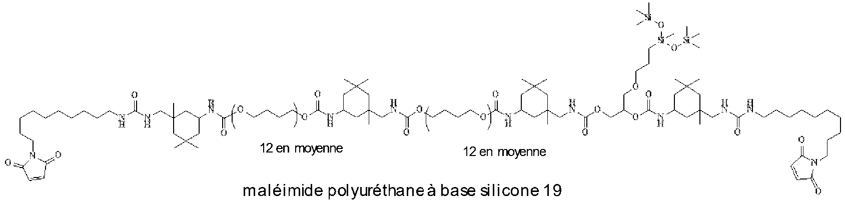

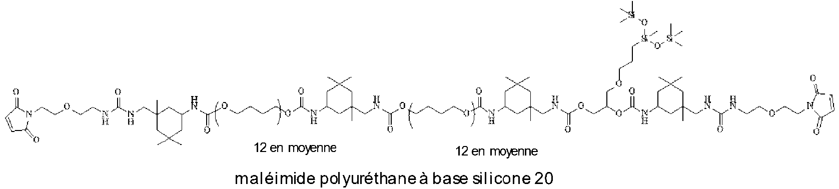

4. Film étirable comprenant un matériau de film étirable durci comprenant le polyuréthane à base de silicone selon l'une quelconque des revendications 1 à 3.

5. Procédé de formation d'un film étirable, comprenant les étapes consistant à:
appliquer un matériau de film étirable comprenant le polyuréthane à base de silicone selon l'une quelconque des revendications 1 à 3; et
faire durcir le matériau de film étirable par chauffage et/ou par rayonnement lumineux.
